(19) Europäisches Patentamt / European Patent Office / Office européen des brevets

(11) **EP 4 373 189 A1**

(12) **EUROPEAN PATENT APPLICATION**
published in accordance with Art. 153(4) EPC

(43) Date of publication:
**22.05.2024 Bulletin 2024/21**

(21) Application number: **22856295.5**

(22) Date of filing: **12.08.2022**

(51) International Patent Classification (IPC):
**H04W 72/04** (2023.01)   **H04W 72/12** (2023.01)
**H04W 4/40** (2018.01)   **H04W 92/18** (2009.01)
**H04W 72/02** (2009.01)

(52) Cooperative Patent Classification (CPC):
**H04W 4/40; H04W 72/02; H04W 72/04;
H04W 72/12; H04W 92/18**

(86) International application number:
**PCT/KR2022/012127**

(87) International publication number:
**WO 2023/018302 (16.02.2023 Gazette 2023/07)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **13.08.2021 KR 20210107549
19.08.2021 KR 20210109296**

(71) Applicant: **Samsung Electronics Co., Ltd.
Suwon-si, Gyeonggi-do 16677 (KR)**

(72) Inventors:
• **SHIN, Cheolkyu**
  **Suwon-si, Gyeonggi-do 16677 (KR)**
• **YEO, Jeongho**
  **Suwon-si, Gyeonggi-do 16677 (KR)**
• **KIM, Youngbum**
  **Suwon-si, Gyeonggi-do 16677 (KR)**
• **RYU, Hyunseok**
  **Suwon-si, Gyeonggi-do 16677 (KR)**
• **BAE, Taehan**
  **Suwon-si, Gyeonggi-do 16677 (KR)**

(74) Representative: **Nederlandsch Octrooibureau
P.O. Box 29720
2502 LS The Hague (NL)**

(54) **METHOD AND APPARATUS FOR INTER-UE COORDINATION OF SIDELINK IN WIRELESS COMMUNICATION SYSTEM**

(57)    The present disclosure relates to a communication technique for merging IoT technology with a 5G communication system for supporting a data transmission rate higher than that of a 4G system, and to a system therefor. The present disclosure can be applied to intelligent services (e.g., smart homes, smart buildings, smart cities, smart cars or connected cars, healthcare, digital education, retail businesses, security- and safety-related services, and the like) on the basis of 5G communication technology and IoT-related technology.

EP 4 373 189 A1

# FIG. 1

(a) In-coverage scenario

(b) Partial coverage scenario

(c) Out-of-coverage scenario

(d) Inter-cell V2X communitation scenario

Description

[Technical Field]

The disclosure relates to a wireless mobile communication system, and particularly to a method and apparatus for performing inter-UE coordination in the process in which a vehicle terminal supporting vehicle communication (vehicle-to-everything, hereinafter referred to as V2X) transmits and receives information using a sidelink with other vehicle terminals and pedestrian mobile terminals.

[Background Art]

To meet the increased demand for wireless data traffic since the deployment of 4G communication systems, efforts have been made to develop an improved 5G or pre-5G communication system. Therefore, the 5G or pre-5G communication system is also called a Beyond 4G Network communication system or a Post LTE System. To achieve a high data transmission rate, the implementation of 5G communication systems in an ultra-highfrequency (mmWave) band (for example, a 60 GHz band) is being considered. To reduce path loss of radio waves and increase a transfer distance of radio waves in an ultra-highfrequency band, in 5G communication systems, various technologies for beam-forming, massive multiple input multiple output (massive MIMO), full dimensional MIMO (FD-MIMO), array antenna, analog beam-forming, and large-scale antenna are being discussed. In addition, to improve the network of the system, technologies, such as evolved small cell, advanced small cell, cloud radio access network (cloud RAN), ultra-dense networks, device to device communication (D2D), wireless backhaul, moving networks, cooperative communication, coordinated multi-points (CoMP), and interference cancellation, have been developed for 5G communication systems. Furthermore, hybrid FSK and QAM modulation (FQAM) and sliding window superposition coding (SWSC) that are advanced coding modulation (ACM) schemes, and filter bank multi-carrier (FBMC), non-orthogonal multiple access (NOMA) and sparse code multiple access (SCMA) that are advanced access technologies are being developed in the 5G system.

Meanwhile, the Internet is evolving from a human-centered network in which humans generate and consume information to an Internet of Things (IoT) network in which distributed components such as objects transmit, receive, and process information. Internet of Everything (IoE) technology resulting from combining IoT technology with big data processing technology, etc. through a connection to a cloud server or the like is on the rise. To implement the IoT, various technical factors, such as sensing technology, wired/wireless communication, network infrastructure, service interface technology, and security technology, are required. Recently, technologies including a sensor network, machine to machine (M2M) communication, and machine type communication (MTC) for connections between objects have been studied. In an IoT environment, an intelligent Internet technology (IT) service is provided to collect and analyze data generated by connected objects to create new value for human life. The IoT may be applied to various fields, such as smart homes, smart buildings, smart cities, smart cars or connected cars, smart grids, health care, smart appliances, and advanced medical services, through convergence and combination between existing information technology (IT) and various industries.

Accordingly, various attempts to apply a 5G communication system to an IoT network are being made. For example, technology, such as sensor networks, M2M communication, and MTC, is implemented by 5G communication technologies, such as beam forming, MIMO, and array antenna. Applying a cloud radio access network (CRAN) as the above described big data processing technology is also an example of the convergence of 5G technology and IoT technology.

[Disclosure of Invention]

[Technical Problem]

The disclosure relates to a wireless communication system, and relates to a method and apparatus for sharing helpful information between terminals through inter-UE coordination in the process in which a vehicle terminal supporting V2X exchanges information with other vehicle terminals and pedestrian mobile terminals using side links. Specifically, the disclosure relates to a method for exchanging and receiving information for inter-UE coordination and an UE operation related thereto.

[Solution to Problem]

In order to achieve the above-described technical objects, a method of a first terminal of a communication system according to an embodiment of the disclosure comprises identifying whether a 2nd SCI is transmitted along with data in a physical sidelink shared channel (PSSCH) region; determining a number of coded modulation symbols for the 2nd SCI based on whether the 2nd SCI is transmitted along with the data; mapping the 2nd SCI to the PSSCH region based on the number of coded modulation symbols; and transmitting the 2nd SCI mapped to the PSSCH region to a second terminal, wherein, in case where the 2nd SCI is not transmitted along with the data, the number of coded modulation symbols for the 2nd SCI is determined such that the 2nd SCI is mapped to all PSSCH frequency resources in a symbol in which the 2nd SCI is transmitted.

A method of a second terminal of a communication system according to an embodiment of the disclosure comprises identifying whether a 2nd SCI is transmitted along with data in a physical sidelink shared channel (PSSCH) region; and receiving the 2nd SCI mapped to the PSSCH region from a first terminal based on a number of coded modulation symbols that is determined depending on whether the 2nd SCI is transmitted along with the data, wherein, in case where the 2nd SCI is not transmitted along with the data, the number of coded modulation symbols for the 2nd SCI is determined such that the 2nd SCI is mapped to all PSSCH frequency resources in a symbol in which the 2nd SCI is transmitted.

A first terminal of a communication system according to an embodiment of the disclosure comprises a transceiver; and a controller constituted to identify whether a 2nd SCI is transmitted along with data in a physical sidelink shared channel (PSSCH) region; determine a number of coded modulation symbols for the 2nd SCI based on whether the 2nd SCI is transmitted along with the data; map the 2nd SCI to the PSSCH region based on the number of coded modulation symbols; and transmit the 2nd SCI mapped to the PSSCH region to a second terminal, wherein, in case where the 2nd SCI is not transmitted along with the data, the number of coded modulation symbols for the 2nd SCI is determined such that the 2nd SCI is mapped to all PSSCH frequency resources in a symbol in which the 2nd SCI is transmitted.

A second terminal of a communication system according to an embodiment of the disclosure comprises a transceiver; and a controller constituted to identify whether a 2nd SCI is transmitted along with data in a physical sidelink shared channel (PSSCH) region and receive the 2nd SCI mapped to the PSSCH region from a first terminal based on a number of coded modulation symbols that is determined depending on whether the 2nd SCI is transmitted along with the data, wherein, in case where the 2nd SCI is not transmitted along with the data, the number of coded modulation symbols for the 2nd SCI is determined such that the 2nd SCI is mapped to all PSSCH frequency resources in a symbol in which the 2nd SCI is transmitted.

**[Advantageous Effects of Invention]**

The disclosure is to propose an inter-UE coordination method in sidelink communication and a procedure for sharing helpful information between terminals through this method. The proposed method can prevent the delay time that occurs in sharing the information from increasing.

**[Brief Description of Drawings]**

FIG. 1 is a diagram illustrating an example of a system according to an embodiment of the disclosure.
FIG. 2 is a diagram illustrating a V2X communication method performed through a sidelink according to an embodiment of the disclosure.
FIG. 3 is a diagram illustrating a resource pool defined as a set of resources on the time and frequency used for transmission and reception of a sidelink according to an embodiment of the disclosure.
FIG. 4 is a diagram illustrating a method by which a base station allocates transmission resources in a sidelink according to an embodiment of the disclosure.
FIG. 5 is a diagram illustrating a method by which a terminal directly allocates sidelink transmission resources through sensing in a sidelink according to an embodiment of the disclosure.
FIG. 6 is a diagram illustrating a mapping structure of sidelink physical channels mapped to one slot in a sidelink according to an embodiment of the disclosure.
FIG. 7 is a diagram illustrating a scenario in which inter-UE coordination is performed according to an embodiment of the disclosure.
FIG. 8 is a diagram illustrating an operation of requesting inter-UE coordination information and transmitting the corresponding information through a 2nd SCI according to an embodiment of the disclosure.
FIG. 9 is a diagram illustrating methods for solving power imbalance problem in case where control information is not transmitted along with data when transmitting control information through 2nd SCI according to an embodiment of the disclosure.
FIG. 10 is a diagram illustrating methods for solving power imbalance problem in case where control information is

**EP 4 373 189 A1**

not transmitted along with data when transmitting control information through 2nd SCI according to an embodiment of the disclosure.

FIG. 11 is a diagram illustrating a UE operation in case where data is transmitted together and case in which data is not transmitted together when transmitting control information through 2nd SCI.

FIG. 12 is a block diagram illustrating an internal structure of a UE according to an embodiment of the disclosure.

FIG. 13 is a block diagram illustrating an internal structure of a base station according to an embodiment of the disclosure.

FIG. 14 is a diagram illustrating an example of V2X system according to an embodiment of the disclosure.

FIG. 15 is a diagram illustrating an example of a V2X communication method performed through a sidelink, according to an embodiment of the disclosure.

FIG. 16 is a diagram illustrating an example of a resource pool defined as a set of resources on time and frequency used for transmission and reception of a sidelink according to an embodiment of the disclosure.

FIG. 17 is a diagram illustrating an example of a method in which a base station allocates a transmission resource in a sidelink according to an embodiment of the disclosure.

FIG. 18 is a diagram illustrating an example of a method in which a UE directly allocates a transmission resource of a sidelink through sensing in a sidelink according to an embodiment of the disclosure.

FIG. 19A is a diagram illustrating a mapping structure of sidelink physical channels mapped to one slot in a sidelink according to an embodiment of the disclosure.

FIG. 19B is a diagram illustrating an example of a UE operation that operates a different mapping method for 2nd SCI depending on whether control information is transmitted along with data or not when transmitting control information through the 2nd SCI according to an embodiment of the disclosure.

FIG. 20A is a diagram illustrating an example of a case where UE-A transmitting inter-UE coordination information corresponds to a data reception UE for UE-B receiving inter-UE coordination information.

FIG. 20B is a diagram illustrating an example where a UE may be UE-A transmitting inter-UE coordination information.

FIG. 21 is a diagram illustrating an example of a method in which a UE requests inter-UE coordination information from another UE through a 2nd SCI, or a UE that receives it transmits the requested information according to an embodiment of the disclosure.

FIG. 22 is a block diagram illustrating an internal structure of a UE according to an embodiment of the disclosure.

FIG. 23 is a block diagram illustrating an internal structure of a base station according to an embodiment of the disclosure.

**[Mode for the Invention]**

Hereinafter, embodiments of the disclosure will be described in detail with reference to the accompanying drawings.

In the following, in describing the embodiments, a description of techniques known to those skilled in the art and not directly related to the disclosure may be omitted. Such unnecessary omission of description is intended to prevent obscuring the main concepts of the disclosure and to more clearly convey the main concepts.

For the same reason, in the accompanying drawings, some elements may be exaggerated, omitted, or schematically illustrated. Further, the size of each element does not completely reflect the actual size. In the drawings, identical or corresponding elements are provided with identical reference numerals.

Advantages and features of the disclosure and methods of accomplishing the same may be understood more readily by reference to the following detailed description of the embodiments of the disclosure and the accompanying drawings. However, the embodiments of the disclosure may have different forms and should not be construed as being limited to the descriptions set forth herein. Rather, these embodiments of the disclosure are provided so that the disclosure will be thorough and complete and will fully convey the concept of the disclosure to one of ordinary skill in the art, and the disclosure will only be defined by the appended claims. Throughout the specification, like reference numerals denote like elements.

Here, it will be understood that combinations of blocks in flowcharts or process flow diagrams may be performed by computer program instructions. Because these computer program instructions may be loaded into a processor of a general-purpose computer, a special purpose computer, or another programmable data processing apparatus, the instructions, which are performed by a processor of a computer or another programmable data processing apparatus, create a means for performing functions described in the flowchart block(s). The computer program instructions may be stored in a computer-executable or computer-readable memory capable of directing a computer or another programmable data processing apparatus to implement a function in a particular manner, and thus the instructions stored in the computer-executable or computer-readable memory may also be capable of producing manufacturing items containing instruction means for performing the functions described in the flowchart block(s). The computer program instructions may also be loaded into a computer or other programmable data processing apparatus to cause a series of operational steps to be performed on the computer or other programmable apparatus to produce a computer-executed process, so that the instructions performing the computer or other programmable apparatus provide steps for executing the functions described in the flowchart block(s).

In addition, each block may represent a module, segment, or portion of code that includes one or more executable instructions for executing specified logical function(s). It should also be noted that in some alternative implementations, functions mentioned in blocks may occur out of order. For example, two blocks illustrated successively may actually be executed substantially concurrently, or the blocks may sometimes be performed in a reverse order according to the corresponding function.

Here, the term "unit" in the embodiments means a software component or hardware component such as a Field-Programmable Gate Array (FPGA) or an Application-Specific Integrated Circuit (ASIC), and performs a specific function. However, the term 'unit' is not limited to software or hardware. The 'unit' may be constituted so as to be in an addressable storage medium, or may be constituted so as to operate one or more processors. Thus, for example, the term 'unit' may refer to components such as software components, object-oriented software components, class components, and task components, and may include processes, functions, attributes, procedures, subroutines, segments of program code, drivers, firmware, micro codes, circuits, data, a database, data structures, tables, arrays, and variables. A function provided by the components and 'units' may be associated with the smaller number of components and 'units', or may be divided into additional components and 'units'. Furthermore, the components and 'units' may be embodied to reproduce one or more central processing units (CPUs) in a device or security multimedia card. Also, in the embodiments, the 'unit' may include at least one processor.

The detailed description of embodiments of the disclosure is made mainly on the basis of a New Radio (NR) access network (or a new RAN) and packet core (a 5G system, a 5G core network, or a Next Generation (NG) core) which is a core network on the 5th Generation (5G) mobile communication standard specified by the 3rd generation partnership project long term evolution (3GPP) corresponding to a mobile communication standardization organization, but the main subject of the disclosure can be applied to other communication systems having a similar technical background with slight modification without departing from the scope of the disclosure, which can be determined by those skilled in the art.

In the 5G system, a Network Data Collection and Analysis Function (NWDAF) that is a network function for analyzing and providing data collected by a 5G network may be defined to support network automation. The NWDAF may collect information from the 5G network, store and analyze the information, and provide the result to an unspecified Network Function (NF), and the analysis result may be independently used by each NF.

In the following description, terms and names defined in the 3GPP standards (standards for 5G, NR, LTE, or similar systems) may be used for the convenience of description. However, the disclosure is not limited by these terms and names, and may be applied in the same way to systems that conform other standards.

Further, in the following description, terms for identifying access nodes, terms referring to network entities, terms referring to messages, terms referring to interfaces between network entities, terms referring to various identification information, and the like are illustratively used for the sake of convenience. Therefore, the disclosure is not limited by the terms as used below, and other terms referring to subjects having equivalent technical meanings may be used.

In order to meet wireless data traffic demands that have increased after 4G communication system commercialization, efforts to develop an improved 5G communication system (New Radio (NR)) have been made. The 5G communication system has been designed to use resources in an mmWave band (for example, a frequency band of 28 GHz) in order to achieve a high data transmission rate. In the 5G communication system, technologies such as beam-forming, massive MIMO, full dimensional MIMO (FD-MIMO), array antenna, analog beam-forming, and large scale antenna are discussed to mitigate a propagation path loss in the mmWave band and increase a propagation transmission distance. In addition, unlike LTE, the 5G communication system supports various subcarrier spacings such as 30 kHz, 60 kHz, and 120 kHz including 15 kHz, and a physical control channel uses polar coding and a physical data channel uses a low density parity check (LDPC). Furthermore, as waveforms for uplink transmission, not only a CP-OFDM but also a DFT-S-OFDM is used. While Hybrid ARQ (HARQ) retransmission in units of transport blocks (TBs) are supported in LTE, HARQ retransmission based on a code block group (CBG) including a plurality of code blocks (CBs) may be additionally supported in 5G.

In addition, to improve the network of the system, technologies, such as evolved small cell, advanced small cell, cloud radio access network (cloud RAN), ultra-dense networks, device to device communication (D2D), wireless backhaul, vehicle to everything (V2X) network, cooperative communication, coordinated multi-points (CoMP), and interference cancellation, have been developed for 5G communication systems.

Meanwhile, the Internet is evolving from a human-centered network in which humans generate and consume information to an Internet of Things (IoT) network in which distributed components such as objects transmit, receive, and process information. Internet of Everything (IoE) technology resulting from combining IoT technology with big data processing technology, etc. through a connection to a cloud server or the like is on the rise. To implement the IoT, various technical factors, such as sensing technology, wired/wireless communication, network infrastructure, service interface technology, and security technology, are required. Recently, technologies including a sensor network, machine to machine (M2M) communication, and machine type communication (MTC) for connections between objects have been studied. In an IoT environment, an intelligent Internet technology (IT) service is provided to collect and analyze data generated by connected objects to create new value for human life. The IoT may be applied to various fields, such as smart homes, smart buildings, smart cities, smart cars or connected cars, smart grids, health care, smart appliances, and advanced medical services, through convergence and combination between existing information technology (IT) and various industries.

Accordingly, various attempts to apply a 5G communication system to an IoT network are being made. For example, technology, such as sensor networks, M2M communication, and MTC, is implemented by 5G communication technologies, such as beam forming, MIMO, and array antenna. Applying a cloud radio access network (CRAN) as the above described big data processing technology is also an example of the convergence of 5G technology and IoT technology. As described above, a plurality of services may be provided to a user in a communication system, and in order to provide the plurality of services to the user, a method of providing each service in the same time interval according to a characteristic thereof and an apparatus using the same are needed. Various services provided by the 5G communication system are being researched, and one thereof is a service that satisfies requirements of low latency and high reliability. In particular, in the case of vehicle communication, in an NR V2X system, unicast communication, groupcast communication, multicast communication, and broadcast communication will be supported between UEs. Further, the NR V2X aims at providing more evolved service such as platooning, advanced driving, extended sensor, and remote driving, unlike LTE V2X aiming at transmitting and receiving basic safety information required for driving of vehicles.

Particularly, inter-UE coordination may be considered in a sidelink. Here, the inter-UE coordination may mean providing a more advanced sidelink service by sharing information that may be helpful to UEs. In the disclosure, information shared for the inter-UE coordination is not limited to specific information. For example, resource allocation information may be included in such information. When sharing inter-UE coordination information, 2nd sidelink control information (SCI) transmitted through a physical sidelink shared channel (PSSCH) may be considered. Previously, when transmitting the 2nd SCI, a method for transmitting the 2nd SCI along with data information was considered. However, in case where inter-UE coordination information is shared in a sidelink, a case may occur where the UE providing coordination information does not have data to transmit to the UE receiving the coordination information. Therefore, in the disclosure, when transmitting the 2nd SCI, the case where it is not transmitted along with data information is considered. Conventionally, when transmitting the 2nd SCI, it is assumed that the 2nd SCI is transmitted along with data information, so in the last symbol where the 2nd SCI is transmitted, the 2nd SCI may be mapped and transmitted only to some frequency regions of the PSSCH region. However, when transmitting the 2nd SCI, as in the case considered in the disclosure, in case where the 2nd SCI is not transmitted along with data information, a power imbalance issue may occur if the 2nd SCI is mapped to only some frequency regions of the PSSCH region in the last symbol where the 2nd SCI is transmitted. The disclosure proposes various 2nd SCI mapping methods to solve this problem and a method for calculating the number of coded bits or symbols in which 2nd SCI is coded using channel coding. Through the method proposed in the disclosure, inter-UE coordination information can be transmitted through the 2nd SCI regardless of whether the UE has data to transmit, and thus the latency of providing inter-UE coordination information can be reduced.

The embodiment of the present specification is proposed to support the above-described scenario. In particular, the disclosure considers a case where control information is transmitted along with data and a case where the control information is not transmitted with data when transmitting the control information through 2nd SCI, and the disclosure has an object to provide detailed methods to solve the power imbalance problem in the case where the control information is not transmitted with data.

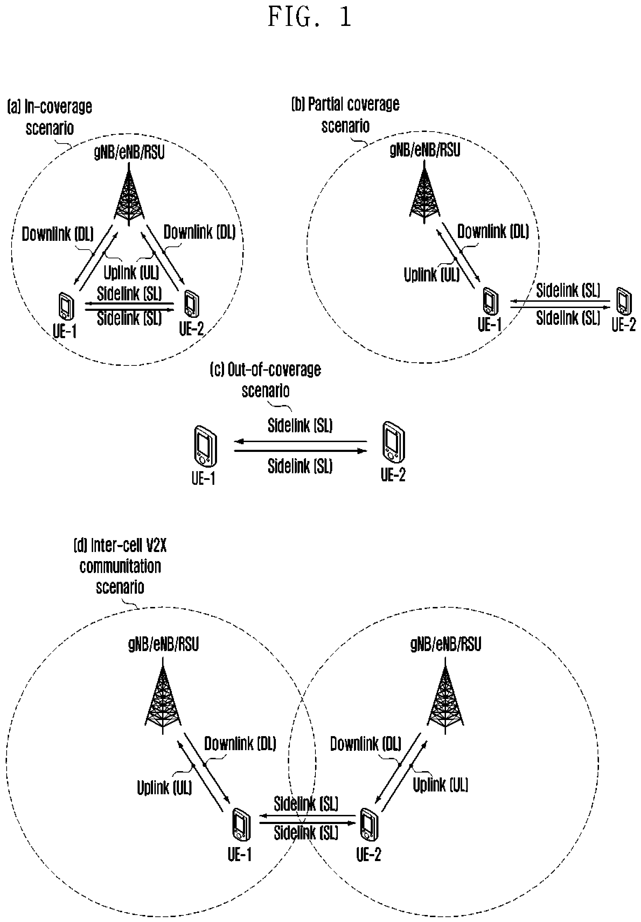

FIG. 1 is a diagram illustrating a system according to an embodiment of the disclosure.

With reference to FIG. 1, FIG.1(A) illustrates an example of the case (In-Converge (IC)) in which all V2X UEs (UE-1 and UE-2) are located within the coverage of a base station. All V2X UEs may receive data and control information from the base station through a downlink (DL) or transmit data and control information to the base station through an uplink (UL). Herein, the data and control information may be data and control information for V2X communication. The data and control information may be data and control information for general cellular communication. In addition, the V2X UEs may transmit/receive data and control information for V2X communication through a sidelink (SL).

With reference to FIG. 1, FIG. 1(B) illustrates an example of the case in which UE-1 of the V2X UEs is located inside the coverage of the base station and UE-2 is located outside the coverage of the base station. That is, FIG. 1(B) illustrates an example related to a partial coverage (PC) in which some V2X UEs (UE-2) are located outside the coverage of the base station. The V2X UE (UE-1) located inside the coverage of the base station may receive data and control information from the base station through a downlink or transmit data and control information to the base station through an uplink. The V2X UE (UE-2) located outside the coverage of the base station cannot receive data and control information from the base station through a downlink and cannot transmit data and control to the base station through an uplink. The V2X UE (UE-2) may transmit/receive data and control information for V2X communication to/from the V2X UE (UE-1) through the sidelink.

With reference to FIG. 1, FIG. 1(C) illustrates an example of the case in which all V2X UEs are located outside the coverage (out-of coverage (OOC)) of the base station. Accordingly, the V2X UEs (UE-1 and UE-2) cannot receive data and control information from the base station through the downlink and cannot transmit data and control information to the base station through the uplink. The V2X UEs (UE-1 and UE-2) may transmit/receive data and control information for V2X communication through the sidelink.

With reference to FIG. 1, FIG. 1(D) illustrates an example of a scenario in which the V2X UEs (UE-1, UE-2) located in different cells perform V2X communication. Specifically, FIG. 1(D) illustrates the case in which the V2X UEs (UE-1, UE-2) access different base stations (RRC-connected state) or camp on the base stations (RRC connection-released state, that is, RRC idle state). In this case, the V2X UE (UE-1) may be a V2X transmission UE, and the V2X UE (UE-2) may be a V2X reception UE. Alternatively, the V2X UE (UE-1) may be a V2X reception UE, and the V2X UE (UE-2) may be a V2X transmission UE. The V2X UE (UE-1) may receive a system information block (SIB) from the base station to which UE-1 accesses (or UE-1 camps on) and the V2X UE (UE-2) may receive a SIB from another base station to which UE-2 accesses (or UE-2 camps on). In this case, the SIB may be an existing SIB or a separately defined SIB for V2X. In addition, the SIB information which the V2X UE (UE-1) receives and the SIB information which the V2X UE (UE-2) receives may different from each other. Accordingly, for V2X communication between UEs (UE-1, UE-2) located in different cells, information may be unified or information about this may be signaled and an additional method of interpreting the SIB information transmitted from each other cell may be required.

Although FIG. 1 illustrates a V2X system including V2X UEs (UE-1 and UE-2) for convenience of description, but the disclosure is not limited thereto, and communication may occur between more V2X UEs. In addition, an interface (downlink and uplink) between the base station and the V2X UEs may be referred to as a Uu interface, and the sidelink between the V2X UEs may be referred to as a PC5 interface. Accordingly, the terms may be interchangeably used in the disclosure. Meanwhile, in the disclosure, the UE may be a vehicle supporting vehicle-to-vehicle (V2V) communication, a vehicle or a handset of a pedestrian (for example, a smartphone) supporting vehicle-to-pedestrian (V2P) communication, a vehicle supporting vehicle-to-network (V2N) communication, or a vehicle supporting vehicle-to-infrastructure (V21) communication. In addition, in the disclosure, the UE may be a road side unit (RSU) having a UE function, an RSU having a base station function, or an RSU having some of the base station functions and some of the UE functions.

In addition, according to an embodiment of the disclosure, the bae station may be a base station supporting both V2X communication and general cellular communication or a base station supporting only V2X communication. Herein, the base station may be a 5G base station (gNB), a 4G base station (eNB), or a RSU. Accordingly, in the disclosure, the base station may be referred to as a RSU.

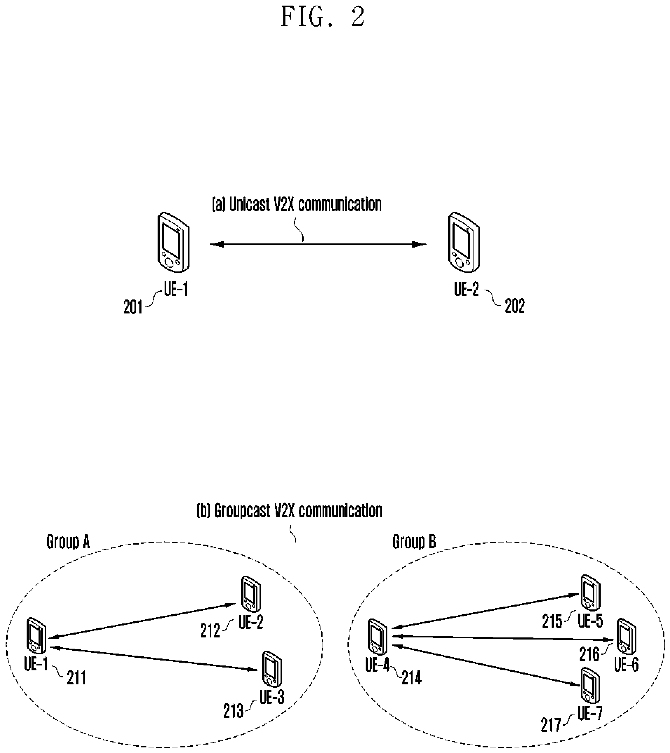

FIG. 2 is a diagram illustrating a V2X communication method performed through a sidelink, according to an embodiment of the disclosure.

With reference to FIG. 2(A), a UE-1 201 (for example, a TX UE) and a UE-2 202 (for example, an RX UE) may communicate in one-to-one manner, which may be called unicast communication.

With reference to FIG. 2(B), a TX UE and an RX UE may communicate in a one-to-many manner, which may be called groupcast or multicast. In FIG. 2(B), UE-1 211, UE-2 212, and UE-3 213 form one group (group A) and may perform groupcast communication, and UE-4 214, UE-5 215, UE-6 216, and UE-7 217 form another group (group B) and may perform groupcast communication. Each UE may perform groupcast communication only within the group to which the UE belongs, and communication between different groups may be performed through unicast, groupcast, or broadcast communication. Although FIG. 2(B) illustrates that two groups (Group A, Group B) are formed, the disclosure is not limited thereto.

Meanwhile, although not illustrated in FIG. 2, the V2X UEs may perform broadcast communication. The broadcast communication means the case in which all V2X UEs receive data and control information transmitted by the V2X transmission UE through the sidelink. For example, in FIG. 2(B), in case where it is assumed that UE-1 211 is a transmission UE for broadcast, all UEs (UE-2 212, UE-3 213, UE-4 214, UE-5 215, UE-6 216, and UE-7 217) receive data and control information transmitted by UE-1 211.

In NR V2X, supporting the type in which a vehicle UE transmits data only to one specific node through unicast and the type in which the vehicle UE transmits data to a plurality of specific nodes through groupcast may be considered unlike in LTE V2X. For example, the unicast and groupcast technologies may be useful in consideration of a service scenario such as platooning, which is a technology in which two or more vehicles are connected through one network and move in a cluster form. Specifically, unicast communication may be needed by a leader node in the group connected through platooning to control one specific node, and group cast communication may be needed to simultaneously control groups including a plurality of specific nodes.

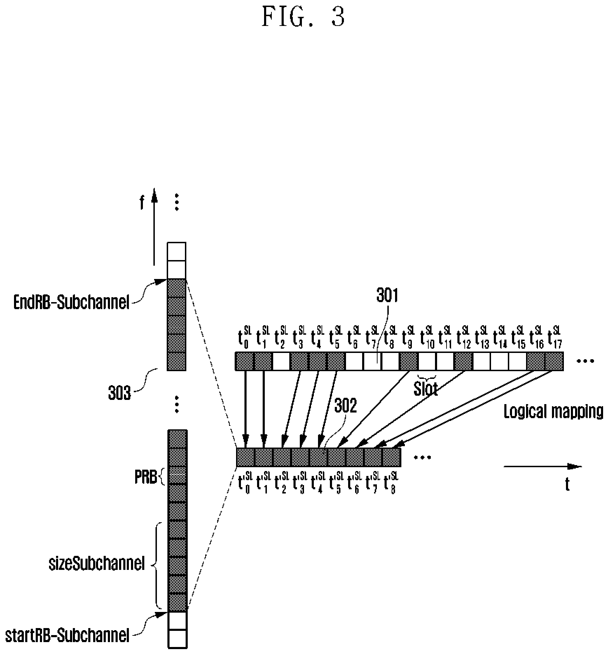

FIG. 3 is a diagram illustrating a resource pool defined as a set of resources on time and frequency used for transmission and reception of a sidelink according to an embodiment of the disclosure.

In the resource pool, a resource granularity of the time axis may be a slot. In addition, the resource granularity of the frequency axis may be a sub-channel including one or more physical resource blocks (PRBs). Although the disclosure describes an example of a case in which the resource pool is discontinuously allocated on time, the resource pool may be continuously allocated on time. In addition, although the disclosure describes an example of a case in which the resource pool is continuously allocated on a frequency, a method in which the resource pool is discontinuously allocated on a frequency is not excluded.

With reference to FIG. 3 , a case 301 in which the resource pool is discontinuously allocated on time is illustrated. FIG. 3 illustrates a case in which the resource granularity on time consists of slots. First, the sidelink slot may be defined in a slot used for uplink. Specifically, the length of a symbol used as a sidelink in one slot may be configured as sidelink bandwidth part (BWP) information. Accordingly, among the slots used for the uplink, slots in which the length of the symbol configured as the sidelink is not guaranteed may not be the sidelink slots. In addition, slots belonging to the resource pool are excluded from slots to which the sidelink synchronization signal block (S-SSB) is transmitted. With reference to 301, a set of slots that may be used as a sidelink on time except for the slots as described above is illustrated as $( t_0^{SL} , t_1^{SL} , t_2^{SL} , \cdot \cdot \cdot )$. The colored portion of 301 represents the side link slots belonging to the resource pool. Sidelink slots belonging to the resource pool may be (pre-) configured with resource pool information through a bitmap. With reference to 302, a set of sidelink slots belonging to the resource pool on time is illustrated as $( t'^{SL}_0 , t'^{SL}_1 , t'^{SL}_2 , ... )$ .In the disclosure, the meaning of (pre-)configuration may refer to configuration information pre-configured in the UE and stored in advance, or may refer to a case in which the UE is configured in a cell-common manner from the base station. Here, the cell-common may mean that the UEs in the cell receive the same information configuration from the base station. In this case, a method for obtaining cell-common information by receiving a sidelink system information block (SL-SIB) from the base station may be considered by the UE. In addition, it may mean a case in which the UE is configured in a UE-specific manner after the RRC connection with the base station is established. Here, UE-specific may be replaced with the term UE-dedicated, and may mean that configuration information is received with a specific value for each UE. In this case, a method in which the UE receives an RRC message from the base station and obtains UE-specific information may be considered. In addition, (pre-)configuration may consider a method configured in the resource pool information and a method not configured in the resource pool information. In a case where the (pre-)configuration is configured in the resource pool information, except for the case where the UE is configured in a UE-specific manner after the RRC connection with the base station is established, all UEs operating in the corresponding resource pool may operate with common configuration information. However, the method in which (pre-)configuration is not configured in the resource pool information is basically configured independently of the resource pool configuration information. For example, one or more modes may be (pre-configured in a resource pool (e.g., A, B, and C), and the (pre-)configured information independently of the resource pool configuration information may indicate which mode (e.g., A, B, or C) to use among (pre-)configured modes in the resource pool.

With reference to 303 of FIG. 3 , a case in which the resource pool is continuously allocated on the frequency is illustrated. On the frequency axis, resource allocation may be configured with sidelink bandwidth part (BWP) information and may be constituted with units of sub-channels. The sub-channel may be defined as a resource granularity on the frequency including one or more physical resource blocks (PRBs). That is, the sub-channel may be defined as an integer multiple of the PRB. With reference to 303, the sub-channel may include five consecutive PRBs, and a sub-channel size (sizeSubchannel) may be the size of five consecutive PRBs. However, the contents illustrated in the drawings are only an example of the disclosure, and the size of the sub-channel may be set to be different, and one sub-channel is generally constituted as a continuous PRB, but is not necessarily constituted as a continuous PRB. The sub-channel may be a basic unit of resource allocation for PSSCH. In 303, startRB-Subchannel may indicate the start location of the sub-channel on a frequency in the resource pool. In a case where resource allocation includes units of sub-channels on the frequency axis, resources on the frequency may be allocated through configuration information on the resource block (RB) index (startRB-Subchannel) at which the sub-channel starts, information on how many PRBs the sub-channel consists of (sizeSubchannel), and the total number of sub-channels (numSubchannel). In this case, information on startRB-Subchannel, sizeSubchannel, and numSubchannel may be (pre-)configured as resource pool information on the frequency.

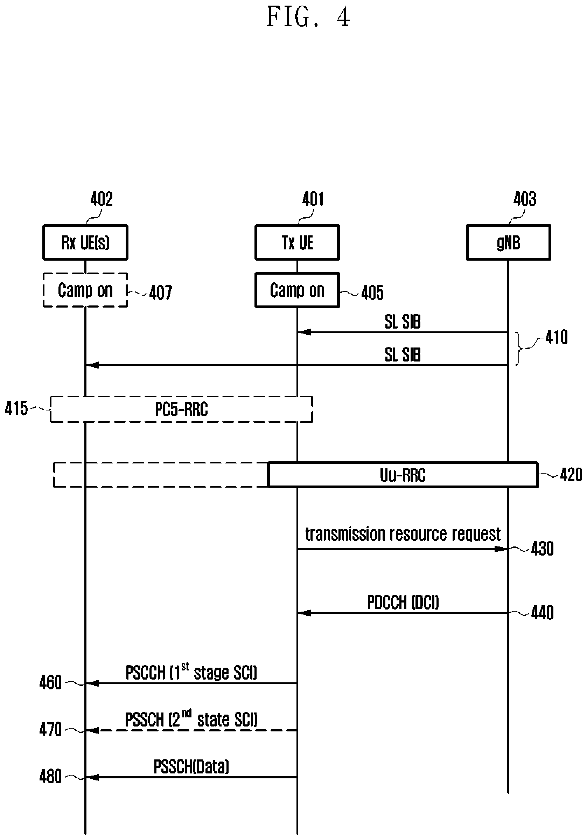

FIG. 4 is a diagram illustrating a method in which a base station allocates a transmission resource in a sidelink according to an embodiment of the disclosure.

Hereinafter, a method for the base station to allocate transmission resources in the sidelink is referred to as Mode 1. Mode 1 may be a scheduled resource allocation. Mode 1 may indicate a method in which the base station allocates resources used for sidelink transmission to RRC-connected UEs in a dedicated scheduling method. The method of Mode 1 may be effective for interference management and resource pool management because the base station may manage sidelink resources.

With reference to FIG. 4, a transmission UE 401 may camp on a base station (cell) 403 (405). The camp on may refer to a state in which, for example, a UE in a standby state (RRC_IDLE) may select (or reselect) the base station (cell) as needed and receive system information or paging information, or the like.

On the other hand, in a case where a reception UE 402 is located within the coverage of the base station (cell) 403, the reception UE 402 may camp on the base station (cell) 403 (407). In contrast, in a case where the reception UE 402 is located outside the coverage of the base station (cell) 403, the reception UE 402 may not camp on the base station (cell) 403.

In the disclosure, the reception UE 402 represents a UE receiving data transmitted from the transmission UE 401.

The transmission UE 401 and the reception UE 402 may receive a sidelink system information block (SL-SIB) from the base station 403 (410). The SL-SIB information may include sidelink resource pool information for sidelink transmission and reception, parameter configuration information for sensing operation, information for configuring sidelink synchronization, carrier information for sidelink transmission and reception at different frequencies, and the like.

When data traffic for the V2X is generated in the transmission UE 401, the transmission UE 401 may be RRC-connected to the base station 403 (420). Here, the RRC connection between the UE and the base station may be referred to as Uu-RRC. The Uu-RRC connection process (420) may be performed before data traffic generation of the transmission UE 401. In addition, in Mode 1, the transmission UE may perform transmission to the reception UE through a sidelink in a state in which the Uu-RRC connection process (420) between the base station 403 and the reception UE 402 is performed. On the other hand, in Mode 1, even when the Uu-RRC connection process (420) between the base station 403 and the reception UE 402 is not performed, the transmission UE may perform transmission to the reception UE through the sidelink.

The transmission UE 401 may request a transmission resource capable of performing V2X communication with the reception UE 402 from the base station (430). In this case, the transmission UE 401 may request a sidelink transmission resource from the base station 403 by using a physical uplink control channel (PUCCH), an RRC message, or a medium access control (MAC) control element (CE). On the other hand, the MAC CE may be a buffer state report (BSR) MAC CE or the like in a new format (including information on an indicator indicating that it is at least a buffer state report for V2X communication, and the size of data buffered for D2D communication). In addition, the transmission UE 401 may request a sidelink resource through a scheduling request (SR) bit transmitted through the physical uplink control channel.

Next, the base station 403 may allocate a V2X transmission resource to the transmission UE 401. In this case, the base station may allocate transmission resources in a dynamic grant or configured grant method.

First, in the case of the dynamic grant method, the base station may allocate resources for TB transmission through downlink control information (DCI). The sidelink scheduling information included in DCI may include parameters related to transmission time and frequency allocation location information fields of initial transmission and retransmission. The DCI for the dynamic grant method may be CRC scrambled with SL-V-RNTI to indicate that it is the dynamic grant method.

Next, in the case of the configured grant method, the base station may periodically allocate resources for TB transmission by configuring a semi-persistent scheduling (SPS) interval through the Uu-RRC. In this case, the base station may allocate resources for one TB through the DCI. The sidelink scheduling information for one TB included in the DCI may include parameters related to transmission time and frequency allocation location information of initial transmission and retransmission resources. In a case where resources are allocated in the configured grant method, the transmission time point (occasion) and frequency allocation location of initial transmission and retransmission for one TB may be determined by the DCI, and resources for the next TB may be repeated at SPS intervals. The DCI for the configured grant method may be CRC scrambled with SL-SPS-V-RNTI to indicate that it is a configured grant method. In addition, the configured grant (CG) method may be divided into Type1 CG and Type2 CG. In the case of Type2 CG, resources configured by the configured grant may be activated/deactivated through the DCI.

Accordingly, in the case of Mode 1, the base station 403 may instruct the transmission UE 401 to schedule a sidelink communication with the reception UE 402 through DCI transmission through a physical downlink control channel (PDCCH) (440).

Specifically, the downlink control information (DCI) used by the base station 403 for sidelink communication to the transmission UE 401 may include, for example, DCI format 3_0 or DCI format 3_1. The DCI format 3_0 may be defined as a DCI for scheduling an NR sidelink in one cell, and the DCI format 3_1 may be defined as a DCI for scheduling an LTE sidelink in one cell.

In the case of broadcast transmission, the transmission UE 401 may perform transmission without RRC configuration 415 for the sidelink. Alternatively, in the case of unicast or groupcast transmission, the transmission UE 401 may perform a one-to-one RRC connection with another UE. Here, the RRC connection between UEs may be referred to as a PC5-RRC 415, distinguished from the Uu-RRC. In the case of groupcast, the PC5-RRC 415 may be individually connected between the UEs in the group. With reference to FIG. 4 , the connection of the PC5-RRC 415 is illustrated as an operation after the transmission 410 of the SL-SIB, but may be performed at any time before the transmission 410 of the SL-SIB or before the transmission of the SCI.

Next, the transmission UE 401 may transmit the SCI (1st stage) to the reception UE 402 through a physical sidelink control channel (PSCCH) (460). In addition, the transmission UE 401 may transmit the SCI (2$^{nd}$ stage) to the reception UE 402 through the PSSCH (470). In this case, information related to resource allocation may be included in the 1$^{st}$ stage SCI and other control information may be included in the 2$^{nd}$ stage SCI. In addition, the transmission UE 401 may transmit data to the reception UE 402 through the PSSCH (480). In this case, SCI (1$^{st}$ stage), SCI (2$^{nd}$ stage), and PSSCH may be transmitted together in the same slot.

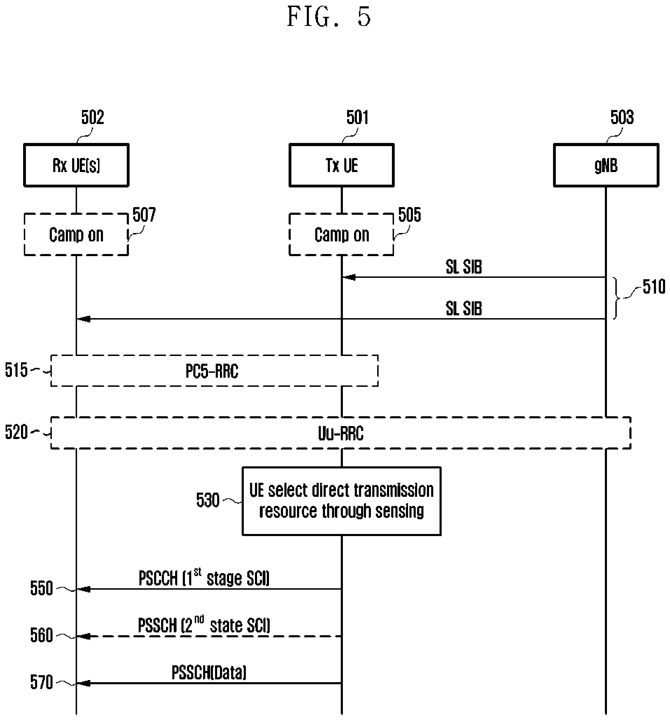

FIG. 5 is a diagram illustrating a method in which a UE directly allocates a transmission resource of a sidelink through sensing in a sidelink according to an embodiment of the disclosure.

Hereinafter, a method in which the UE directly allocates the transmission resource of the sidelink through sensing in the sidelink is referred to as Mode 2. In the case of Mode 2, it may also be referred to as UE automatic resource selection. In Mode 2, the base station 503 may provide a sidelink transmission/reception resource pool for V2X as system information, and a transmission UE 501 may select a transmission resource according to a predetermined rule. Unlike Mode 1 in which the base station directly participates in resource allocation, FIG. 5 differs in that the transmission UE 501 autonomously selects resources and transmits data based on a resource pool previously received through system information.

With reference to FIG. 5, the transmission UE 501 may camp on the base station (cell) 503 (505). The camp on may refer to a state in which, for example, a UE in a standby state (RRC_IDLE) may select (or reselect) the base station (cell) as needed and receive system information or paging information, or the like. In addition, with reference to FIG. 5, unlike FIG. 4 described above, in the case of Mode 2, in a case where the transmission UE 501 is located within the coverage of the base station (cell) 503, the transmission UE 501 may camp on the base station (cell) 503 (507). In contrast, in a case where the transmission UE 501 is located outside the coverage of the base station (cell) 503, the transmission UE 501 may not camp on the base station (cell) 503.

On the other hand, in a case where a reception UE 502 is located within the coverage of the base station (cell) 503, the reception UE 502 may camp on the base station (cell) 503 (507). In contrast, in a case where the reception UE 502 is located outside the coverage of the base station (cell) 503, the reception UE 502 may not camp on the base station (cell) 503.

In the disclosure, the reception UE 502 represents a UE receiving data transmitted from the transmission UE 501.

The transmission UE 501 and the reception UE 502 may receive a sidelink system information block (SL-SIB) from the base station 503 (510). The SL-SIB information may include sidelink resource pool information for sidelink transmission and reception, parameter configuration information for sensing operation, information for configuring sidelink synchronization, carrier information for sidelink transmission and reception at different frequencies, or the like.

The difference between FIGS. 4 and 5 is that in FIG. 4, the base station 503 and the transmission UE 501 operate in an RRC connected state, whereas in FIG. 5, the UE may also operate in an idle mode 520 (an RRC not connected state). In addition, even in the RRC connected state 520, the base station 503 may allow the transmission UE 501 to autonomously select a transmission resource without directly participating in resource allocation. Here, the RRC connection between the transmission UE 50 1 and the base station 503 may be referred to as Uu-RRC 520. When data traffic for the V2X is generated in the transmission UE 501, the transmission UE 501 may receive configuration of resource pool from the base station 503 through the received system information, and the transmission UE 501 may directly select a resource in the time/frequency domain through sensing in the configured resource pool (530). When the resource is finally selected, the selected resource is determined as a grant for the sidelink transmission.

In the case of broadcast transmission, the transmission UE 501 may perform transmission without RRC configuration 515 for the sidelink. Alternatively, in the case of unicast or groupcast transmission, the transmission UE 501 may perform a one-to-one RRC connection with another UE. Here, the RRC connection between UEs may be referred to as a PC5-RRC 515, distinguished from the Uu-RRC. In the case of groupcast, the PC5-RRC 515 may be individually connected between the UEs in the group. With reference to FIG. 5, the connection of the PC5-RRC 515 is illustrated as an operation after the transmission 510 of the SL-SIB, but may be performed at any time before the transmission 510 of the SL-SIB or before the transmission of the SCI.

Next, the transmission UE 501 may transmit the SCI (1$^{st}$ stage) to the reception UE 502 through PSCCH (550). In addition, the transmission UE 401 may transmit the SCI (2$^{nd}$ stage) to the reception UE 402 through the PSSCH (560). In this case, information related to resource allocation may be included in the 1$^{st}$ stage SCI and other control information may be included in the 2$^{nd}$ stage SCI. In addition, the transmission UE 501 may transmit data to the reception UE 502 through the PSSCH (570). In this case, SCI (1$^{st}$ stage), SCI (2$^{nd}$ stage), and PSSCH may be transmitted together in the same slot.

Specifically, sidelink control information (SCI) used by the transmission UEs 401, 501 for sidelink communication to the reception UEs 402, 502 is SCI (1$^{st}$ stage) and may be, for example, SCI format 1-A. In addition, there may be, for example, SCI format 2-A or SCI format 2-B as the SCI (2$^{nd}$ stage). In SCI (2$^{nd}$ stage), SCI format 2-A may be used by including information for PSSCH decoding when HARQ feedback is not used or when HARQ feedback is used and both ACK and NACK information are included. Alternatively, SCI format 2-B may be used by including information for PSSCH decoding when HARQ feedback is not used or when HARQ feedback is used and only NACK information is included.

For example, SCI format 2-B may be limitedly used for groupcast transmission.

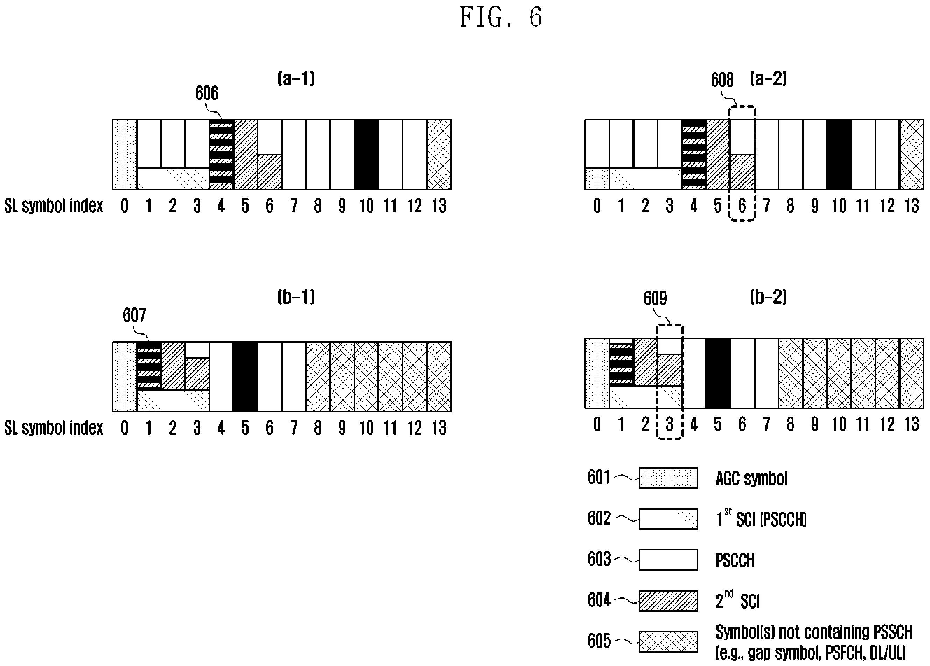

FIG. 6 is a diagram illustrating a mapping structure of sidelink physical channels mapped to one slot according to an embodiment of the disclosure.

Particularly, FIG. 6 illustrates an example in which physical channels of physical sidelink control channel (PSCCH), physical sidelink shared channel (PSSCH) and physical sidelink feedback channel (PSFCH) are mapped. In PSFCH, in case where HARQ feedback of the sidelink is activated in the higher layer, the resource of the PSFCH on time may be (pre-) configured with resource pool information. For example, the resource in terms of the time that the PSFCH is transmitted may be (pre-)configured with a value of one of every 0, 1, 2, and 4 slots. Here, the meaning of '0' may mean that the PSFCH resource is not used. In addition, 1, 2, and 4 may mean that PSFCH resources are transmitted for every 1, 2, and 4 slots, respectively. FIG. 6(A) illustrates a structure of a slot in which a PSFCH resource is not used, and FIG. 6(B) illustrates a structure of a slot in which a PSFCH resource is configured and transmitted. The PSCCH/PSSCH/PSFCH may be allocated to one or more sub-channels on frequency. For details on sub-channel allocation, refer to the description of FIG. 3. Next, with reference to FIG. 6 to describe a time-based mapping of the PSCCH/PSSCH/PSFCH, one or more symbols before the transmission UE transmits the PSCCH/PSSCH/PSFCH to a corresponding slot may be used as a region 601 for automatic gain control (AGC). According to FIG. 6, control information related to resource allocation to initial symbols of the slot may be transmitted to the 1st stage sidelink control information (SCI) through a PSCCH 602, and other control information may be transmitted to the 2nd stage SCI 604 from the region of a PSSCH 603. Data scheduled by the control information may be transmitted to the PSSCH 603. In this case, the location on time at which the 2nd stage SCI is transmitted may be mapped from the symbol at which a first PSSCH DMRS 606 or 607 is transmitted. As illustrated in FIGS. 6(A) and 6(B), the location on time at which the PSSCH DMRS is transmitted may vary depending on the PSSCH region allocated to the slot. 605 in FIG. 6 illustrates an example in which symbols for transmission of signals other than PSSCH are located in the last region of the slot. Specifically, in *FIG. 6(A)*, there is one symbol corresponding to 605, and in this case, the symbol corresponding to 605 is used as a gap symbol. On the other hand, FIG. 6(B) illustrates a case where a plurality of symbols corresponding to 605 is secured, and the corresponding symbol region may be used as a gap symbol, PSFCH symbol, and Downlink (DL)/Uplink (UL) symbol.

First, (a-1) and (b-1) in FIG. 6 illustrate an example of a case where data is transmitted together in the PSSCH region when the 2nd SCI is transmitted through PSSCH. In this way, in case where the 2nd SCI is transmitted through the PSSCH and data is transmitted together in the PSSCH region, the number $Q'_{SCI2}$ of coded bits or coded modulation symbols in which 2nd SCI is coded using channel coding is calculated as in Equation 1 below. In Equation 1 below, the symbol index $l$ may be defined based on the symbols used to transmit PSCCH/PSSCH, excluding the first symbol in the slot used for AGC.

[Equation 1]

$$Q'_{SCI2} = \min \left\{ \left\lceil \frac{(O_{SCI2} + L_{SCI2}) \cdot \beta_{offset}^{SCI2}}{Q_m^{SCI2} \cdot R} \right\rceil, \left\lceil \alpha \sum_{l=0}^{N_{symbol}^{PSSCH}-1} M_{sc}^{SCI2}(l) \right\rceil \right\} + \gamma$$

In Equation 1 above,

* $O_{SCI2}$ represents the number of bits of information included in the 2nd SCI. Depending on the 2nd SCI format used, the number of bits of information included may vary.

* $L_{SCI2}$ uses the number of CRC bits used in the 2nd SCI, and 24 bits may be used.

* $\beta_{offset}^{SCI2}$ is a parameter for controlling the number of coded bits of the 2nd SCI and may be determined using the bit field included in the 1st SCI.

* $Q_m^{SCI2}$ represents the modulation degree used for 2nd SCI transmission. The corresponding value may be fixed to QPSK.

* $R$ represents the coding rate used for 2nd SCI transmission. The corresponding value may be determined using the bit field included in the 1st SCI, and the coding rate may be the same value as the coding rate used for data transmission.

* $M_{sc}^{SCI2}(l)$ is the number of resource element (RE) used for transmission to the 2nd SCI in the symbol index $l$,

$$M_{sc}^{SCI2}(l)=M_{sc}^{PSSCH}(l)-M_{sc}^{PSCCH}(l)$$

and may be defined as . Here, $M_{sc}^{PSSCH}(l)$ represents the number of REs in the bandwidth scheduled for PSSCH transmission in the symbol index $l$, and $M_{sc}^{PSCCH}(l)$ represents the number of subcarriers used for transmission of PSCCH and PSCCH DMRS in the symbol index $l$, that is, the number of REs.

* $N_{symbol}^{PSSCH}$ represents the number of symbols through which PSSCH is transmitted and may be defined as

$$N_{symbol}^{PSSCH}=N_{symbol}^{sh}-N_{symbol}^{PSFCH}$$

. Here, it may be defined as $N_{symbol}^{sh}=sl\text{-}lengthSymbols\text{-}2$, where *sl-length-Symbols* is the number of symbols used as sidelinks, and one of the values of {7,8,9,10,11,12,13,14} may be configured via a higher layer. The reason for subtracting 2 from *sl-lengthSymbols* when determining the value of $N_{symbol}^{sh}$ is to take into account the first AGC symbol and last gap symbol of the slot. $N_{symbol}^{PSFCH}$ may be determined as $N_{symbol}^{PSFCH}=3$ in the slot in which PSFCH is transmitted and as $N_{symbol}^{PSFCH}=0$ in the slot in which PSFCH is not transmitted.

* $\alpha$ is a value used as a parameter that determines the amount by which the 2nd SCI is mapped, and may be a value configured with the higher layer.

* When the 2nd SCI is mapped, if there is a RE (i.e., a RE to which the 2nd SCI is not mapped) remaining in the RB of the (OFDM or SC-FDMA) symbol to which the last symbol among the (modulated) symbols generated by coding the 2nd SCI is mapped, Y is a variable determined so that the 2nd SCI is mapped to all remaining REs of the corresponding RB.

Unlike (a-1) and (b-1), an example of a case where data is not transmitted together in the PSSCH region when the 2nd SCI is transmitted through PSSCH is illustrated by (a-2) and (b-2), respectively. In case where data is not transmitted in the PSSCH region and the 2nd SCI is mapped to the PSSCH region according to Equation 1 above, if the 2nd SCI is mapped to only portion of the frequency domain of the PSSCH in the last symbol transmitted, as illustrated in 608 of FIG.(a-2) and 609 of FIG.(b-2), power imbalance may occur between the corresponding symbol and the previous symbol(s) to which the 2nd SCI is mapped. In other words, in the previous symbol(s) to which the 2nd SCI is mapped, the 2nd SCI is transmitted entirely to the frequency domain of the PSSCH, but in the last symbol to which the 2nd SCI is transmitted, the 2nd SCI is mapped only to a portion of the frequency domain of the PSSCH, so the power of the inter-symbol transmission signal may become inconsistent. If such power imbalance occurs, difficulties may arise in transmitting and receiving signals. Therefore, in order to solve this power imbalance problem, the disclosure proposes a method for operating the 2nd SCI mapping differently for the case where data is transmitted together in the PSSCH region when the 2nd SCI is transmitted through PSSCH and the case where data is not transmitted together when the 2nd SCI is transmitted through PSSCH.

In the embodiment below, the disclosure specifically considers cases where data is transmitted together and cases where data is not transmitted together when control information is transmitted through 2nd SCI, and the disclosure proposes detailed methods for solving the power imbalance problem in cases where control information is not transmitted along with data. In this case, the control information transmitted through the 2nd SCI may include information for inter-UE coordination, and it should be noted that in the disclosure, the information shared for inter-UE coordination is not limited to specific information. As an example, inter-UE coordination information may be information related to resource allocation.

First, in a 1-1 embodiment, an overall procedure for when and how the inter-UE coordination may be performed in the sidelink will be described. In a 1-2 embodiment, the disclosure proposes methods to solve the power imbalance problem in case where control information is not transmitted along with data when the control information is transmitted through 2nd SCI. In a 1-3 embodiment, the disclosure proposes other methods that are different from the 1-2 embodiment. In 1-4 embodiment, the disclosure proposes a detailed operation of UE in a case where data is transmitted together and a case where data is not transmitted together when transmitting control information through 2nd SCI. It is noted that all embodiments disclosed in the disclosure can be used in combination with each other for specific technical purposes as long as they do not technically contradict each other.

<1-1 Embodiment>

In the 1-1 embodiment, a specific scenario for the inter-UE coordination in the sidelink is presented through drawings, and an overall procedure for when and how the inter-UE coordination may be performed will be described. Here, the UE may be a vehicle UE and a pedestrian UE.

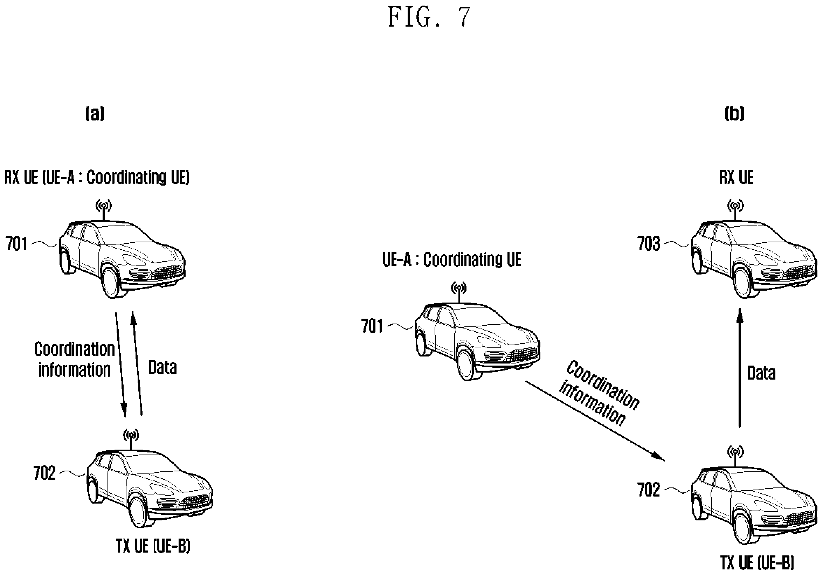

FIG. 7 is a diagram illustrating a scenario in which inter-UE coordination is performed according to an embodiment of the disclosure.

In the disclosure, inter-UE coordination may mean providing an improved sidelink service by sharing information that may be helpful to UEs. Resource allocation information may be included as such information. For example, the UE performing transmission in the sidelink may allocate resources through a direct sensing and resource selection procedure (Mode2), or in a case where the UE performing transmission is within the coverage of the base station (BS), the resource may be allocated from the base station (Mode1). However, a method in which the UE receives resource allocation and resource allocation-related information from another UE through the inter-UE coordination may be considered. In contrast, the location information of the UE may be included as inter-UE coordination information. For example, in order for a specific UE to measure its absolute location, it is necessary to not only receive a signal for location measurement from another UE but also receive absolute location information of the other UE. In the disclosure, information shared for inter-UE coordination is not limited to specific information. More generally, the disclosure considers the case where information required between UEs is indicated through the 2nd SCI, and this information is called inter-UE coordination information.

With reference to FIG. 7, a scenario in which inter-UE coordination is performed in a sidelink is illustrated. In FIG. 7, a UE-A 701 corresponds to a UE that provides inter-UE coordination information to a UE-B 702, and the UE-B 702 corresponds to a UE that receives inter-UE coordination information from the UE-A 701. According to FIG. 7(A), a case in which the UE-A 701 corresponds to an intended reception UE for the UE-B 702 is illustrated. In contrast, according to FIG. 7(B), a case in which any UE may be the UE-A 701 that provides inter-UE coordination information is illustrated. Specifically, FIG. 7(B) illustrates a case in which the UE-A 701 is not a reception UE 703 for the UE-B 702. Through the inter-UE coordination, the UE-B may receive inter-UE coordination information from the UE-A and may receive assistance in performing sidelink transmission. In the disclosure, the UE that provides relevant information for inter-UE coordination is referred to as UE-A, and the UE that receives relevant information for inter-UE coordination is referred to as UE-B.

As illustrated in FIG. 7, any UE(s) in the sidelink may be a UE providing inter-UE coordination information, such as the UE-A, and may be a UE receiving inter-UE coordination information, such as the UE-B. In addition, it is noted that it is not necessary for all UEs to be a UE providing resource allocation information such as the UE-A or a UE receiving resource allocation information, such as the UE-B. Specifically, one or more UEs may have a qualification to perform the role of the UE-A (or the UE-B). However, not all UEs having the qualification to perform the role of the UE-A (or the UE-B) become the UE-A (or the UE-B). Accordingly, the UE-A (or the UE-B) may be selected as necessary. In other words, while not performing the role of the UE-A (or the UE-B), the role of the UE-A (or the UE-B) may be performed, and conversely, while performing the role of the UE-A (or the UE-B), the role of the UE-A (or the UE-B) may not be performed.

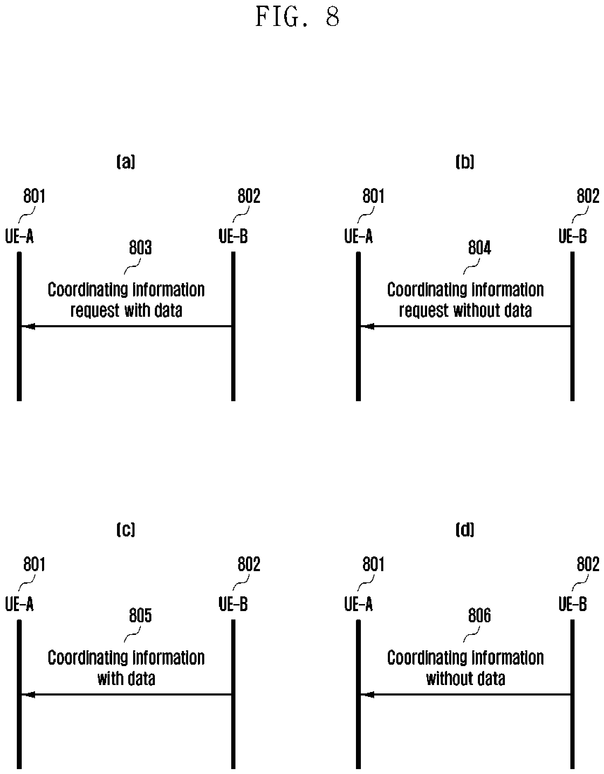

FIG. 8 is a diagram illustrating an operation of requesting inter-UE coordination information and transmitting the corresponding information through a 2nd SCI according to an embodiment of the disclosure. In case of performing the corresponding operation through the 2nd SCI, since the 2nd SCI is transmitted through the PSSCH, it is necessary for the UE to receive resources for PSSCH allocated from the base station or to allocate resources through direct sensing, as described through FIG. 4 or FIG. 5.

FIG. 8(A) corresponds to a case (803) where inter-UE coordination information is transmitted along with data in the PSSCH region when UE-B 802 requests the inter-UE coordination information from UE-A 801 using the 2nd SCI. When UE-A 801 provides inter-UE coordination information to UE-B 802, in case where information is provided in a manner that provides information periodically at a designated time, rather than a method requested by UE-B 802, the corresponding operation may not be considered.

FIG. 8(B) corresponds to a case (804) where data is not transmitted along with the PSSCH region when UE-B 802 requests inter-UE coordination information from UE-A 801 using the 2nd SCI. When UE-A 801 provides inter-UE coordination information to UE-B 802, in case where information is provided in a manner that provides information periodically at a designated time, rather than in a method requested by UE-B 802, the corresponding operation may not be considered.

FIG. 8(C) corresponds to a case (805) where information is transmitted along with data in the PSSCH region when UE-A 801 provides inter-UE coordination information to UE-B 802 using the 2nd SCI.

FIG. 8(D) corresponds to a case (806) in which information is not transmitted along with data in the PSSCH region when UE-A 801 provides inter-UE coordination information to UE-B 802 using the 2nd SCI.

In case where UE-B 802 requests inter-UE coordination information from UE-A 801 through 2nd SCI, the disclosure provides UE operations that vary depending on whether the information is transmitted along with data (as illustrated in FIG. 8(A)) or is not transmitted along with data (as illustrated in FIG. 8(B)), through the following embodiments.

In addition, in case where UE-A 801 requests inter-UE coordination information from UE-B 802 through 2nd SCI, the disclosure provides UE operations that vary depending on whether the information is transmitted along with data (as illustrated in FIG. 8(C)) or is not transmitted along with data (as illustrated in FIG. 8(D)), through the following embodiments.

If transmission occurs only in case where there is a request for inter-UE coordination information and there is data to transmit the information, a large delay may occur in the UE finally receiving the inter-UE coordination information. Therefore, in order to shorten this delay time, a method is needed so that control information is not transmitted along with the data when transmitting control information through the 2nd SCI.

<1-2 Embodiment>

In a 1-2 embodiment, methods for solving the power imbalance problem in case where control information is not transmitted along with data when transmitting control information through the 2nd SCI are proposed. The control information transmitted through the 2nd SCI may be information for performing inter-UE coordination in the sidelink. Here, the UE may be a vehicle UE or a pedestrian UE.

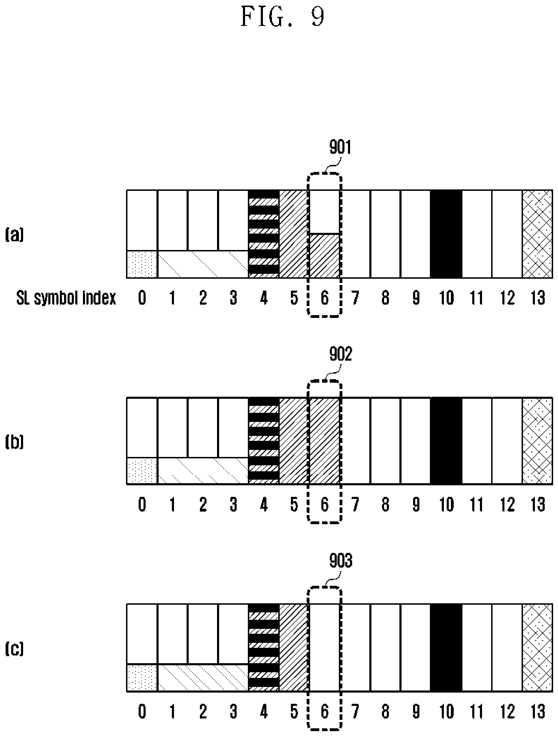

FIG. 9 is a diagram illustrating methods for solving the power imbalance problem in case where control information is not transmitted along with data when transmitting control information through 2nd SCI according to an embodiment of the disclosure.

First, according to FIG. 9(A), an example of a case where data is not transmitted together in the PSSCH region when the 2nd SCI is transmitted through PSSCH is illustrated. In case where data is not transmitted in the PSSCH region and the 2nd SCI is mapped to the PSSCH region according to Equation 1 above, as illustrated in FIG. 9(A), if the 2nd SCI is mapped to only a portion of the frequency domain of the PSSCH in the last symbol transmitted (901), power imbalance may occur between the corresponding symbol and the previous symbol(s) to which the 2nd SCI is mapped.

As method 1 to solve the power imbalance problem, in case where control information is not transmitted along with data when transmitting control information through the 2nd SCI, all 2nd SCIs may be mapped to the frequency domain of the PSSCH in the last symbol where the 2nd SCI is transmitted. With this method, unlike Equation 1 above, in case where data is not transmitted together in the PSSCH region when the 2nd SCI is transmitted through PSSCH, the number $Q'_{SCI2}$ of bits or symbols in which the 2nd SCI is coded using channel coding is calculated as in Equation 2 below. In Equation 2 below, the symbol index $l$ may be defined based on the symbols used to transmit PSCCH/PSSCH, excluding the first symbol in the slot used for AGC.

[Equation 2]

$$Q'_{SCI2} = \min\left\{ \left\lceil \frac{(O_{SCI2} + L_{SCI2}) \cdot \beta_{offset}^{SCI2}}{Q_m^{SCI2} \cdot R} \right\rceil, \left\lceil \alpha \sum_{l=0}^{N_{symbol}^{PSSCH}-1} M_{sc}^{SCI2}(l) \right\rceil \right\} + \gamma'$$

For a description of the parameters in Equation 2, refer to Equation 1 above. It is noted that the parameter $\gamma$ is used in Equation 1, but $\gamma'$ is used instead of $\gamma$ in Equation 2. Also, $\gamma'$ may be defined as follows.

* When the 2nd SCI is mapped, if there is a RE (i.e., a RE to which the 2nd SCI is not mapped) remaining in the (OFDM or SC-FDMA) symbol to which the last symbol among the (modulated) symbols generated by coding the 2nd SCI is mapped, $\gamma'$ is a variable determined so that the 2nd SCI is mapped to all remaining REs. In the case of Equation 1, Y is a variable determined so that the 2nd SCI is mapped only to the REs remaining in the RB, while $\gamma'$ is a variable determined so that the 2nd SCI is mapped to all REs remaining in the frequency domain of the PSSCH.

According to FIG. 9(B), an example of Method 1 is illustrated. As illustrated in FIG. 9(B), if the 2nd SCI is mapped to all regions of the frequency of the PSSCH in the last symbol to be transmitted (902), the power remains the same between the corresponding symbol and the previous symbol(s) to which the 2nd SCI is mapped. Thus, the power imbalance occurring in FIG. 9(A) can be resolved.

Method 2 to solve the power imbalance problem is that when control information is transmitted through the 2nd SCI, in case where control information is not transmitted along with the data, the mapping of the 2nd SCI to only a portion of the frequency domain of the PSSCH in the last symbol where the 2nd SCI is transmitted is prevented. For this purpose, a method of adjusting the value $\beta_{offset}^{SCI2}$ in Equation 1 may be considered. Alternatively, a method of discarding the information included in some 2nd SCIs may be considered. In this case, the information included in the 2nd SCI may be different for a case where the 2nd SCI is transmitted with data and a case where the 2nd SCI is not transmitted with data. The case where the 2nd SCI is not transmitted along with data may be defined not to include some information in the 2nd SCI. However, this has the disadvantage of losing some information. In this case, for each case where the 2nd SCI is transmitted with data and where the 2nd SCI is not transmitted with data, the 2nd SCI has the same format, but may have different information, and it may be assumed that the UE can distinguish this difference. Alternatively, unlike this, it may be assumed that the 2nd SCI is interpreted in different formats for each case where the 2nd SCI is transmitted with data and whether the 2nd SCI is not transmitted with data.

According to FIG. 9(C), an example of Method 2 is illustrated. As illustrated in FIG. 9(C), method 2 is used to prevent the 2nd SCI from being mapped to some region of the frequency of the PSSCH in the last symbol transmitted, so if the 2nd SCI is not mapped to the corresponding symbol (903), the power imbalance that occurs in FIG. 9(A) can be resolved.

<1-3 Embodiment>

In a 1-3 embodiment, methods different from those presented in the 1-2 embodiment are proposed. Through these methods, the power imbalance problem can be solved in case where control information is not transmitted along with data when transmitting control information through the 2nd SCI. Control information transmitted through the 2nd SCI may be information for performing inter-UE coordination in the sidelink. Here, the UE may be a vehicle UE or a pedestrian UE.

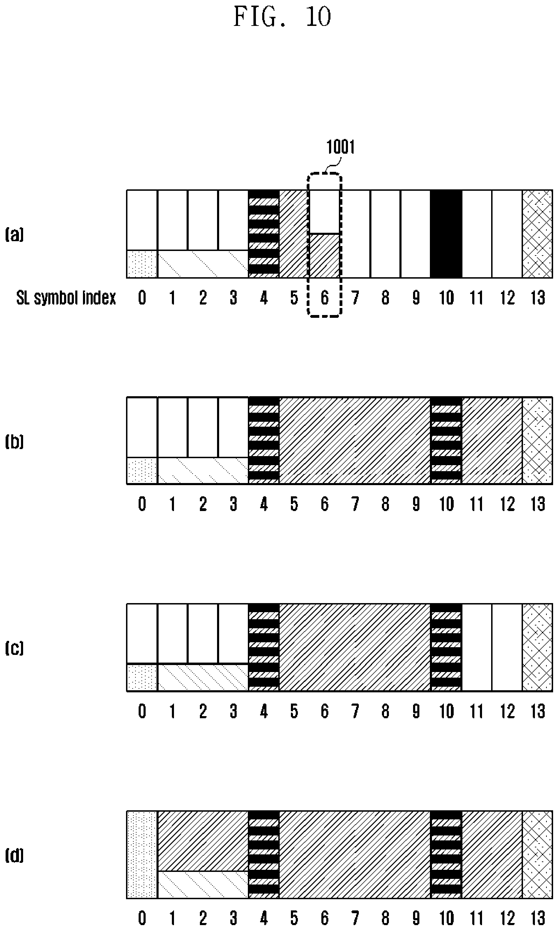

FIG. 10 is a diagram illustrating methods for solving the power imbalance problem in case where control information is not transmitted along with data when transmitting control information through 2nd SCI according to an embodiment of the disclosure.

First, according to FIG. 10(A), an example of a case where data is not transmitted together in the PSSCH region when the 2nd SCI is transmitted through PSSCH is illustrated. In case where data is not transmitted in the PSSCH region and the 2nd SCI is mapped to the PSSCH region according to Equation 1 above, as illustrated in FIG. 10(A), if the 2nd SCI is mapped to only a portion of the frequency domain of the PSSCH in the last symbol transmitted (1001), power imbalance may occur between the corresponding symbol and the previous symbol(s) to which the 2nd SCI is mapped.

As method 3 to solve the power imbalance problem, when control information is transmitted through the 2nd SCI, in case where the control information is not transmitted along with data, the 2nd SCI may be mapped from the first symbol of the PSSCH DMRS to the last symbol of the PSSCH. In this method, unlike Equation 1 above, in case where data is not transmitted together in the PSSCH region when the 2nd SCI is transmitted through PSSCH, the number $Q'_{SCI2}$ of bits or symbols in which the 2nd SCI is coded using channel coding may be calculated as in Equation 3 below. In Equation 3 below, the symbol index $l$ may be defined based on the symbols used to transmit PSCCH/PSSCH, excluding the first symbol in the slot used for AGC.

[Equation 3]

$$Q'_{SCI2} = \sum_{l=N_{first\_symbol}^{PSSCH\_DMRS}}^{N_{symbol}^{PSSCH}-1} M_{sc}^{SCI2}(l)$$

In Equation 3 above,

$M_{sc}^{SCI2}(l)$

* may be defined as the number of resource element (RE) used for transmission to the 2nd SCI in the symbol index $l$, and may be defined as $M_{sc}^{SCI2}(l) = M_{sc}^{PSSCH}(l) - M_{sc}^{PSCCH}(l)$ . Here, $M_{sc}^{PSSCH}(l)$ represents the number of REs in the bandwidth scheduled for PSSCH transmission in the symbol index $l$, and

$M_{sc}^{PSCCH}(l)$ represents the number of subcarriers used for transmission of PSCCH and PSCCH DMRS in the symbol index *l*, that is, the number of REs.

* $N_{symbol}^{PSSCH}$ represents the number of symbols through which PSSCH is transmitted and may be defined as $N_{symbol}^{PSSCH} = N_{symbol}^{sh} - N_{symbol}^{PSFCH}$. Here, it can be defined as $N_{symbol}^{sh} = sl\text{-}lengthSymbols\text{-}2$, where *sl-lengthSymbols* is the number of symbols used as sidelinks, and one of the values of {7,8,9,10,11,12,13,14} may be configured via a higher layer. The reason for subtracting 2 from *sl-lengthSymbols* when determining the value of $N_{symbol}^{sh}$ is to take into account the first AGC symbol and last gap symbol of the slot. $N_{symbol}^{PSFCH}$ may be determined as $N_{symbol}^{PSFCH} = 3$ in slots in which PSFCH is transmitted and as $N_{symbol}^{PSFCH} = 0$ in slots in which PSFCH is not transmitted.

* $N_{first\ symbol}^{PSSCH\ DMRS}$ is a parameter to indicate the symbol on which the first PSSCH DMRS is transmitted in the symbol index $l = 0, 1, 2, ..., N_{symbol}^{PSSCH} - 1$. For example, in FIG. 10, the first PSSCH DMRS is transmitted at SL symbol index 4. Therefore, in the example of FIG. 10, it may be $N_{first\ symbol}^{PSSCH\ DMRS} = 3$ based on the symbol index $l = 0, 1, 2, ..., N_{symbol}^{PSSCH} - 1$.

According to FIG. 10(B), an example of method 3 is illustrated. As illustrated in FIG. 10(B), if the 2nd SCI is transmitted to be mapped from the first symbol of the PSSCH DMRS to the last symbol of the PSSCH, the power imbalance occurring in 1001 of FIG. 10(A) can be resolved.

Method 4 to solve the power imbalance problem is that when control information is transmitted through the 2nd SCI, in case where control information is not transmitted along with the data, the 2nd SCI may be mapped from the first symbol of the PSSCH DMRS to the symbol where the last PSSCH DMRS is transmitted. In this method, unlike Equation 1 above, in case where data is not transmitted together in the PSSCH region when the 2nd SCI is transmitted through PSSCH, the number $Q'_{SCI2}$ of bits or symbols in which the 2nd SCI is coded using channel coding may be calculated as in Equation 4 below. In Equation 4 below, the symbol index *l* may be defined based on the symbols used to transmit PSCCH/PSSCH, excluding the first symbol in the slot used for AGC.

[Equation 4]

$$Q'_{SCI2} = \sum_{l = N_{first\_symbol}^{PSSCH\_DMRS}}^{N_{last\_symbol}^{PSSCH\_DMRS}} M_{sc}^{SCI2}(l)$$

In Equation 4 above,

* $M_{sc}^{SCI2}(l)$ may be defined as the number of resource element (RE) used for transmission to the 2nd SCI in the symbol index *l*, and may be defined as $M_{sc}^{SCI2}(l) = M_{sc}^{PSSCH}(l) - M_{sc}^{PSCCH}(l)$. Here, $M_{sc}^{PSSCH}(l)$ represents the number of REs in the bandwidth scheduled for PSSCH transmission in the symbol index *l*, and

$$M_{sc}^{PSCCH}(l)$$

represents the number of subcarriers used for transmission of PSCCH and PSCCH DMRS in the symbol index $l$, that is, the number of REs.

* $N_{first\ symbol}^{PSSCH\ DMRS}$ is a parameter to indicate the symbol through which the first PSSCH DMRS is transmitted in the symbol index $l=0,1,2,\ldots,N_{symbol}^{PSSCH}-1$. For example, in FIG. 10, the first PSSCH DMRS is transmitted at SL symbol index 4. Therefore, in the example of FIG. 10, it may be $N_{first\ symbol}^{PSSCH\ DMRS}=3$ based on the symbol index $l=0,1,2,\ldots,N_{symbol}^{PSSCH}-1$. For details on $N_{symbol}^{PSSCH}$, refer to Equation 1.

* $N_{last\ symbol}^{PSSCH\ DMRS}$ is a parameter to indicate the symbol on which the last PSSCH DMRS is transmitted in the symbol index $l=0,1,2,\ldots,N_{symbol}^{PSSCH}-1$. For example, in FIG. 10, the last PSSCH DMRS is transmitted at SL symbol index 10. Therefore, in the example of FIG. 10, it may be $N_{last\ symbol}^{PSSCH\ DMRS}=9$ based on the symbol index $l=0,1,2,\ldots,N_{symbol}^{PSSCH}-1$. For details on $N_{symbol}^{PSSCH}$, refer to Equation 1.

According to FIG. 10(C), an example of method 4 is illustrated. As illustrated in FIG. 10(C), if the 2nd SCI is transmitted to be mapped from the first symbol of the PSSCH DMRS to the symbol on which the last PSSCH DMRS is transmitted, the power imbalance occurring in 1001 of FIG. 10(A) can be resolved.

Method 5 to solve the power imbalance problem is that when control information is transmitted through the 2nd SCI, in case where control information is not transmitted along with the data, the 2nd SCI may be mapped to all regions of the PSSCH. In this method, unlike Equation 1 above, in case where data is not transmitted together in the PSSCH region when the 2nd SCI is transmitted through PSSCH, the number $Q'_{SCI2}$ of bits or symbols in which the 2nd SCI is coded using channel coding is calculated as in Equation 5. In Equation 5 below, the symbol index $l$ may be defined based on the symbols used to transmit PSCCH/PSSCH, excluding the first symbol in the slot used for AGC.

[Equation 5]

$$Q'_{SCI2} = \sum_{l=0}^{N_{symbol}^{PSSCH}-1} M_{sc}^{SCI2}(l)$$

In Equation 5 above,

* $M_{sc}^{SCI2}(l)$ may be defined as the number of resource element (RE) used for transmission to the 2nd SCI in the symbol index $l$, and may be defined as $M_{sc}^{SCI2}(l)=M_{sc}^{PSSCH}(l)-M_{sc}^{PSCCH}(l)$. Here, $M_{sc}^{PSSCH}(l)$ represents the number of REs in the bandwidth scheduled for PSSCH transmission in the symbol index $l$, and

$$M_{sc}^{PSCCH}(l)$$

represents the number of subcarriers used for transmission of PSCCH and PSCCH DMRS in the symbol index $l$, that is, the number of REs.

$N^{PSSCH}_{symbol}$* represents the number of symbols through which PSSCH is transmitted and may be defined as

$N^{PSSCH}_{symbol}=N^{sh}_{symbol}-N^{PSFCH}_{symbol}$. Here, it may be defined as $N^{sh}_{symbol}=sl\text{-}lengthSymbols\text{-}2$, where *sl-lengthSymbols* is the number of symbols used as the sidelink, and one of the values of {7,8,9,10,11,12,13,14} can be configured via an upper layer. The reason for subtracting 2 from *sl-lengthSymbols* when determining the value of $N^{sh}_{symbol}$ is to take into account the first AGC symbol and last gap symbol of the slot. $N^{PSFCH}_{symbol}$ may be determined as $N^{PSFCH}_{symbol}=3$ in slots in which PSFCH is transmitted and as $N^{PSFCH}_{symbol}=0$ in slots in which PSFCH is not transmitted.

It is noted that Equation 5 may be derived by configuring a large value of $\beta^{SCI2}_{offset}$ in Equation 1, configuring the value of α to 1, and configuring the value of γ to 0. In other words, method 5 may be interpreted as configuring a large value of $\beta^{SCI2}_{offset}$ in Equation 1, configuring the value of α to 1, and configuring the value of γ to 0 in case where data is not transmitted together in the PSSCH region when the 2nd SCI is transmitted through PSSCH.

According to FIG. 10(D), an example of method 5 is illustrated. As illustrated in FIG. 10(D), if the 2nd SCI is transmitted to be mapped to all regions of the PSSCH, the power imbalance occurring at 1001 in FIG. 10(A) can be resolved.

<1-4 Embodiment>

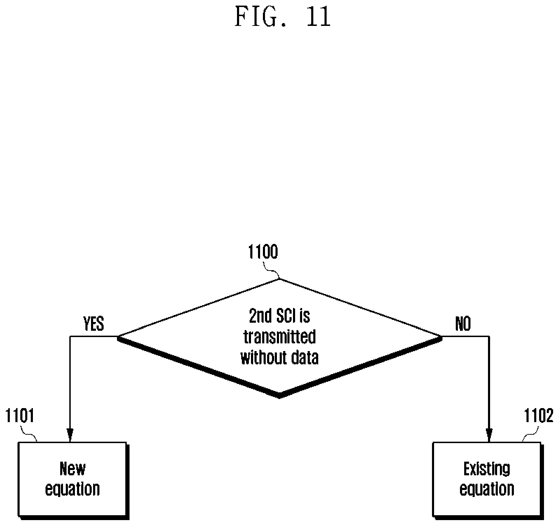

FIG. 11 is a diagram illustrating a UE operation in case where control information is transmitted along with data and case in which control information is not transmitted along with data when transmitting control information through 2nd SCI.

In a 1-4 embodiment, specific UE operations for cases where control information is transmitted along with data and cases where control information is not transmitted along with when transmitting control information through the 2nd SCI are presented through the drawings.

According to FIG. 11, when the UE transmits control information through the 2nd SCI in operation 1100, in case where control information is not transmitted along with the data, the UE moves to operation 1101 and may determine the number of bits or symbols in which the 2nd SCI is coded using channel coding through a new method. Specifically, methods 1 to 5 proposed in the above embodiment may be used. However, it is noted that the disclosure is not limited to the methods proposed above. On the other hand, when the UE transmits control information through the 2nd SCI in operation 1100, in case where control information is transmitted along with data, the UE moves to operation 1102 and may determine the number of bits or symbols in which the 2nd SCI is coded using channel coding. In this case, Equation 1 according to the existing method can be used.

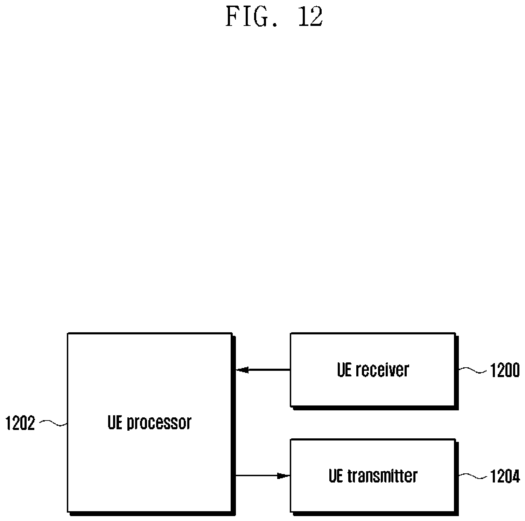

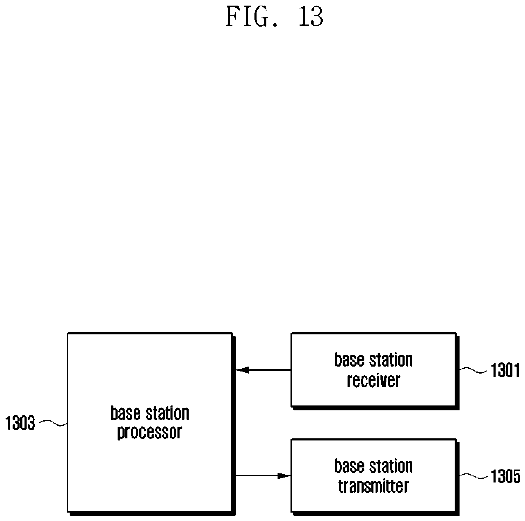

In order to perform the above embodiments of the disclosure, a transmitter, receiver, and processor of a UE and base station are illustrated in FIGS. 12 and 13 , respectively. In the above embodiments, a method for the UE to transmit control information through the 2nd SCI in the side link is illustrated, and to perform this, the receiver, processor, and transmitter of the base station and UE must operate according to the embodiment of the disclosure, respectively.

FIG. 12 is a block diagram illustrating an internal structure of a UE according to an embodiment of the disclosure.

As illustrated in FIG. 12, the UE of the disclosure may include a UE receiver 1200, a UE transmitter 1204, and a UE processor 1202. The UE receiver 1200 and the UE transmitter 1204 may be collectively referred to as a transceiver in the embodiment of the disclosure. The transceiver may transmit/receive a signal to/from the base station. The signal may include control information and data. To this end, the transceiver may include an RF transmitter for up-converting and amplifying a frequency of a transmitted signal, an RF receiver for low-noise amplifying a received signal and down-converting a frequency, and the like. In addition, the transceiver may receive a signal through a wireless channel and output the signal to the UE processor 1202, and transmit the signal output from the UE processor 1202 through the wireless channel. The UE processor 1202 may control a series of processes so that the UE may operate according to the above-described embodiment of the disclosure.

FIG. 13 is a block diagram illustrating an internal structure of a base station according to an embodiment of the disclosure.

As illustrated in FIG. 13, the base station of the disclosure may include a base station receiver 1301, a base station transmitter 1305, and a base station processor 1303. The base station receiver 1301 and the base station transmitter 1305 may be collectively referred to as a transceiver in the embodiment of the disclosure. The transceiver may transmit/receive a signal to/from the UE. The signal may include control information and data. To this end, the transceiver may include an RF transmitter for up-converting and amplifying a frequency of a transmitted signal, an RF receiver for low-noise amplifying a received signal and down-converting a frequency, and the like. In addition, the transceiver may receive a signal through a wireless channel and output the signal to the base station processor 1303, and transmit the signal output from the base station processor 1303 through the wireless channel. The base station processor 1303 may control a series of processes so that the base station may operate according to the above-described embodiment of the disclosure.

Meanwhile, the embodiments of the disclosure disclosed in the present specification and the drawings have been provided only as specific examples in order to easily describe the technical contents of the disclosure and assist in understanding the disclosure and do not limit the scope of the disclosure. That is, it is obvious to those skilled in the art to which the disclosure pertains that various modifications may be made without departing from the scope of the disclosure. Further, the respective embodiments may be combined and operated as needed. For example, portions of the embodiments of the disclosure may be combined with each other to operate the base station and the terminal.

Hereinafter, embodiments of the disclosure will be described in detail with reference to the accompanying drawings.

In the following, in describing the embodiments, a description of techniques known to those skilled in the art and not directly related to the disclosure may be omitted. Such unnecessary omission of description is intended to prevent obscuring the main concepts of the disclosure and to more clearly convey the main concepts.

For the same reason, in the accompanying drawings, some elements may be exaggerated, omitted, or schematically illustrated. Further, the size of each element does not completely reflect the actual size. In the drawings, identical or corresponding elements are provided with identical reference numerals.

Advantages and features of the disclosure and methods of accomplishing the same may be understood more readily by reference to the following detailed description of the embodiments of the disclosure and the accompanying drawings. However, the embodiments of the disclosure may have different forms and should not be construed as being limited to the descriptions set forth herein. Rather, these embodiments of the disclosure are provided so that the disclosure will be thorough and complete and will fully convey the concept of the disclosure to one of ordinary skill in the art, and the disclosure will only be defined by the appended claims. Throughout the specification, like reference numerals denote like elements.

Here, it will be understood that combinations of blocks in flowcharts or process flow diagrams may be performed by computer program instructions. Because these computer program instructions may be loaded into a processor of a general-purpose computer, a special purpose computer, or another programmable data processing apparatus, the instructions, which are performed by a processor of a computer or another programmable data processing apparatus, create a means for performing functions described in the flowchart block(s). The computer program instructions may be stored in a computer-executable or computer-readable memory capable of directing a computer or another programmable data processing apparatus to implement a function in a particular manner, and thus the instructions stored in the computer-executable or computer-readable memory may also be capable of producing manufacturing items containing instruction means for performing the functions described in the flowchart block(s). The computer program instructions may also be loaded into a computer or other programmable data processing apparatus to cause a series of operational steps to be performed on the computer or other programmable data processing apparatus to produce a computer-executed process, so that the instructions performing the computer or other programmable data processing apparatus provide steps for executing the functions described in the flowchart block(s).

In addition, each block may represent a module, segment, or portion of code that includes one or more executable instructions for executing specified logical function(s). It should also be noted that in some alternative implementations, functions mentioned in blocks may occur out of order. For example, two blocks illustrated successively may actually be executed substantially concurrently, or the blocks may sometimes be performed in a reverse order according to the corresponding function.

Here, the term "unit" in the embodiments means a software component or hardware component such as a Field-Programmable Gate Array (FPGA) or an Application-Specific Integrated Circuit (ASIC), and performs a specific function. However, the term 'unit' is not limited to software or hardware. The 'unit' may be constituted so as to be in an addressable storage medium, or may be constituted so as to operate one or more processors. Thus, for example, the term 'unit' may refer to components such as software components, object-oriented software components, class components, and task components, and may include processes, functions, attributes, procedures, subroutines, segments of program code, drivers, firmware, micro codes, circuits, data, a database, data structures, tables, arrays, and variables.

A function provided by the components and 'units' may be associated with the smaller number of components and 'units', or may be divided into additional components and 'units'. Furthermore, the components and 'units' may be embodied to reproduce one or more central processing units (CPUs) in a device or security multimedia card. Also, in the embodiments, the 'unit' may include at least one processor.

The detailed description of embodiments of the disclosure is made mainly on the basis of a New Radio (NR) access network (or a new RAN) and packet core (a 5G system, a 5G core network, or a Next Generation (NG) core) which is a core network on the 5th Generation (5G) mobile communication standard specified by the 3rd generation partnership project long term evolution (3GPP) corresponding to a mobile communication standardization organization, but the main subject of the disclosure can be applied to other communication systems having a similar technical background with slight modification without departing from the scope of the disclosure, which can be determined by those skilled in the art.

In the 5G system, a Network Data Collection and Analysis Function (NWDAF) that is a network function for analyzing and providing data collected by a 5G network may be defined to support network automation. The NWDAF may collect information from the 5G network, store and analyze the information, and provide the result to an unspecified Network Function (NF), and the analysis result may be independently used by each NF.

In the following description, terms and names defined in the 3GPP standards (standards for 5G, NR, LTE, or similar systems) may be used for the convenience of description. However, the disclosure is not limited by these terms and names, and may be applied in the same way to systems that conform other standards.

Further, in the following description, terms for identifying access nodes, terms referring to network entities, terms referring to messages, terms referring to interfaces between network entities, terms referring to various identification information, and the like are illustratively used for the sake of convenience. Therefore, the disclosure is not limited by the terms as used below, and other terms referring to subjects having equivalent technical meanings may be used.

In order to meet wireless data traffic demands that have increased after 4G communication system commercialization, efforts to develop an improved 5G communication system (New Radio (NR)) have been made. The 5G communication system has been designed to use resources in an mmWave band (for example, a frequency band of 28 GHz) in order to achieve a high data transmission rate. In the 5G communication system, technologies such as beamforming, massive MIMO, full dimensional MIMO (FD-MIMO), array antenna, analog beam-forming, and large scale antenna are discussed to mitigate a propagation path loss in the mmWave band and increase a propagation transmission distance. In addition, unlike LTE, the 5G communication system supports various subcarrier spacings such as 30 kHz, 60 kHz, and 120 kHz including 15 kHz, and a physical control channel uses polar coding and a physical data channel uses a low density parity check (LDPC). Furthermore, as waveforms for uplink transmission, not only a CP-OFDM but also a DFT-S-OFDM is used. While Hybrid ARQ (HARQ) retransmission in units of transport blocks (TBs) are supported in LTE, HARQ retransmission based on a code block group (CBG) including a plurality of code blocks (CBs) may be additionally supported in 5G.

As described above, a plurality of services may be provided to a user in a 5G communication system, and in order to provide the plurality of services to the user, a method of providing each service in the same time interval according to a characteristic thereof and an apparatus using the same are needed. Various services provided by the 5G communication system are being researched, and one thereof is a service that satisfies requirements of low latency and high reliability. In particular, in the case of vehicle communication, in an NR V2X system, unicast communication, groupcast communication, multicast communication, and broadcast communication will be supported between UEs. Further, the NR V2X aims at providing more evolved service such as platooning, advanced driving, extended sensor, and remote driving, unlike LTE V2X aiming at transmitting and receiving basic safety information required for driving of vehicles.

Particularly, inter-UE coordination may be considered in a sidelink. Here, the inter-UE coordination may mean providing a more advanced sidelink service by sharing information that may be helpful to UEs. In the disclosure, information shared for the inter-UE coordination is not limited to specific information. For example, resource allocation information may be included in such information. When sharing inter-UE coordination information, 2nd sidelink control information (SCI) transmitted through a physical sidelink shared channel (PSSCH) may be considered. Previously, when transmitting the 2nd SCI, a method for transmitting the 2nd SCI along with data information was considered. However, in case where inter-UE coordination information is shared in a sidelink, a case may occur where the UE providing coordination information does not have data to transmit to the UE receiving the coordination information. Therefore, in the disclosure, when transmitting the 2nd SCI, the case where the 2nd SCI is not transmitted along with data information is considered. In case where these two cases are supported, the UE receiving control information through the 2nd SCI needs to determine whether the 2nd SCI has been transmitted with data information or only control information has been transmitted through the 2nd SCI without data. The disclosure proposes various methods for a UE to indicate this. Through the method proposed in the disclosure, inter-UE coordination information can be transmitted through the 2nd SCI regardless of whether the UE has data to transmit, and thus the latency of providing inter-UE coordination information can be reduced.

The embodiment of the present specification is proposed to support the above-described scenario. In particular, the disclosure considers a case where control information is transmitted along with data and a case where the control information is not transmitted with data when transmitting the control information through 2nd SCI, and the disclosure has an object to provide detailed methods to indicate the two cases.

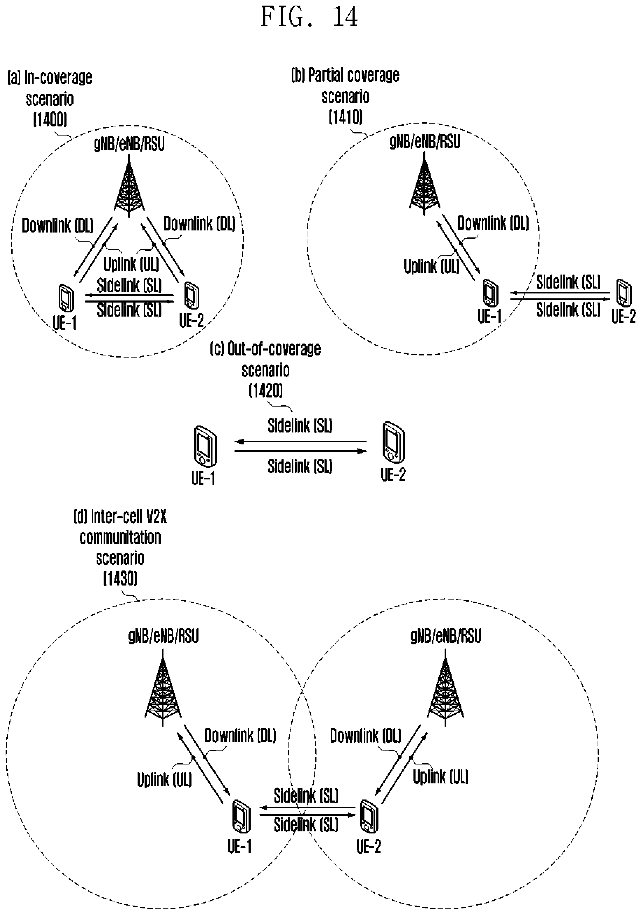

FIG. 14 is a diagram illustrating an example of V2X system according to an embodiment of the disclosure.

With reference to FIG. 14, FIG. 14(A) illustrates an example of the case (In-Converge (IC)) in which all V2X UEs (UE-1 and UE-2) are located within the coverage of a base station (1400). All V2X UEs may receive data and control information from the base station through downlink (DL) or transmit data and control information to the base station through uplink (UL). Herein, the data and control information may be data and control information for V2X communication. The data and control information may be data and control information for general cellular communication. In addition, the V2X UEs may transmit/receive data and control information for V2X communication through a sidelink (SL).

With reference to FIG. 14, FIG. 14(B) illustrates an example of the case in which UE-1 of the V2X UEs is located inside the coverage of the base station and UE-2 is located outside the coverage of the base station (1410). That is, FIG. 14(B) illustrates an example related to a partial coverage (PC) in which some V2X UEs (UE-2) are located outside the coverage of the base station (1410). The V2X UE (UE-1) located inside the coverage of the base station may receive data and control information from the base station through a downlink or transmit data and control information to the base station through an uplink. The V2X UE (UE-2) located outside the coverage of the base station cannot receive data and control information from the base station through a downlink and cannot transmit data and control to the base station through an uplink. The V2X UE (UE-2) may transmit/receive data and control information for V2X communication with the V2X UE (UE-1) through the sidelink.

With reference to FIG. 14, FIG. 14(C) illustrates an example of the case in which all V2X UEs are located outside the coverage (out-of coverage (OOC)) of the base station (1420). Accordingly, the V2X UEs (UE-1 and UE-2) cannot receive data and control information from the base station through the downlink and cannot transmit data and control information to the base station through the uplink. The V2X UEs (UE-1 and UE-2) may transmit/receive data and control information for V2X communication through the sidelink.

With reference to FIG. 14, FIG. 14(D) illustrates an example of a scenario in which the V2X UEs (UE-1, UE-2) located in different cells perform V2X communication (1430). Specifically, FIG. 14(D) illustrates the case in which the V2X UEs (UE-1, UE-2) access different base stations (RRC-connected state) or camp on the base stations (RRC connection-released state, that is, RRC idle state) (1430). In this case, the V2X UE (UE-1) may be a V2X transmission UE, and the V2X UE (UE-2) may be a V2X reception UE. Alternatively, the V2X UE (UE-1) may be a V2X reception UE, and the V2X UE (UE-2) may be a V2X transmission UE. The V2X UE (UE-1) may receive a system information block (SIB) from the base station to which UE-1 accesses (or UE-1 camps on) and the V2X UE (UE-2) may receive a SIB from another base station to which UE-2 accesses (or UE-2 camps on). In this case, the SIB may be an existing SIB or a separately defined SIB for V2X. In addition, the SIB information which the V2X UE (UE-1) receives and the SIB information which the V2X UE (UE-2) receives may different from each other. Accordingly, for V2X communication between UEs (UE-1, UE-2) located in different cells, information may be unified or information about this may be signaled and an additional method of interpreting the SIB information transmitted from each other cell may be required.

Although FIG. 14 illustrates a V2X system including V2X UEs (UE-1 and UE-2) for convenience of description, but the disclosure is not limited thereto, and communication may occur between more V2X UEs. In addition, an interface (downlink and uplink) between the base station and the V2X UEs may be referred to as a Uu interface, and the sidelink between the V2X UEs may be referred to as a PC5 interface. Accordingly, the terms may be interchangeably used in the disclosure. Meanwhile, in the disclosure, the UE may be a vehicle supporting vehicle-to-vehicle (V2V) communication, a vehicle or a handset of a pedestrian (for example, a smartphone) supporting vehicle-to-pedestrian (V2P) communication, a vehicle supporting vehicle-to-network (V2N) communication, or a vehicle supporting vehicle-to-infrastructure (V21) communication. In addition, in the disclosure, the UE may be a road side unit (RSU) having a UE function, an RSU having a base station function, or an RSU having some of the base station functions and some of the UE functions.

In addition, according to an embodiment of the disclosure, the base station may be a base station supporting both V2X communication and general cellular communication or a base station supporting only V2X communication. Herein, the base station may be a 5G base station (gNB), a 4G base station (eNB), or a RSU. Accordingly, in the disclosure, the base station may be referred to as a RSU.

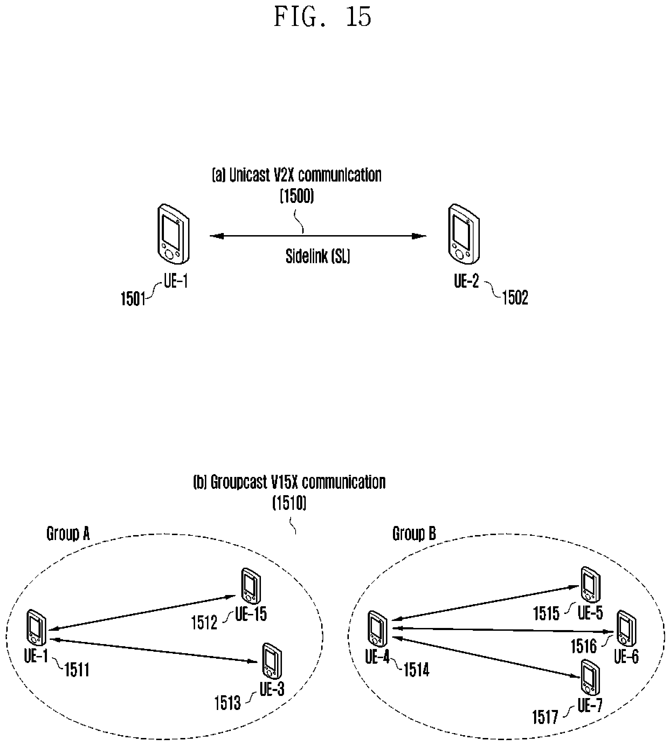

FIG. 15 is a diagram illustrating an example of a V2X communication method performed through a sidelink, according to an embodiment of the disclosure.

With reference to FIG. 15(A), a UE-1 201 (for example, a TX UE) and a UE-2 202 (for example, an RX UE) may communicate in one-to-one manner, which may be called unicast communication (1500).

With reference to FIG. 15(B), a TX UE and an RX UE may communicate in a one-to-many manner, which may be called groupcast or multicast (1510). In FIG. 15(B), UE-1 1511, UE-2 1512, and UE-3 1513 form one group (group A) and may perform groupcast communication, and UE-4 1514, UE-5 1515, UE-6 1516, and UE-7 1517 form another group (group B) and may perform groupcast communication (1510). Each UE may perform groupcast communication only within the group to which the UE belongs, and communication between different groups may be performed through unicast, groupcast, or broadcast communication. Although FIG. 15(B) illustrates that two groups (Group A, Group B) are formed, the disclosure is not limited thereto.

Meanwhile, although not illustrated in FIG. 15, the V2X UEs may perform broadcast communication. The broadcast communication means the case in which all V2X UEs receive data and control information transmitted by the V2X transmission UE through the sidelink. For example, in FIG. 15(B), in case where it is assumed that UE-1 1511 is a transmission UE for broadcast, all UEs (UE-2 1512, UE-3 1513, UE-4 1514, UE-5 1515, UE-6 1516, and UE-7 1517) receive data and control information transmitted by UE-1 1511.

In NR V2X, supporting the type in which a vehicle UE transmits data only to one specific node through unicast and the type in which the vehicle UE transmits data to a plurality of specific nodes through groupcast may be considered unlike in LTE V2X. For example, the unicast and groupcast technologies may be useful in consideration of a service scenario such as platooning, which is a technology in which two or more vehicles are connected through one network and move in a cluster form. Specifically, unicast communication may be needed by a leader node in the group connected through platooning to control one specific node, and group cast communication may be needed to simultaneously control groups including a plurality of specific nodes.

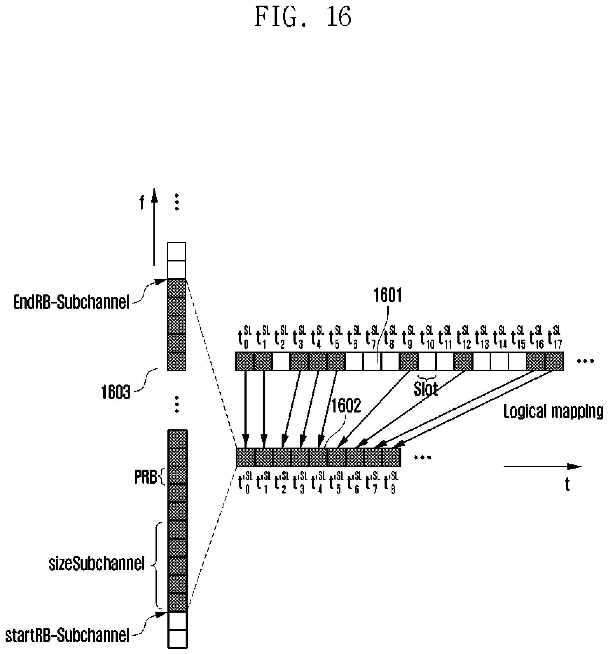

FIG. 16 is a diagram illustrating an example of a resource pool defined as a set of resources on time and frequency used for transmission and reception of a sidelink according to an embodiment of the disclosure. In the resource pool, a resource granularity of the time axis may be a slot. In addition, the resource granularity of the frequency axis may be a sub-channel including one or more physical resource blocks (PRBs). Although the disclosure describes an example of a case in which the resource pool is discontinuously allocated on time, the resource pool may be continuously allocated on time. In addition, although the disclosure describes an example of a case in which the resource pool is continuously allocated on a frequency, a method in which the resource pool is discontinuously allocated on a frequency is not excluded.

With reference to FIG. 16, a case 1601 in which the resource pool is discontinuously allocated on time is illustrated. FIG. 16 illustrates a case in which the resource granularity on time consists of slots. First, the sidelink slot may be defined in a slot used for uplink. Specifically, the length of a symbol used as a sidelink in one slot may be configured as sidelink bandwidth part (BWP) information. Accordingly, among the slots used for the uplink, slots in which the length of the symbol configured as the sidelink is not guaranteed may not be the sidelink slots. In addition, slots belonging to the resource pool are excluded from slots to which the sidelink synchronization signal block (S-SSB) is transmitted.

With reference to 1601, a set of slots that may be used as a sidelink on a time axis except for the slots as described above is illustrated as $(t_0^{SL}, t_1^{SL}, t_2^{SL}, \ldots)$. The shaded highlighted portion of 1601 represents the side link slots belonging to the resource pool. Sidelink slots belonging to the resource pool may be (pre-) configured with resource pool information through a bitmap. With reference to 1602, a set of sidelink slots belonging to the resource pool on a time axis is illustrated as $(t'^{SL}_0, t'^{SL}_1, t'^{SL}_2, \ldots)$. In the disclosure, the meaning of (pre-)configuration may refer to configuration information pre-configured in the UE and stored in advance, or may refer to a case in which the UE is configured in a cell-common manner from the base station. Here, the cell-common may mean that the UEs in the cell receive the same information configuration from the base station. In this case, as an example, a method for obtaining cell-common information by receiving a sidelink system information block (SL-SIB) from the base station may be considered by the UE. In addition, it may mean a case in which the UE is configured in a UE-specific manner after the RRC connection with the base station is established. Here, UE-specific may be replaced with the term UE-dedicated, and may mean that configuration information is received with a specific value for each UE. In this case, as an example, the UE may receive an RRC message from the base station and obtain UE-specific information.

In addition, (pre-)configuration may consider a method configured in the resource pool information and a method not configured in the resource pool information. In a case where the (pre-)configuration is configured in the resource pool information, except for the case where the UE is configured in a UE-specific manner after the RRC connection with the base station is established, all UEs operating in the corresponding resource pool may operate with common configuration information. However, in case where (pre-)configuration is not configured in the resource pool information, (pre-)configuration may be basically configured independently of the resource pool configuration information. For example, one or more modes may be (pre-)configured in a resource pool (e.g., A, B, and C), and the (pre-)configured information independently of the resource pool configuration information may indicate which mode (e.g., A, B, or C) to use among (pre-)configured modes in the resource pool.

With reference to 1603 of FIG. 16, a case in which the resource pool is continuously allocated on the frequency is illustrated. On the frequency axis, resource allocation may be configured with sidelink bandwidth part (BWP) information and may be constituted with units of sub-channels. The sub-channel may be defined as a resource granularity on the frequency including one or more physical resource blocks (PRBs). That is, the sub-channel may be defined as an integer multiple of the PRB. With reference to 1603, the sub-channel may include five consecutive PRBs, and a sub-channel size (sizeSubchannel) may be the size of five consecutive PRBs. However, the contents illustrated in the drawings are only an example of the disclosure, and the size of the sub-channel may be set to be different, and one sub-channel is generally constituted as a continuous PRB, but is not necessarily constituted as a continuous PRB. The sub-channel may be a basic unit of resource allocation for PSSCH. In 1603, startRB-Subchannel may indicate the start location of the sub-channel on a frequency in the resource pool. In a case where resource allocation includes units of sub-channels on the frequency axis, resources on the frequency may be allocated through configuration information on the resource block (RB) index (startRB-Subchannel) at which the sub-channel starts, information on how many PRBs the sub-channel consists of (sizeSubchannel), and the total number of sub-channels (numSubchannel). In this case, information on startRB-Subchannel, sizeSubchannel, and numSubchannel may be (pre-)configured as resource pool information on the frequency.

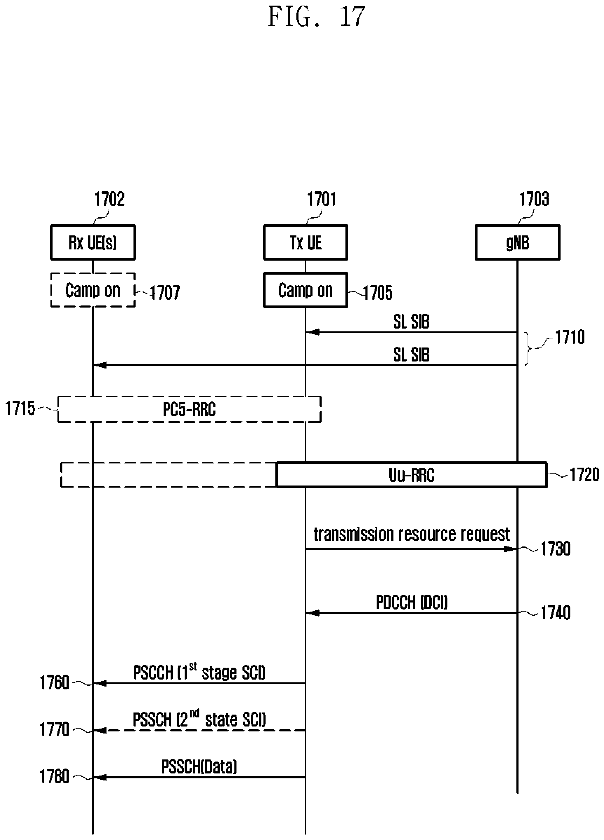

FIG. 17 is a diagram illustrating an example of a method in which a base station allocates a transmission resource in a sidelink according to an embodiment of the disclosure.

According to FIG. 17. a method for the base station to allocate transmission resources in the sidelink is hereinafter referred to as Mode 1. Mode 1 may be a scheduled resource allocation. Mode 1 may indicate a method in which the base station allocates resources used for sidelink transmission to RRC-connected UEs in a dedicated scheduling method. The method of Mode 1 may be effective for interference management and resource pool management because the base station may manage sidelink resources.

With reference to FIG. 17, a transmission UE 1701 may camp on a base station (cell) 1703 (1705). The camp on may refer to a state in which, for example, a UE in a standby state (RRC_IDLE) may select (or reselect) the base station (cell) as needed and receive system information or paging information, or the like.

On the other hand, in a case where a reception UE 1702 is located within the coverage of the base station (cell) 1703, the reception UE 1702 may camp on the base station (cell) 1703 (1707). In contrast, in a case where the reception UE 1702 is located outside the coverage of the base station (cell) 1703, the reception UE 1702 may not camp on the base station (cell) 1703.

In the disclosure, the reception UE 1702 represents a UE receiving data transmitted from the transmission UE 1701.

The transmission UE 1701 and the reception UE 1702 may receive a sidelink system information block (SL-SIB) from the base station 1703 (1710). The SL-SIB information may include sidelink resource pool information for sidelink transmission and reception, parameter configuration information for sensing operation, information for configuring sidelink synchronization, carrier information for sidelink transmission and reception at different frequencies, and the like.

When data traffic for the V2X is generated in the transmission UE 1701, the transmission UE 1701 may be RRC-connected to the base station 1703 (1720). Here, the RRC connection between the UE and the base station may be referred to as Uu-RRC. The Uu-RRC connection process (1720) may be performed before data traffic generation of the transmission UE 1701. In addition, in Mode 1, the transmission UE may perform transmission to the reception UE through a sidelink in a state in which the Uu-RRC connection process (1720) between the base station 1703 and the reception UE 1702 is performed. On the other hand, in Mode 1, even when the Uu-RRC connection process (1720) between the base station 1703 and the reception UE 1702 is not performed, the transmission UE may perform transmission to the reception UE through the sidelink.

The transmission UE 1701 may request a transmission resource capable of performing V2X communication with the reception UE 1702 from the base station (1730). In this case, the transmission UE 1701 may request a sidelink transmission resource from the base station 1703 by using a physical uplink control channel (PUCCH), an RRC message, or a medium access control (MAC) control element (CE). On the other hand, the MAC CE may be a buffer state report (BSR) MAC CE or the like in a new format (including information on an indicator indicating that it is at least a buffer state report for V2X communication, and the size of data buffered for D2D communication). In addition, the transmission UE 401 may request a sidelink resource through a scheduling request (SR) bit transmitted through the physical uplink control channel.

Next, the base station 1703 may allocate a V2X transmission resource to the transmission UE 1701. In this case, the base station may allocate transmission resources in a dynamic grant or configured grant method.

First, in the case of the dynamic grant method, the base station may allocate resources for TB transmission through downlink control information (DCI). The sidelink scheduling information included in DCI may include parameters related to transmission time and frequency allocation location information fields of initial transmission and retransmission. The DCI for the dynamic grant method may be CRC scrambled with SL-V-RNTI to indicate that it is the dynamic grant method.

Next, in the case of the configured grant method, the base station may periodically allocate resources for TB transmission by configuring a semi-persistent scheduling (SPS) interval through the Uu-RRC. In this case, the base station may allocate resources for one TB through the DCI. The sidelink scheduling information for one TB included in the DCI may include parameters related to transmission time and frequency allocation location information of initial transmission and retransmission resources. In a case where resources are allocated in the configured grant method, the transmission time point (occasion) and frequency allocation location of initial transmission and retransmission for one TB may be determined by the DCI, and resources for the next TB may be repeated at SPS intervals. The DCI for the configured grant method may be CRC scrambled with SL-SPS-V-RNTI to indicate that it is a configured grant method. In addition, the configured grant (CG) method may be divided into Type1 CG and Type2 CG. In the case of Type2 CG, resources configured by the configured grant may be activated/deactivated through the DCI.

Accordingly, in the case of Mode 1, the base station 1703 may instruct the transmission UE 1701 to schedule a sidelink communication with the reception UE 1702 through DCI transmission through a physical downlink control channel (PDCCH) (1740).

Specifically, the downlink control information (DCI) used by the base station 1703 for sidelink communication to the transmission UE 1701 may include, for example, DCI format 3_0 or DCI format 3_1. The DCI format 3_0 may be defined as a DCI for scheduling an NR sidelink in one cell, and the DCI format 3_1 may be defined as a DCI for scheduling an LTE sidelink in one cell.

In the case of broadcast transmission, the transmission UE 1701 may perform transmission without RRC configuration 1715 for the sidelink. Alternatively, in the case of unicast or groupcast transmission, the transmission UE 1701 may perform a one-to-one RRC connection with another UE. Here, the RRC connection between UEs may be referred to as a PC5-RRC 1715, distinguished from the Uu-RRC. In the case of groupcast, the PC5-RRC 1715 may be individually connected between the UEs in the group. With reference to FIG. 17, the connection of the PC5-RRC 1715 is illustrated as an operation after the transmission 1710 of the SL-SIB, but may be performed at any time before the transmission 1710 of the SL-SIB or before the transmission of the SCI.

Next, the transmission UE 1701 may transmit the SCI (1st stage) to the reception UE 1702 through a physical sidelink control channel (PSCCH) (1760). In addition, the transmission UE 1701 may transmit the SCI (2nd stage) to the reception UE 1702 through the PSSCH (1770). In this case, information related to resource allocation may be included in the 1st stage SCI and other control information may be included in the 2nd stage SCI. In addition, the transmission UE 1701 may transmit data to the reception UE 1702 through the PSSCH (1780). In this case, SCI (1st stage), SCI (2nd stage), and PSSCH may be transmitted together in the same slot.

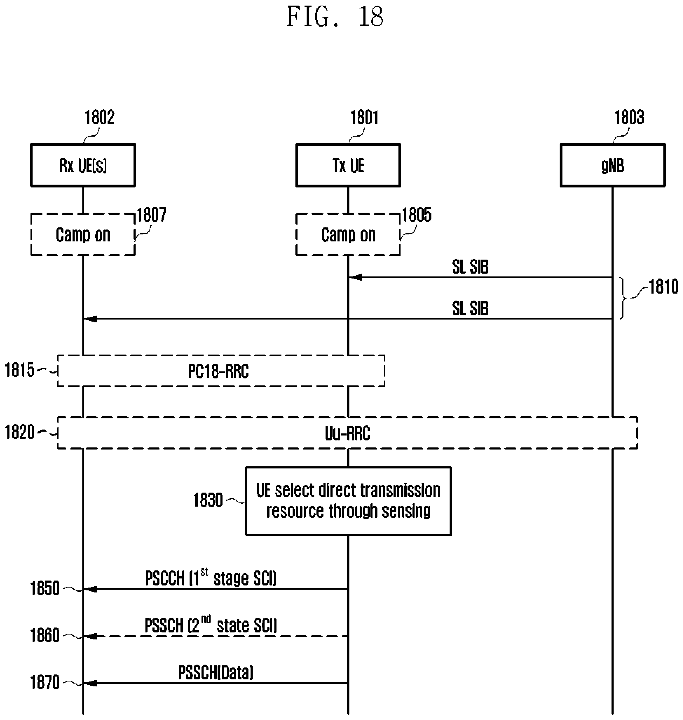

FIG. 18 is a diagram illustrating an example of a method in which a UE directly allocates a transmission resource of a sidelink through sensing in a sidelink according to an embodiment of the disclosure.

Hereinafter, a method in which the UE directly allocates the transmission resource of the sidelink through sensing in the sidelink is referred to as Mode 2. In the case of Mode 2, it may also be referred to as UE automatic resource selection. In Mode 2, the base station 1803 may provide a sidelink transmission/reception resource pool for V2X as system information, and a transmission UE 1801 may select a transmission resource according to a predetermined rule. Unlike Mode 1 in which the base station directly participates in resource allocation, FIG. 18 differs in that the transmission UE 1801 autonomously selects resources and transmits data based on a resource pool previously received through system information.

With reference to FIG. 18, the transmission UE 1801 may camp on the base station (cell) 1803 (1805). The camp on may refer to a state in which, for example, a UE in a standby state (RRC_IDLE) may select (or reselect) the base station (cell) as needed and receive system information or paging information, or the like. In addition, with reference to FIG. 18, unlike FIG. 17 described above, in the case of Mode 2, in a case where the transmission UE 1801 is located within the coverage of the base station (cell) 1803, the transmission UE 1801 may camp on the base station (cell) 1803 (1807). In contrast, in a case where the transmission UE 1801 is located outside the coverage of the base station (cell) 1803, the transmission UE 1801 may not camp on the base station (cell) 1803.

On the other hand, in a case where a reception UE 1802 is located within the coverage of the base station (cell) 1803, the reception UE 1802 may camp on the base station (cell) 1803 (1807). In contrast, in a case where the reception UE 1802 is located outside the coverage of the base station (cell) 1803, the reception UE 1802 may not camp on the base station (cell) 1803.

In the disclosure, the reception UE 1802 represents a UE receiving data transmitted from the transmission UE 1801.

The transmission UE 1801 and the reception UE 1802 may receive a sidelink system information block (SL-SIB) from the base station 1803 (1810). The SL-SIB information may include sidelink resource pool information for sidelink transmission and reception, parameter configuration information for sensing operation, information for configuring sidelink synchronization, carrier information for sidelink transmission and reception at different frequencies, or the like.

The difference between FIGS. 17 and 18 is that in FIG. 17, the base station 1803 and the transmission UE 1801 operate in an RRC connected state, whereas in FIG. 18, the UE may also operate in an idle mode 1820 (an RRC not connected state). In addition, even in the RRC connected state 1820, the base station 1803 may allow the transmission UE 1801 to autonomously select a transmission resource without directly participating in resource allocation. Here, the RRC connection between the transmission UE 1801 and the base station 1803 may be referred to as Uu-RRC 1820.

When data traffic for the V2X is generated in the transmission UE 1801, the transmission UE 1801 may receive configuration of resource pool from the base station 1803 through the received system information, and the transmission UE 1801 may directly select a resource in the time/frequency domain through sensing in the configured resource pool (1830). When the resource is finally selected, the selected resource is determined as a grant for the sidelink transmission.

In the case of broadcast transmission, the transmission UE 1801 may perform transmission without RRC configuration 1815 for the sidelink. Alternatively, in the case of unicast or groupcast transmission, the transmission UE 1801 may perform a one-to-one RRC connection with another UE. Here, the RRC connection between UEs may be referred to as a PC5-RRC 1815, distinguished from the Uu-RRC. In the case of groupcast, the PC5-RRC 1815 may be individually connected between the UEs in the group. With reference to FIG. 18, the connection of the PC5-RRC 1815 is illustrated as an operation after the transmission 1810 of the SL-SIB, but may be performed at any time before the transmission 1810 of the SL-SIB or before the transmission of the SCI.

Next, the transmission UE 1801 may transmit the SCI (1st stage) to the reception UE 1802 through PSCCH (1850). In addition, the transmission UE 1801 may transmit the SCI (2nd stage) to the reception UE 1802 through the PSSCH (1860). In this case, information related to resource allocation may be included in the 1st stage SCI and other control information may be included in the 2nd stage SCI. In addition, the transmission UE 1801 may transmit data to the reception UE 1802 through the PSSCH (1870). In this case, SCI (1ststage), SCI (2nd stage), and PSSCH may be transmitted together in the same slot.

Specifically, in FIGS. 17 and 18, sidelink control information (SCI) used by the transmission UEs 1701, 1801 for sidelink communication to the reception UEs 1702, 1802 is SCI (1st stage) and may be, for example, SCI format 1-A. In addition, there may be, for example, SCI format 2-A or SCI format 2-B as the SCI (2nd stage). In SCI (2nd stage), SCI format 2-A may be used by including information for PSSCH decoding when HARQ feedback is not used or when HARQ feedback is used and both ACK and NACK information are included. Alternatively, SCI format 2-B may be used by including information for PSSCH decoding when HARQ feedback is not used or when HARQ feedback is used and only NACK information is included. For example, SCI format 2-B may be limitedly used for groupcast transmission.

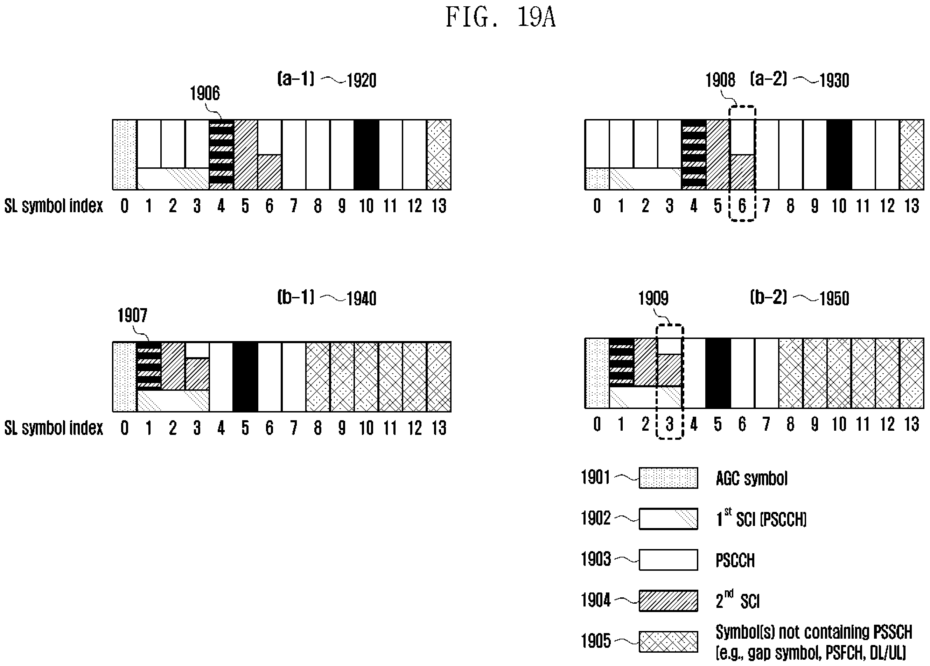

FIG. 19A is a diagram illustrating a mapping structure of sidelink physical channels mapped to one slot according to an embodiment of the disclosure.

Particularly, FIG. 19A illustrates an example in which physical channels of physical sidelink control channel (PSCCH), physical sidelink shared channel (PSSCH) and physical sidelink feedback channel (PSFCH) are mapped. In PSFCH, in case where HARQ feedback of the sidelink is activated in the higher layer, the resource of the PSFCH on time may be (pre-) configured with resource pool information. For example, the resource in terms of the time that the PSFCH is transmitted may be (pre-)configured with a value of one of every 0, 1, 2, and 4 slots. Here, the meaning of '0' may mean that the PSFCH resource is not used. In addition, 1, 2, and 4 may mean that PSFCH resources are transmitted for every 1, 2, and 4 slots, respectively. (A) illustrates a structure of a slot in which a PSFCH resource is not used (1920, 1930), and (B) illustrates a structure of a slot in which a PSFCH resource is configured and transmitted (1940, 1950). The PSCCH/PSSCH/PSFCH may be allocated to one or more sub-channels on frequency. For details on sub-channel allocation, refer to the description of FIG. 16.

Next, a time axis-based mapping of at least one of PSCCH, PSSCH and PSFCH is described. One or more symbols before the transmission UE transmits at least one of PSCCH, PSSCH and PSFCH to a corresponding slot may be used as a region 1901 for automatic gain control (AGC). Control information related to resource allocation to initial symbols of the slot may be transmitted to the 1st stage sidelink control information (SCI) through a PSCCH 1902, and other control information may be transmitted to the 2nd stage SCI 1904 from the resource region of a PSSCH 1903. In addition, data scheduled by the control information may be transmitted to the PSSCH 1903. In this case, the location on a time axis at which the 2nd stage SCI is transmitted may be mapped from the symbol at which a first PSSCH DMRS 1906 or 1907 is transmitted. The location on time at which the PSSCH DMRS is transmitted may vary depending on the PSSCH region allocated to the slot, as illustrated in (A) 1920 and (B) 1930.

1905 illustrates an example in which symbols for transmission of signals other than PSSCH are located in the last region of the slot. Specifically, in (A) (1920, 1930), there is one symbol corresponding to 1905, and in this case, the symbol corresponding to 1905 is used as a gap symbol. On the other hand, (B) (1940, 1950) illustrates a case where a plurality of symbols corresponding to 1905 are secured, and the corresponding symbol region may be used as a gap symbol, PSFCH symbol, and Downlink (DL)/Uplink (UL) symbol.

(a-1) (1920) and (b-1) (1940) illustrate an example of a case where data is transmitted together in the PSSCH region when the 2nd SCI is transmitted through PSSCH. In this way, in case where the 2nd SCI is transmitted through the PSSCH and data is transmitted together in the PSSCH region, the number $Q'_{SCI2}$ of coded bits or symbols in which the 2nd SCI is coded using channel coding is calculated as in Equation 6 below. In Equation 6 below, the symbol index $l$ may be defined based on the symbols used to transmit PSCCH/PSSCH, excluding the first symbol in the slot used for AGC.

[Equation 6]

$$Q'_{SCI2} = \min\left\{ \left\lceil \frac{(O_{SCI2} + L_{SCI2}) \cdot \beta^{SCI2}_{offset}}{Q^{SCI2}_m \cdot R} \right\rceil, \left\lceil \alpha \sum_{l=0}^{N^{PSSCH}_{symbol}-1} M^{SCI2}_{sc}(l) \right\rceil \right\} + \gamma$$

In Equation 6 above,

* $O_{SCI2}$ represents the number of bits of information included in the 2nd SCI. Depending on the 2nd SCI format used, the number of bits of information included may vary.
* $L_{SCI2}$ uses the number of CRC bits used in the 2nd SCI, and 24 bits may be used. SCI2

* $\beta^{SCI2}_{offset}$ is a parameter for controlling the number of coded bits of the 2nd SCI and may be determined using the bit field included in the 1st SCI.

* $Q^{SCI2}_m$ represents the modulation order used for 2nd SCI transmission. The corresponding value may be fixed to QPSK.
* $R$ represents the coding rate used for 2nd SCI transmission. The corresponding value may be determined using the bit field included in the 1st SCI, and the coding rate may be the same value as the coding rate used for data transmission.

* $M^{SCI2}_{sc}(l)$ is the number of resource element (RE) used for 2nd SCI transmission in the symbol index $l$, and may be defined as $M^{SCI2}_{sc}(l) = M^{PSSCH}_{sc}(l) - M^{PSCCH}_{sc}(l)$. Here, $M^{PSSCH}_{sc}(l)$ represents the number of REs in the bandwidth scheduled for PSSCH transmission in the symbol index $l$, and $M^{PSCCH}_{sc}(l)$ represents the number of subcarriers used for transmission of PSCCH and PSCCH DMRS in the symbol index $l$, that is, the number of REs.

* $N^{PSSCH}_{symbol}$ represents the number of symbols through which PSSCH is transmitted and may be defined as $N^{PSSCH}_{symbol} = N^{sh}_{symbol} - N^{PSFCH}_{symbol}$. Here, it may be defined as $N^{sh}_{symbol} = sl\text{-}lengthSymbols\text{-}2$, where sl-lengthSymbols is the number of symbols used as sidelinks, and one of the values of {7,8,9,10,11,12,13,14} may be configured via a higher layer. The reason for subtracting 2 from sl-lengthSymbols when determining the value of $N^{sh}_{symbol}$ is to take into account the first AGC symbol and last gap symbol of the slot. $N^{PSFCH}_{symbol}$ may be determined as $N^{PSFCH}_{symbol} = 3$ in the slot in which PSFCH is transmitted and as $N^{PSFCH}_{symbol} = 0$ in the slot in which PSFCH is not transmitted.
* $\alpha$ is a value used as a parameter that determines the amount by which the 2nd SCI is mapped, and may be a value configured via a higher layer.
* When the 2nd SCI is mapped, if there is a RE (i.e., a RE to which the 2nd SCI is not mapped) remaining in the RB of the (OFDM or SC-FDMA) symbol to which the last symbol among the (modulated) symbols generated by coding the 2nd SCI is mapped, $\gamma$ is a variable determined so that the 2nd SCI is mapped to all remaining REs of the corresponding RB.

Unlike (a-1) (1920) and (b-1) (1940), an example of a case where data is not transmitted together in the PSSCH region when the 2nd SCI is transmitted through PSSCH is illustrated by (a-2) (1930) and (b-2) (1950), respectively. In case where data is not transmitted in the PSSCH region and the 2nd SCI is mapped to the PSSCH region according to Equation 6 above, if the 2nd SCI is mapped to only portion of the frequency domain of the PSSCH in the last symbol transmitted, as illustrated in 1908 of (a-2) (1930) and 1909 of (b-2) (1950), power imbalance may occur between the corresponding symbol and the previous symbol(s) to which the 2nd SCI is mapped. In other words, in the previous symbol(s) to which the 2nd SCI is mapped, the 2nd SCI is transmitted entirely to the frequency domain of the PSSCH, but in the last symbol to which the 2nd SCI is transmitted, the 2nd SCI is mapped only to a portion of the frequency domain of the PSSCH, so the power of the inter-symbol transmission signal may become inconsistent. If such power imbalance occurs, difficulties may arise in transmitting and receiving signals. Therefore, in order to solve this power imbalance problem, a mapping method of the 2nd SCI may be operated differently for the case where data is transmitted together in the PSSCH region when the 2nd SCI is transmitted through PSSCH and the case where data is not transmitted together when the 2nd SCI is transmitted through PSSCH.

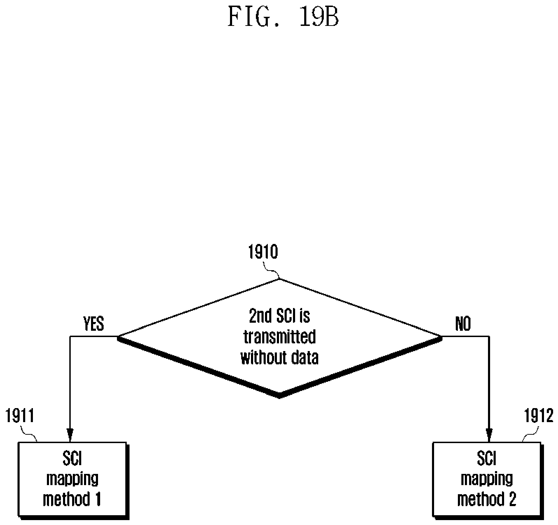

FIG. 19B is a diagram illustrating an example of a UE operation that operates a different mapping method for the 2nd SCI depending on whether control information is transmitted along with data or not when transmitting control information through the 2nd SCI according to an embodiment of the disclosure.

According to FIG. 19B, when the UE transmits control information through the 2nd SCI in operation 1910, in case where the control information is transmitted along with data, the UE moves to operation 1911 and may use mapping method 1 of the 2nd SCI. Specifically, in mapping method 1 of the 2nd SCI, the number of bits or symbols in which the 2nd SCI is coded using channel coding is determined according to Equation 6. In contrast, when the UE transmits control information through the 2nd SCI in operation 1910, in case where the control information is not transmitted along with data, the UE may use mapping method 2 of the 2nd SCI in operation 1912.

Mapping method 1 of the 2nd SCI is a mapping method to solve the power imbalance problem as described above, and various methods can be considered. As an example, by configuring a large value of $\beta_{offset}^{SCI2}$ in Equation 6, configuring the value of $\alpha$ to 1, and configuring the value of $\gamma$ to 0, the 2nd SCI may be transmitted to be mapped to all resource areas of the PSSCH. In this case, power imbalance may be resolved. In the disclosure, when the 2nd SCI is transmitted through PSSCH, the 2nd SCI mapping method for resolving power imbalance in case where data is not transmitted together in the PSSCH region is not limited to a specific method. However, in the disclosure, when the UE transmits control information through the 2nd SCI, an indication indicating whether control information is transmitted along with data or not may also indicate that a method in which the 2nd SCI is mapped to the PSSCH is different.

In the embodiment below, the disclosure specifically considers cases where data is transmitted together and cases where data is not transmitted together when control information is transmitted through 2nd SCI, and the disclosure has an object to provide detailed methods for indicating information when the UE performs transmission. In this case, the control information transmitted through the 2nd SCI may include information for inter-UE coordination, but this is only an example, and in the disclosure, the information shared for inter-UE coordination is not limited to specific information. As an example, inter-UE coordination information may be information related to resource allocation.

First, in a 2-1 embodiment, an overall procedure for when and how the inter-UE coordination may be performed in the sidelink will be described. In a 2-2 embodiment, the disclosure proposes a detailed operation of UE in a case where data is transmitted together and a case where data is not transmitted together when transmitting control information through 2nd SCI. In 2-3 to 2-7 embodiments below, the disclosure proposes various indication methods when a UE requests inter-UE coordination information to another UE through the 2nd SCI, or when the UE that has received the request transmits information corresponding to the request. It is noted that all embodiments disclosed in the disclosure can be used in combination with each other for specific technical purposes as long as they do not technically contradict each other.

<2-1 Embodiment>

In the 2-1 embodiment, a specific scenario for the inter-UE coordination in the sidelink is presented through drawings, and an overall procedure for when and how the inter-UE coordination may be performed will be described. Here, the UE may be a vehicle UE and a pedestrian UE.

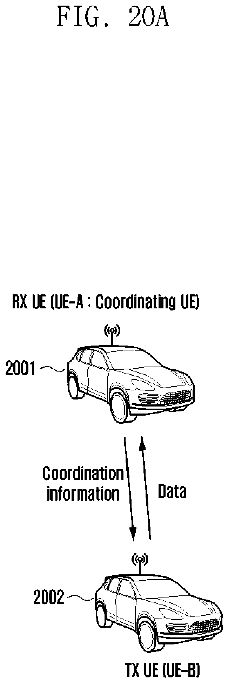

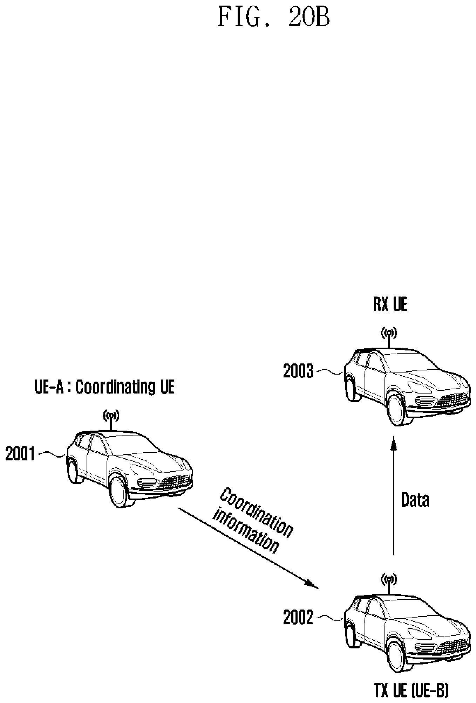

FIG. 20A and FIG. 20B are diagrams illustrating a scenario in which inter-UE coordination is performed according to an embodiment of the disclosure. In the disclosure, inter-UE coordination may mean providing an improved sidelink service by sharing information that may be helpful to UEs. Resource allocation information may be included as such information. For example, the UE performing transmission in the sidelink may allocate resources through a direct sensing and resource selection procedure (Mode2), or in a case where the UE performing transmission is within the coverage of the base station (BS), the resource may be allocated from the base station (Model). Alternatively/further, a method in which the UE receives resource allocation and resource allocation-related information from another UE through the inter-UE coordination may be considered. In contrast, the location information of the UE may be included as inter-UE coordination information. For example, in order for a specific UE to measure its absolute location, it is necessary to not only receive a signal for location measurement from another UE but also receive absolute location information of the other UE. In the disclosure, information shared for inter-UE coordination is not limited to specific information. More generally, the disclosure considers the case where information required between UEs is indicated through the 2nd SCI, and this information is called inter-UE coordination information.

With reference to FIG. 20A and FIG. 20B, a scenario in which inter-UE coordination is performed in a sidelink is illustrated. In FIG. 20A and FIG. 20B, UE-A 2001 corresponds to a UE providing inter-UE coordination information to UE-B 2002, and UE-B 2002 corresponds to a UE receiving inter-UE coordination information from UE-A 2001. FIG. 20A is a diagram illustrating an example in which UE-A 2001, which transmits inter-UE coordination information, corresponds to a data reception UE for UE-B 2002, which receives inter-UE coordination information. In contrast, FIG. 20B is a diagram illustrating an example in which any UE can become UE-A 2001 that transmits inter-UE coordination information. Specifically, in FIG. 20B, the case in which UE-A 2001 is not the reception UE 2003 for UE-B 2002 is illustrated. Through inter-UE coordination, UE-B may receive inter-UE coordination information from UE-A and receive help in performing sidelink transmission. In the disclosure, a UE that provides relevant information for inter-UE coordination is referred to as UE-A, and a UE that receives relevant information for inter-UE coordination is referred to as UE-B.

As illustrated in FIG. 20A and FIG. 20B, any UE(s) in the sidelink may be a UE providing inter-UE coordination information, such as the UE-A, and may be a UE receiving inter-UE coordination information, such as the UE-B. In addition, it is not necessary for all UEs to be a UE providing resource allocation information such as the UE-A or a UE receiving resource allocation information, such as the UE-B. Specifically, one or more UEs may have a qualification to perform the role of the UE-A (or the UE-B). However, not all UEs having the qualification to perform the role of the UE-A (or the UE-B) become the UE-A (or the UE-B). Accordingly, the UE-A (or the UE-B) may be selected as necessary. In other words, while not performing the role of the UE-A (or the UE-B), the role of the UE-A (or the UE-B) may be performed, and conversely, while performing the role of the UE-A (or the UE-B), the role of the UE-A (or the UE-B) may not be performed.

Accordingly, through the embodiment below, in a case where the inter-UE coordination is performed in the sidelink, conditions that may become the UE-A providing (or transmitting) inter-UE coordination information and conditions that may become the UE-B being provided (or receiving) with inter-UE coordination information are presented. First, as a condition of becoming the UE-A, at least one of the following conditions may be included. In the disclosure, the condition of becoming the UE-A providing inter-UE coordination information during the inter-UE coordination is not limited to the following conditions.

Condition to become UE-A during inter-UE coordination

* Condition 1: A UE has the capability to perform inter-UE coordination.
** In the above condition 1, the corresponding capability may mean capability capable of providing the corresponding information to another UE during the inter-UE coordination. In addition, in a case where the corresponding capability is defined, the UE may report the corresponding capability to the base station (BS) or another UE. For example, the UE may perform an operation of reporting the UE capability regarding whether the inter-UE coordination is supported to the base station through Uu-RRC or to another UE through PC5-RRC. Accordingly, the base station may determine whether the inter-UE coordination is possible by determining the capability of the corresponding UE. In addition, through this, the UE may determine whether the inter-UE coordination with the UE is possible by determining the capability of the other UE, and may determine whether to request inter-UE coordination information.
* Condition 2: Inter-UE coordination is enabled on a UE.
** In the condition 2, whether the inter-UE coordination is enabled/disabled may be configured via a higher layer. As an example, whether the inter-UE coordination is enabled/disabled may be (pre-)configured. In this case, the (pre-)configuration may be configured for each resource pool. In the disclosure, the method of determining whether the inter-UE coordination is supported is not limited thereto. For example, a method of signaling enabling and disabling through PC5-RRC, sidelink MAC-CE, SCI (1st SCI or 2nd SCI), or the like, may be considered. In addition, it is also possible to signal the enabling or disabling using a combination of one or more of the above methods.
* Condition 3: A UE is configured to be UE-A in inter-UE coordination.
** The condition 3 may be configured via a higher layer. As an example, through (pre-)configuration, it may be configured whether a UE is UE-A. In this case, (pre-)configuration may be configured for each resource pool. In the disclosure, the method in which the UE is configured to the UE-A is not limited thereto. For example, a method configured to serve as the UE-A through PC5-RRC, sidelink MAC-CE, SCI (1st SCI or 2nd SCI), or the like, may be considered. In addition, it is also possible to be configured to play the role of UE-A using a combination of one or more of the above methods.

** The condition 3 may be a case in which a specific UE is configured as a UE providing the inter-UE coordination information in the groupcast. In this case, the corresponding UE may be a leader UE of the group.

* Condition 4: A UE is a reception (data or/and control information) UE intended by UE-B.

** According to the condition 4, only a UE that receives a signal transmitted from the UE-B may become the UE-A.

* Condition 5: It is determined that a UE has a poor reception state of a signal transmitted by UE-B.

** According to the condition 5, in a case where the reception state is not good as a result of receiving the signal transmitted from the UE-B, the specific UE may become the UE-A and provide inter-UE coordination information to the UE-B. Accordingly, the condition 5 may be applied along with the condition 4. In this case, the reception state of the signal transmitted from the UE-B may be determined to be poor if an error rate of the packet is above or exceeds a certain threshold or if reception of consecutive packets fails. The error rate of the packet may be a more statistical criterion, and the failure to receive consecutive packets may be the case in which X ($\geq$1) packets fail to receive consecutively. For example, failure to receive may mean failing to decode the PSCCH or PSSCH, and, for example, may mean failing a CRC test related to data or control information transmitted on the PSCCH or PSSCH. Here, the packet may mean PSCCH or PSSCH, or PSCCH and PSSCH. In the disclosure, the method for a UE to determine that the reception state of a signal to the UE-B is not good is not limited thereto.

* Condition 6: A UE has sufficient power to perform inter-UE coordination.

** The condition 6 is caused by the fact that more power consumption may occur because the UE-A should provide related information to the UE-B by performing the inter-UE coordination. Accordingly, it is possible to limit that only the UE configured to full sensing in the Mode2 operation may become the UE-A. In other words, a UE operating in power saving mode in Mode 2 operation may not meet condition 6. Here, the power saving mode may be configured to operate by random selection or partial sensing. Alternatively, it may be limited to be the UE-A only in case where the battery level of the UE is higher than the set threshold value. In the disclosure, the method in which the UE is configured to the UE-A according to the power state is not limited thereto.

* Condition 7: A UE has been triggered to provide information for inter-UE coordination.

** In condition 7 above, triggered to provide information for the inter-UE coordination and the UE becomes UE-A may mean that the UE-B transmits a signal requesting the inter-UE coordination information to the UE-A and the UE receives the signal. Alternatively, a time point at which a specific UE provides information for the inter-UE coordination is defined, and at this time point, the specific UE may operate as the UE-A. In the former case, it may be aperiodic for the UE-A to provide the inter-UE coordination information, and in the latter case, it may be periodic. In the former case, a method in which the UE-B requests the inter-UE coordination information to the UE-A through PC5-RRC, sidelink MAC-CE, SCI (1st SCI or 2nd SCI), or the like, may be considered. It may also be performed with a combination of one or more of the above requested methods.

* Condition 8: A UE has established a unicast link with the UE-B.

** According to the condition 8, inter-UE coordination may be supported only on unicast. In a case where the UE-A and the UE-B establish PC5-RRC, information exchange between UEs may be performed through the PC5-RRC or sidelink MAC-CE.

* Condition 9: It is determined that a UE is in communication range with UE-B.

** According to the condition 9, only in case where the distance from UE-B is measured and it is determined to be in the communication range with UE-B, a UE can become UE-A and provide inter-UE coordination information to UE-B. This is due to the fact that in case where the distance between UE-A and UE-B is longer than the communication range, even if UE-A provides inter-UE coordination information to UE-B, the corresponding information may not be valid. In this case, UE-A may calculate the distance based on the zone ID information transmitted by UE-B or the location information of UE-B, and UE-A may also determine whether to provide inter-UE coordination information based on information about the communicable distance transmitted by UE-B (for example, communication range requirement information).

Next, as a condition of becoming the UE-B receiving inter-UE coordination information, at least one of the following conditions may be included. In the disclosure, the condition of becoming the UE-B during the inter-UE coordination is not limited to the following conditions.

Condition to become UE-B during inter-UE coordination

* Condition 1: Inter-UE coordination is enabled on a UE.

** In the condition 1, whether the inter-UE coordination is enabled(or supported)/disabled may be configured via a higher layer. As an example, whether to enable inter-UE coordination may be (pre-)configured. In this case, the (pre-)configuration may be configured for each resource pool. In the disclosure, the method of determining whether the inter-UE coordination is enabled is not limited thereto. For example, a method of signaling enabling and disabling through PC5-RRC, sidelink MAC-CE, SCI (1st SCI or 2nd SCI), or the like, may be considered. In addition, the signaling enabling and disabling may be performed in a combination of one or more of the above methods.

* Condition 2: A UE is configured to be UE-B in inter-UE coordination.

** The condition 2 may be configured via a higher layer. As an example, whether a UE is UE-B may be configured through (pre-)configuration. In this case, the (pre-)configuration may be configured for each resource pool. In the disclosure, the method in which the UE is configured to the UE-B is not limited thereto. For example, a method configured to play a role of the UE-B through PC5-RRC, sidelink MAC-CE, SCI (1st SCI or 2nd SCI), or the like, may be considered. In addition, it may consist of a combination of one or more of the configured methods.

* Condition 3: A UE doesn't have sufficient power.

** The condition 3 is caused by the fact that the resource allocation information is provided from the UE-A through the inter-UE coordination and the UE-B does not perform sensing for resource allocation, thereby reducing power consumption. Accordingly, it is possible to limit that the UE configured to partial sensing or random selection in the Mode2 operation may become the UE-B. Alternatively, it may be limited to be the UE-B only in case where the battery level of the UE is lower than the set threshold value. In the disclosure, the method in which the UE is configured to the UE-B according to the power state is not limited thereto.

* Condition 4: A UE cannot perform sensing or has insufficient sensing results.

** In the condition 4, as a case in which the UE cannot perform sensing or may have insufficient sensing results, for example, a case in which the UE performs sidelink discontinuous reception (DRX) may be considered. It may be assumed that the UE cannot perform sensing in the DRX inactive period. In a case where the UE-B performs sidelink DRX, UE-A needs to transmit information for the inter-UE coordination (resource allocation-related information) to the DRX active period of the UE-B. This is to ensure that the UE-B may successfully receive the inter-UE coordination information provided by the UE-A.

* Condition 5: A UE has established a unicast link with the UE-B.

** According to the condition 5, inter-UE coordination may be supported only on unicast. In a case where the UE-A and the UE-B establish PC5-RRC, information exchange between UEs may be performed through the PC5-RRC or sidelink MAC-CE.

* Condition 6: A UE requests inter-UE coordination information from another UE.

** According to the condition 6, in case where a specific UE requests inter-UE coordination information from another UE, that is, UE-A, or after requesting inter-UE coordination information, the specific UE may become UE-B. Additionally, the specific UE may expect to receive inter-UE coordination information from another UE, that is, UE-A.

<2-2 Embodiment>

A 2-2 embodiment presents specific UE operations for cases where control information is transmitted along with data and cases where control information is not transmitted along with data when transmitting control information through the 2nd SCI.

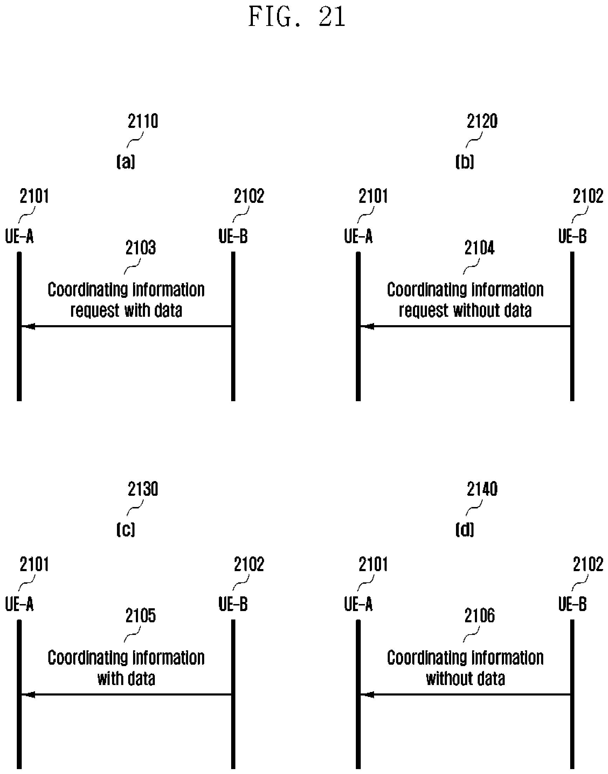

FIG. 21 illustrates an example of a method in which a UE requests inter-UE coordination information from another UE through a 2nd SCI, or a UE that receives it transmits the requested information according to an embodiment of the disclosure. First, in case of performing the operation through the 2nd SCI, since the 2nd SCI is transmitted through PSSCH, it needs to perform an operation of receiving resources for transmitting PSSCH from the base station or allocating resources through direct sensing by the UE, as described in FIG. 17 or FIG. 18. Specifically, when resource allocation for PSSCH transmission is determined, control information including resource allocation information may be indicated through the 1st SCI. More specifically, the fields included in the control information transmitted through 1st SCI are shown in Table 1 below and are named SCI format 1-A.

[Table 1]

| Field | Bits |
|---|---|
| Priority | 3 |

(continued)

| Field | Bits |
|---|---|
| Frequency resource assignment | $\log_2\left(\dfrac{N_{\mathrm{subChannel}}^{\mathrm{SL}}\left(N_{\mathrm{subChannel}}^{\mathrm{SL}}+1\right)}{2}\right)$  if $N_{MAX}$=2 <br><br> $\left\lceil\log_2\left(\dfrac{N_{\mathrm{subChannel}}^{\mathrm{SL}}\left(N_{\mathrm{subChannel}}^{\mathrm{SL}}+1\right)\left(2N_{\mathrm{subChannel}}^{\mathrm{SL}}+1\right)}{6}\right)\right\rceil$  if $N_{MAX}$=3 |
| Time resource assignment | 5 *if* $N_{MAX}$=2 and 9 *if* $N_{MAX}$=3 |
| Resource reservation period | $\left\lceil\log_2 N_{\mathrm{rsv\_period}}\right\rceil$ |
| DMRS pattern | $\left\lceil\log_2 N_{\mathrm{pattern}}\right\rceil$ |
| 2nd stage SCI format | 2 |
| Betta offset indicator | 2 |
| Number of DMRS port | 1 |
| MCS | 5 |
| Additional MCS table indicator | 0 ~ 2 depending on additional MCS table configuration |
| PSFCH overhead indication | 0 or 1 depending on PSFCH period |
| Reserved | 2~4 by high layer parameter *sl-NumReservedBits* |

Next, additional control information required for PSSCH decoding may be indicated through the 2nd SCI. First, there is a 2nd SCI format defined as SCI format 2-A, and the fields included in it are shown in Table 2 below.

[Table 2]

| Field | Bits |
|---|---|
| HARQ process ID | 4 |
| New data indicator | 1 |
| Redundancy version | 2 |
| Source ID | 8 |
| Destination ID | 16 |
| HARQ feedback enable/disable indicator | 1 |
| Cast type indicator | 2 |
| CSI request | 1 |

Next, there is a 2nd SCI format defined as SCI format 2-B, and the fields included in it are shown in Table 3 below. Unlike SCI format 2-A in Table 2, SCI format 2-B in Table 3 is an SCI format that can be applied when NACK only feedback is used in a group cast environment. The UE that has received SCI format 2-B measures the distance from the transmission UE using the Zone ID field included in Table 3, and may not perform HARQ feedback if the distance exceeds the value corresponding to the Communication range requirement field included in Table 3.

[Table 3]

| Field | Bits |
|---|---|
| HARQ process ID | 4 |

(continued)

| Field | Bits |
| --- | --- |
| New data indicator | 1 |
| Redundancy version | 2 |
| Source ID | 8 |
| Destination ID | 16 |
| HARQ feedback enable/disable indicator | 1 |
| Zone ID | 12 |
| Communication range requirement | 4 |

Therefore, in case where the UE requests inter-UE coordination information from another UE using 2nd SCI, or the UE that has received the corresponding request provides the requested information, the SCI format 2-A and SCI format 2-B defined above are used or a new 2nd SCI format may be defined.

(a) (2110) of FIG. 21 corresponds to a case (2103) where, when UE-B 2102 requests inter-UE coordination information from UE-A 2101 using the 2nd SCI, the request is transmitted along with data in the PSSCH region. When UE-A 2101 provides inter-UE coordination information to UE-B 2102, in case where information is provided in a manner that provides information periodically at a designated time, rather than a method requested by UE-B 2102, the corresponding operation may not be considered. For detailed UE operations for (a) (2110) of FIG. 21, refer to a 2-3 embodiment below.

(b) (2120) of FIG. 21 corresponds to a case (2104) where, when UE-B 2102 requests inter-UE coordination information from UE-A 2101 using the 2nd SCI, the request is not transmitted along with data in the PSSCH region. When UE-A 2101 provides inter-UE coordination information to UE-B 2102, in case where information is provided in a manner that provides information periodically at a designated time, rather than a method requested by UE-B 2102, the corresponding operation may not be considered. For detailed UE operations for (b) (2120) of FIG. 21, refer to a 2-4 embodiment below.

(c) (2130) of FIG. 21 corresponds to a case (2105) where when UE-A 2101 provides inter-UE coordination information to UE-B 2102 using the 2nd SCI, the coordination information is transmitted along with data in the PSSCH region. For detailed UE operations for (c) (2130) of FIG. 21, refer to a 2-5 embodiment below.

(d) (2140) of FIG. 21 corresponds to a case (2106) where when UE-A 2101 provides inter-UE coordination information to UE-B 2102 using the 2nd SCI, the coordination information is not transmitted along with data in the PSSCH region. For detailed UE operations for (d) (2140) of FIG. 21, refer to a 2-6 embodiment below.

In the disclosure, in case where UE-B 2102 requests inter-UE coordination information from UE-A 2101 through 2nd SCI, for a case where the request is transmitted along with data as illustrated in (a) (2110) of FIG. 21, and a case where the request is not transmitted along with data as illustrated in (b) (2120) of FIG. 21, a method for a UE to indicate this is referred to a 2-7 embodiment below.

In addition, in the disclosure, in case where UE-A 2101 provides inter-UE coordination information to UE-B 2102 through 2nd SCI, for a case where the information is transmitted along with data as illustrated in (c) (2130) of FIG. 21, and a case where the information is not transmitted along with data as illustrated in (d) (2140) of FIG. 21, a method for a UE to indicate this is referred to a 2-7 embodiment below.

The field requesting inter-UE coordination information can be 1 bit and can indicate whether the corresponding information is requested or not. In contrast, the field providing inter-UE coordination information may include one or more fields depending on which inter-UE coordination information is indicated, and may include a large number of bits depending on the characteristics of the provided inter-UE coordination information. For example, the inter-UE coordination information may be information related to resource allocation. In case where the inter-UE coordination information is information related to resource allocation and the corresponding information indicates whether there is a resource conflict identified from the 1st SCI received by UE-A from UE-B, the field providing the inter-UE coordination information is 1 bit, and may indicate whether a resource conflict occurs. On the other hand, in case where the inter-UE coordination information is the information related to resource allocation and the corresponding information is resource set information that UE-A is preferred or non-preferred for transmission by UE-B, the number of bits may vary depending on the amount of resources included in the resource set. For example, in case where the preferred or non-preferred resource set information is the resource finally selected from the candidate resources selected by UE-A through Mode 2 operation, as presented in Table 1, fields such as Frequency resource assignment, Time resource assignment, and Resource reservation period and the corresponding information amount may be used to indicate preferred or non-preferred resource set information. In contrast, in case where the preferred or non-preferred resource set information represents all candidate resources selected by UE-A through Mode 2 operation, a greater number of bits may be needed to indicate this.

The disclosure focuses on a method for requesting or providing inter-UE coordination information using 2nd SCI, but is not limited thereto. In case of requesting or providing inter-UE coordination information, one or more of the following may be considered as information that can be included in the 2nd SCI. A field that requests or provides inter-UE coordination information may be included together in one 2nd SCI format, or a field that requests inter-UE coordination information and a field that provides inter-UE coordination information may be separated and included in different 2nd SCI formats. However, fields such as Zone ID or Communication range requirement below may be valid information in case of requesting or providing inter-UE coordination information. Thus, these fields may be used in a case where the fields requesting or providing inter-UE coordination information are included together in one 2nd SCI format, and may be used in a case where the field requesting inter-UE coordination information and the field providing inter-UE coordination information are separated and included in different 2nd SCI formats.

* Inter-UE coordination request information,
** In the case of inter-UE coordination request information, whether or not the information is requested may be indicated with 1 bit for one inter-UE coordination request.
* Inter-UE coordination information
** It is noted that in the case of inter-UE coordination information, it may consist of one or more fields depending on which inter-UE coordination information is indicated, and the amount of information may vary depending on the characteristics of the inter-UE coordination information provided.
** In case where the inter-UE coordination information is resource allocation-related information, it may be included as an information specific field indicating what kind of resource allocation-related information it is. For example, the inter-UE coordination request information may indicate whether there is a resource conflict identified by UE-A from the 1st SCI received from UE-B in the first method, or whether UE-A is preferred or non-preferred resource set information for UE-B's transmission in the second method.
** In case where the inter-UE coordination information is information related to resource allocation, in the case of the first method, information indicating whether there is an expected resource conflict or a conflict that has already been detected may be included as a field. In contrast, in the case of the second method, information indicating whether it is preferred resource set information or non-preferred resource set information may be included as a field.
** In case where the inter-UE coordination information is location information of the UE, the absolute location of a specific UE may be included and provided as a field. In this case, the absolute location may be provided by sampling absolute location information for (x,y,z) coordinates. For example, sampling may mean converting absolute location values for (x,y,z) coordinates into bit information that can be used for signaling.
*Zone ID
** In case where the above information is included and transmitted in the inter-UE coordination information, the UE that has received the 2nd SCI can measure the approximate distance to the transmission UE using the included Zone ID field.
* Communication range requirements,
** In case where the above information is included and transmitted in the inter-UE coordination information, if the measured distance exceeds the value corresponding to the Communication range requirement field, the inter-UE coordination information may not be requested or provided.

It is noted that in the disclosure, in case of requesting or providing the inter-UE coordination information, the information that can be included in the 2nd SCI is not limited to the information presented above.

If requests for the inter-UE coordination information and transmission of the inter-UE coordination information are performed only in case where there is data to transmit, a large delay may occur in the UE finally receiving the inter-UE coordination information. Therefore, in order to shorten this delay time, a method for transmitting control information through the 2nd SCI is needed even if there is no data to transmit.

<2-3 Embodiment>

In the 2-3 embodiment, when a UE requests inter-UE coordination information from another UE using 2nd SCI, information included in the 2nd SCI in case where the request is transmitted along with data in the PSSCH region and a method for indicating it are described. The corresponding case is illustrated in (a) (2110) of FIG. 21. In this embodiment, when requesting inter-UE coordination information through the 2nd SCI, in case where the request is included in the 2nd SCI and transmitted along with data in the PSSCH region, a method of using the existing 2nd SCI format, SCI format 2-A or SCI format 2-B, as shown in Tables 2 and 3, or a new 2nd SCI format may be considered.

First, using the existing 2nd SCI format, SCI format 2-A or SCI format 2-B, the UE may request the inter-UE coordination information from another UE. In this case, it is assumed that the 2nd SCI is transmitted along with data in the PSSCH region. The field requesting the inter-UE coordination information may indicate whether the information is requested or not with 1 bit. Since the 2nd SCI is transmitted along with data in the PSSCH region, control information for data transmission may be indicated through SCI format 2-A or SCI format 2-B. Therefore, in case of using the existing 2nd SCI format, SCI format 2-A or SCI format 2-B, the UE requesting the inter-UE coordination information adds the corresponding field to the existing 2nd SCI format and transmits it, and the UE receiving the existing 2nd SCI format must be able to know whether the corresponding field is included in the 2nd SCI and transmitted.

Specifically, when one or more of the following conditions are satisfied, the UE requesting the inter-UE coordination information will be able to transmit the corresponding field by adding the field to the existing 2nd SCI format. In addition, when one or more of the following conditions are satisfied, the UE receiving the inter-UE coordination information may determine that the corresponding field has been added to the existing 2nd SCI format and receive the corresponding information.

* When inter-UE coordination is enabled via a higher layer,
** When a UE has a capability to request or provide inter-UE coordination information,

In the above, the fact that the inter-UE coordination is enabled via the higher layer may mean that the inter-UE coordination is enabled through (pre-)configuration. The corresponding (pre-)configuration may also be configured to the resource pool. In this case, when the inter-UE coordination is enabled to the resource pool, the UE operating in the pool may transmit and receive the 2nd SCI by adding the inter-UE coordination information to the existing 2nd SCI format. In contrast, enabling the inter-UE coordination via the higher layer may mean that the inter-UE coordination is enabled through PC5-RRC or sidelink MAC-CE. This case may be applied in a sidelink unicast environment, and when the inter-UE coordination is enabled through this, the UE may transmit and receive the 2nd SCI by adding the inter-UE coordination information to the existing 2nd SCI format.

Next, using a new 2nd SCI format, a UE may request the inter-UE coordination information from another UE. In this case, it is assumed that 2nd SCI according to the new 2nd SCI format is transmitted along with data in the PSSCH region. The UE requesting the inter-UE coordination information may indicate that a new 2nd SCI format is used in the 1st SCI shown in Table 1 by using the 2nd stage SCI format field shown in Table 4 below, and the UE that has received the 1st SCI may identify from the indication that the new 2nd SCI format is used. SCI format 2-C, included as '01' in Table 4, is an example of a field used to transmit data together and request the inter-UE coordination information, which may also be indicated through '11', and it may be defined with a name other than SCI format 2-C.

[Table 4]

| Value of 2nd-stage SCI format field | 2nd-stage SCI format |
|---|---|
| 00 | SCI format 2-A |
| 01 | SCI format 2-B |
| 10 | SCI format 2-C(with data, request for coordination information) |
| 11 | Reserved |

Additionally, in case of requesting the inter-UE coordination information through a new 2nd SCI format, in case where the 2nd SCI is transmitted along with data in the PSSCH region, the field requesting the inter-UE coordination information included in the 2nd SCI may indicate whether the corresponding information is requested with 1 bit. Further, as shown in Tables 2 and 3, the fields included in the existing 2nd SCI format, SCI format 2-A or SCI format 2-B can also be included in the new 2nd SCI format. However, in the disclosure, the information that can be included in the new 2nd SCI format is not limited thereto.

<2-4 Embodiment>

In the 2-4 embodiment, when a UE requests inter-UE coordination information from another UE using 2nd SCI, information included in the 2nd SCI in case where the request is not transmitted along with data in the PSSCH region and a method for indicating it are described. The corresponding case is illustrated in (b) (2120) of FIG. 21. In this embodiment, in case of requesting inter-UE coordination information through the 2nd SCI, in case where the 2nd SCI is not transmitted along with data in the PSSCH region, a method of using a new 2nd SCI format may be considered.

Since the 2nd SCI is not transmitted along with data in the PSSCH region, there is no need to use the existing SCI format 2-A or SCI format 2-B, which includes control information for data transmission. The UE requesting the inter-UE coordination information adds the inter-UE coordination information request field to a new 2nd SCI format and transmits it, and the UE receiving the new 2nd SCI format may identify the inter-UE coordination information by interpreting the new 2nd SCI format. The UE requesting the inter-UE coordination information may indicate that a new 2nd SCI format is used by including the 2nd stage SCI format field in Table 5 below in the 1st SCI shown in Table 1, and the UE that has received the 1st SCI may identify from the 1st SCI that the use of the new 2nd SCI format is indicated. The SCI format 2-C, included as '01' in Table 5, is an example of a field used to request the inter-UE coordination information without data being transmitted, which may also be indicated through '11', and it may be defined with a name other than SCI format 2-C.

[Table 5]

| Value of 2nd-stage SCI format field | 2nd-stage SCI format |
| --- | --- |
| 00 | SCI format 2-A |
| 01 | SCI format 2-B |
| 10 | SCI format 2-C(without data, request for coordination information) |
| 11 | Reserved |

Alternatively, it is possible to indicate that the new 2nd SCI format is used using a field other than the 2nd stage SCI format field among the fields included in the 1st SCI in Table 1. For example, since data is not transmitted, it is also possible to indicate that the new 2nd SCI format is used using the MCS field included in the 1st SCI. In this case, in case where the MCS field included in the 1st SCI indicates a reserved value on the MCS table, it may be interpreted as indicating that the new 2nd SCI format is used. Alternatively, the MCS field included in the 1st SCI may indicate whether the new 2nd SCI format is used, instead of indicating the MCS defined on the existing MCS table. Whether the MCS field included in the 1st SCI indicates an MCS for transmitting data defined in the MCS table or that the new 2nd SCI format is used may be determined according to predefined conditions or configured through higher layer signaling. In case where the MCS field included in the 1st SCI is used to indicate whether the new 2nd SCI format is used, whether the specific MCS field value indicates that the new 2nd SCI format is used or the existing 2nd SCI format is used may be predefined or configured through higher layer signaling.

Alternatively, the 2nd SCI format indicated by each value of the 2nd stage SCI format field may be configured in advance. In this case, the 2nd SCI format indicated by each value of the 2nd stage SCI format field may be (pre-) configured. Alternatively, it can be configured through Uu-RRC, PC5-RRC signaling, sidelink MAC CE, etc. In this case, the UEs that request and receive the inter-UE coordination information can receive the same configuration information for each value of the 2nd stage SCI format field. For example, in case where the 2nd stage SCI format field is '00' through higher layer signaling, the UE configured to indicate SCI format 2-C transmits the 1st SCI by configuring the 2nd stage SCI format field included in the 1st SCI to '00', and then, may transmit the 2nd SCI according to SCI format 2-C (without data) on the PSSCH.

Additionally, in case of requesting the inter-UE coordination information through the new 2nd SCI format, in case where the 2nd SCI is not transmitted along with data in the PSSCH region, whether the inter-UE coordination information is requested with a 1-bit field requesting the inter-UE coordination information may be indicated. Further, at least one of the following information may be additionally included in the new 2nd SCI format.

* Zone ID
* Communication range requirement

In case where the above information is additionally included and transmitted, the UE that has received the corresponding 2nd SCI measures the distance to the transmission UE using the included Zone ID field, and if the distance exceeds the value corresponding to the Communication range requirement field, the inter-UE coordination information may not be provided. This is a method that determines that the distance between the transmission UE and the reception UE is long and that providing the corresponding information is invalid. The amount of information used in the field may be the same as the value shown in Table 3, but the disclosure is not limited to this value. Also, it is noted that the information that can be included in the new 2nd SCI format in the disclosure is not limited thereto.

Additionally, since the new 2nd SCI format is not for scheduling data transmission, the field for data scheduling on the PSSCH in Table 2 or 3 (for example, redundancy version, new data indicator, etc.) may be configured to a predetermined value (for example, '0', '00') or may not be included in the new 2nd SCI format. Alternatively, at least one piece of information among inter-UE coordination information request, zone ID, communication range requirement, and UE location information may be indicated through the field for data scheduling (instead of adding the field to the new 2nd SCI format).

<2-5 Embodiment>

In the 2-5 embodiment, when a UE provides inter-UE coordination information from another UE using 2nd SCI, information included in the 2nd SCI in case where the information is transmitted along with data in the PSSCH region and a method for indicating it are described. The corresponding case is illustrated in (c) (2130) of FIG. 21. In this embodiment, when providing inter-UE coordination information through the 2nd SCI, in case where the 2nd SCI is transmitted along with data in the PSSCH region, a method of using the existing 2nd SCI format, SCI format 2-A or SCI format 2-B, as shown in Tables 2 and 3, or/and a new 2nd SCI format may be considered.

First, using the existing 2nd SCI format, SCI format 2-A or SCI format 2-B, the UE may provide the inter-UE coordination information to another UE. In this case, it is assumed that the 2nd SCI is transmitted along with data in the PSSCH region. The field providing the inter-UE coordination information may include one or more fields depending on what the inter-UE coordination information is indicated, and the number of bits included may vary depending on the characteristics of the inter-UE coordination information provided. For more details, refer to the 2-2 embodiment. Since the 2nd SCI is transmitted along with data in the PSSCH region, control information for data transmission may be indicated through SCI format 2-A or SCI format 2-B. Therefore, in case of using the existing 2nd SCI format, SCI format 2-A or SCI format 2-B, the UE providing the inter-UE coordination information adds the field indicating the inter-UE coordination information to the existing 2nd SCI format and transmits it, and the UE receiving the existing 2nd SCI format must be able to know whether the corresponding field has been transmitted.

Specifically, when one or more of the following conditions are satisfied, the UE providing the inter-UE coordination information will be able to transmit the corresponding field by adding the field to the existing 2nd SCI format. In addition, when one or more of the following conditions are satisfied, the UE receiving the inter-UE coordination information may determine that the corresponding field has been added to the existing 2nd SCI format and receive the corresponding information.

* When inter-UE coordination is enabled via a higher layer,
** When a UE has a capability to request or provide inter-UE coordination information,

In the above, the fact that the inter-UE coordination is enabled via the higher layer may mean that the inter-UE coordination is enabled through (pre-)configuration. The corresponding (pre-)configuration may also be configured to the resource pool. In this case, when the inter-UE coordination is enabled to the resource pool, the UE operating in the corresponding pool may transmit and receive the 2nd SCI by adding the inter-UE coordination information to the existing 2nd SCI format. In contrast, enabling the inter-UE coordination via the higher layer may mean that the inter-UE coordination is enabled through PC5-RRC or sidelink MAC-CE. This case may be applied in a sidelink unicast environment, and when the inter-UE coordination is enabled through this, the UE may transmit and receive the 2nd SCI by adding the inter-UE coordination information to the existing 2nd SCI format.

Next, using a new 2nd SCI format, a UE may provide the inter-UE coordination information to another UE. In this case, it is assumed that 2nd SCI is transmitted along with data in the PSSCH region. The UE providing the inter-UE coordination information may indicate that a new 2nd SCI format is used by including the 2nd stage SCI format field shown in Table 6 below in the 1st SCI shown in Table 1, and the UE that has received the 1st SCI may identify from the 1st SCI that the new 2nd SCI format is used. SCI format 2-C, included as '01' in Table 6, is an example of a field used to transmit data together and provide the inter-UE coordination information, which may also be indicated through '11', and it may be defined with a name other than SCI format 2-C.

[Table 6]

| Value of 2nd-stage SCI format field | 2nd-stage SCI format |
|---|---|
| 00 | SCI format 2-A |
| 01 | SCI format 2-B |
| 10 | SCI format 2-C (with data, coordination information) |
| 11 | Reserved |

Additionally, when providing the inter-UE coordination information through a new 2nd SCI format as shown in Table 6, in case where the 2nd SCI is transmitted along with data in the PSSCH region, the field for providing the inter-UE coordination information may be included in a new 2nd SCI format. Further, as presented in Tables 2 and 3, the fields included in the existing 2nd SCI format, SCI format 2-A or SCI format 2-B can also be included in the new 2nd SCI format. The field providing the inter-UE coordination information may include one or more fields depending on what type of inter-UE coordination information is indicated, and the number of bits included may vary depending on the characteristics of the provided inter-UE coordination information. For more details, refer to the 2-2 embodiment. However, in the disclosure, the information that can be included in the new 2nd SCI format is not limited thereto.

<2-6 Embodiment>

In the 2-6 embodiment, when a UE provides inter-UE coordination information to another UE using 2nd SCI, information included in the 2nd SCI in case where the 2nd SCI is not transmitted along with data in the PSSCH region and a method for indicating it are described. The corresponding case is illustrated in (d) (2140) of FIG. 21. In this embodiment, when providing inter-UE coordination information through the 2nd SCI, in case where the 2nd SCI is not transmitted along with data in the PSSCH region, a method of using a new 2nd SCI format may be considered.

Since the 2nd SCI is not transmitted along with data in the PSSCH region, there is no need to use the existing SCI format 2-A or SCI format 2-B, which includes control information for data transmission. The UE providing the inter-UE coordination information adds the inter-UE coordination information field to a new 2nd SCI format and transmits it, and the UE receiving the new 2nd SCI format may identify the inter-UE coordination information by receiving the new 2nd SCI format. The UE providing the inter-UE coordination information may indicate that a new 2nd SCI format is used by including the 2nd stage SCI format field in Table 7 below in the 1st SCI shown in Table 1, and the UE that has received the 1st SCI may identify from the 1st SCI that the new 2nd SCI format is used. The SCI format 2-C, included as '01' in Table 7, is an example of a field used to provide the inter-UE coordination information without data being transmitted, which may also be indicated through '11', and it may be defined with a name other than SCI format 2-C.

[Table 7]

| Value of 2nd-stage SCI format field | 2nd-stage SCI format |
|---|---|
| 00 | SCI format 2-A |
| 01 | SCI format 2-B |
| 10 | SCI format 2-C (without data, coordination information) |
| 11 | Reserved |

Alternatively, it is possible to indicate that the new 2nd SCI format is used using a field other than the 2nd stage SCI format field among the fields included in the 1st SCI of Table 1. For example, since data is not transmitted, it is also possible to indicate that the new 2nd SCI format is used using the MCS field included in the 1st SCI. In this case, in case where the MCS field included in the 1st SCI indicates a reserved value on the MCS table, it may be interpreted as indicating that the new 2nd SCI format is used. Alternatively, the MCS field included in the 1st SCI may indicate whether the new 2nd SCI format is used, instead of indicating the MCS defined on the existing MCS table. Whether the MCS field included in the 1st SCI indicates an MCS for transmitting data defined in the MCS table or that the new 2nd SCI format is used may be determined according to predefined conditions or configured through higher layer signaling. In case where the MCS field included in the 1st SCI is used to indicate whether the new 2nd SCI format is used, whether the specific MCS field value indicates that the new 2nd SCI format is used or the existing 2nd SCI format is used may be predefined or configured through higher layer signaling.

Alternatively, the 2nd SCI format indicated by each value of the 2nd stage SCI format field may be configured in advance. In this case, the 2nd SCI format indicated by each value of the 2nd stage SCI format field may be (pre-) configured. Alternatively, it can be configured through Uu-RRC, PC5-RRC signaling, sidelink MAC CE, etc. In this case, the UEs that provide and receive the inter-UE coordination information can receive the same configuration information for each value of the 2nd stage SCI format field. For example, in case where the 2nd stage SCI format field is '00' through higher layer signaling, the UE configured to indicate SCI format 2-C transmits the 1st SCI by configuring the 2nd stage SCI format field included in the 1st SCI to '00', and then, may transmit the 2nd SCI according to SCI format 2-C (without data) on the PSSCH.

Additionally, when providing the inter-UE coordination information through the new 2nd SCI format as shown in FIG. 7, in case where the 2nd SCI is not transmitted along with data in the PSSCH region, the inter-UE coordination information field may be included in the new 2nd SCI format. Further, the following information may be additionally included.

* Zone ID
* Communication range requirement

In case where the above information is additionally included and transmitted, the UE that has received the corresponding 2nd SCI measures the distance to the transmission UE using the included Zone ID field, and if the corresponding distance exceeds the value corresponding to the Communication range requirement field, the inter-UE coordination information may not be used. This is a method that determines that the distance between the transmission UE and the reception UE is long and that using the corresponding information is invalid. The amount of information used in the corresponding field may be the same as the value shown in Table 3, but the disclosure is not limited to this value. The field providing the inter-UE coordination information may include one or more fields depending on what type of inter-UE coordination information is indicated, and the number of bits included may vary depending on the characteristics of the provided inter-UE coordination information. For more details, refer to the 2-2 embodiment. Also, the information that can be included in the new 2nd SCI format in the disclosure is not limited thereto.

Additionally, since the new 2nd SCI format is not for scheduling data transmission, the field for data scheduling on the PSSCH in Table 2 or 3 (for example, redundancy version, new data indicator, etc.) may be configured to a predetermined value (for example, '0', '00') or may not be included in the new 2nd SCI format. Alternatively, at least one piece of information among inter-UE coordination information, zone ID, and communication range requirement may be indicated through the field for data scheduling (instead of adding the field to the new 2nd SCI format).

<2-7 Embodiment>

In the 2-7 embodiment, when a UE requests inter-UE coordination information from another UE using 2nd SCI, methods are proposed for a UE to indicate whether the 2nd SCI is transmitted along with the data or whether the 2nd SCI is not transmitted along with the data. In addition, when a UE provides inter-UE coordination information to another UE using 2nd SCI, methods are proposed for a UE to indicate whether information is transmitted along with data or whether information is not transmitted along with data. In this embodiment, in case of requesting or providing inter-UE coordination information through the 2nd SCI, a method for indicating whether the 2nd SCI is transmitted along with data in the PSSCH region using the 2nd stage SCI format field of the 1st SCI, a method for indicating using the reserved bit of the 1st SCI and a method for indicating using other fields included in the 1st SCI are proposed.

First, in case of requesting or providing inter-UE coordination information through the 2nd SCI, a method for indicating whether the 2nd SCI is transmitted along with data in the PSSCH region using the 2nd stage SCI format field of the 1st SCI is described, as a first method. The UE requesting or providing inter-UE coordination information adds the inter-UE coordination information request field to a new 2nd SCI format and transmits it, and the UE receiving the new 2nd SCI format may identify the inter-UE coordination information request according to the new 2nd SCI format. The UE providing the inter-UE coordination information may indicate that the new 2nd SCI format is used by including the 2nd stage SCI format field in Table 8 below in the 1st SCI shown in Table 1, and the UE that has received the 1st SCI may identify that the new 2nd SCI format is used from the 1st SCI.

The SCI format 2-C, included as '01' in Table 8, is an example of a field used to request or provide the inter-UE coordination information without data being transmitted (refer to a case where data is not transmitted on PSSCH and the inter-UE coordination information is requested in Table 5, or a case where data is not transmitted on PSSCH and the inter-UE coordination information is provided in Table 7), and the SCI format 2-D, included as '11' in Table 8, is an example of a field used to request or provide the inter-UE coordination information with data being transmitted (refer to a case where data is transmitted on PSSCH and the inter-UE coordination information is requested in Table 4, or a case where data is transmitted on PSSCH and the inter-UE coordination information is provided in Table 6). The order of the corresponding field ' 10' and '11' may be changed to be indexed.

[Table 8]

| Value of 2nd-stage SCI format field | 2nd-stage SCI format |
|---|---|
| 00 | SCI format 2-A |
| 01 | SCI format 2-B |
| 10 | SCI format 2-C (without data, request for coordination information or coordination information) |
| 11 | SCI format 2-D (with data, request for coordination information or coordination information) |

In addition, when providing the inter-UE coordination information through a new 2nd SCI format, such as SCI format 2-D in Table 8, in case where the 2nd SCI is transmitted along with data in the PSSCH region, the field for providing the inter-UE coordination information may be included in a new 2nd SCI field. Further, as shown in Tables 2 and 3, the field included in the existing 2nd SCI format, SCI format 2-A or SCI format 2-B, may also be included in the new format. In addition, the field for requesting and providing the inter-UE coordination information in SCI format 2-C and SCI format 2-D may include one or more fields depending on what inter-UE coordination information is indicated and the number of bits included may vary depending on the characteristics of the provided inter-UE coordination information. For more details, refer to the 2-2 embodiment. However, in the disclosure, the information that can be included in the new 2nd SCI format is not limited thereto.

In addition, the meaning of each value of the 2nd stage SCI format field (whether 2nd SCI format is transmitted and/or 2nd SCI is transmitted along with data) may be configured in advance. In this case, the meaning of each value of the 2nd stage SCI format field may be (pre-)configurated. Alternatively, it may be configured through Uu-RRC, PC5-RRC signaling, sidelink MAC CE, etc. In this case, the UEs that request and provide the inter-UE coordination information and receive the corresponding information may receive the same configuration information for each value of the 2nd stage SCI format field. For example, a UE that is configured through higher layer signaling to indicate that SCI format 2-C is transmitted without data in case where the 2nd stage SCI format field is '00' configures the 2nd stage SCI format field included in the 1st SCI to '00', and transmits the 1st SCI, and then, may transmit the 2nd SCI according to SCI format 2-C without data on PSSCH.

As a second method, in case of requesting or providing inter-UE coordination information through the 2nd SCI, a method for indicating whether the 2nd SCI is transmitted along with data in the PSSCH region using reserved bit of the 1st SCI is proposed. Using 1 bit of the reserved bit, it may be indicated whether the 2nd SCI is transmitted along with data in the PSSCH region. In case where the corresponding bit indicates that the 2nd SCI is transmitted along with data in the PSSCH region, the UE may request or provide the inter-UE coordination information to another UE using the existing 2nd SCI format, SCI format 2-A or SCI format 2-B. The field for requesting and providing the inter-UE coordination information may include one or more fields depending on what inter-UE coordination information is indicated and the number of bits included may vary depending on the characteristics of the provided inter-UE coordination information. For more details, refer to the 2-2 embodiment. Since the 2nd SCI is transmitted along with data in the PSSCH region, control information for data transmission may be indicated through SCI format 2-A or SCI format 2-B.

Therefore, in case of using the existing 2nd SCI format, SCI format 2-A or SCI format 2-B, the UE requesting and providing the inter-UE coordination information adds the inter-UE coordination information request or inter-UE coordination information field to the existing 2nd SCI format, and transmits the existing 2nd SCI format. The UE receiving the existing 2nd SCI format must be able to know whether the corresponding field has been transmitted. Specifically, when one or more of the following conditions are satisfied, the UE requesting and providing the inter-UE coordination information may add the corresponding field to the existing 2nd SCI format and transmit the existing 2nd SCI format. In addition, when one or more of the following conditions are satisfied, the UE receiving the inter-UE coordination information request or the inter-UE coordination information may determine that the corresponding field has been added to the existing 2nd SCI format and may receive the corresponding information.

* When inter-UE coordination is enabled via a higher layer,

** When a UE has a capability to request or provide inter-UE coordination information,

In the above, the fact that the inter-UE coordination is enabled via the higher layer may mean that the inter-UE coordination is enabled through (pre-)configuration. The corresponding (pre-)configuration may also be configured to the resource pool. In this case, when the inter-UE coordination is enabled to the resource pool, the UE operating in the corresponding pool may add the inter-UE coordination information request or inter-UE coordination information to the existing 2nd SCI format and transmit and receive it. In contrast, enabling the inter-UE coordination via the higher layer may mean that the inter-UE coordination is enabled through PC5-RRC or sidelink MAC-CE. This case may be applied in a sidelink unicast environment, and when the inter-UE coordination is enabled through this, the UE may add the inter-UE coordination information request or inter-UE coordination information to the existing 2nd SCI format, and transmit and receive it.

On the other hand, in the second method, in case where the reserved bit indicates that the 2nd SCI is not transmitted along with data in the PSSCH region, the UE requesting and providing the inter-UE coordination information includes the inter-UE coordination information request or inter-UE coordination information field in the new 2nd SCI format and transmit the new 2nd SCI format, and the UE receiving the new 2nd SCI format may identify the inter-UE coordination information request or inter-UE coordination information according to the new 2nd SCI format. The UE that provides the inter-UE coordination information may indicate that the new 2nd SCI format is used by including a 2nd stage SCI format field in Table 9 below in the 1st SCI shown in Table 1, and the UE that has received the 1st SCI may interpret from the 1st SCI that the new 2nd SCI format is used. The SCI format 2-C, included as '01' in Table 9, is an example of a field used to request and provide the inter-UE coordination information without data being transmitted, which may also be indicated through '11' and may be defined by a name other than SCI format 2-C. Compared to Table 8 in the first method, in case where the second method is used, there is an advantage that '11' can be left in the 2nd stage SCI format field for use of other SCI formats, as shown in Table 9. Alternatively, the 2nd SCI format for requesting the inter-UE coordination information and the 2nd SCI format for providing the inter-UE coordination information may be defined as different SCI formats. In this case, different values of the 2nd-stage SCI format field may indicate that the different SCI formats are used.

[Table 9]

| Value of 2nd-stage SCI format field | 2nd-stage SCI format |
| --- | --- |
| 00 | SCI format 2-A |
| 01 | SCI format 2-B |
| 10 | SCI format 2-C (request for coordination information or coordination information) |
| 11 | Reserved |

In addition, as shown in Table 9, when requesting and providing the inter-UE coordination information through the new 2nd SCI format, in case where the 2nd SCI is not transmitted along with data in the PSSCH region, the new 2nd SCI format may include an inter-UE coordination information field. Rather, the following information may be additionally included.

\* Zone ID
\* Communication range requirement

In case where the above information is additionally included and transmitted, the UE that has received the corresponding 2nd SCI measures the distance to the transmission UE using the included Zone ID field, and if the distance exceeds the value corresponding to the Communication range requirement field, the inter-UE coordination information may be provided or may not be used. This is a method that determines that the distance between the transmission UE and the reception UE is long and that providing or using the corresponding information is invalid. The amount of information used in the field may be the same as the value shown in Table 3, but the disclosure is not limited to this value. The field providing the inter-UE coordination information may include one or more fields depending on what type of inter-UE coordination information is indicated, and the number of bits included may vary depending on the characteristics of the provided inter-UE coordination information. For more details, refer to the 2-2 embodiment. Additionally, in the disclosure, the information that can be included in the new 2nd SCI format is not limited to this.

As a third method, in case of requesting or providing the inter-UE coordination information through the 2nd SCI, a method is proposed to indicate whether the 2nd SCI is transmitted along with data in the PSSCH region using a field included in the 1st SCI. For example, whether the 2nd SCI is transmitted along with data in the PSSCH region may be indicated using the reserved value of the MCS field, but the disclosure is not limited thereto. In case where the corresponding value of the MCS field indicates that the 2nd SCI is transmitted along with data in the PSSCH region, the UE may request or provide the inter-UE coordination information to another UE using the existing 2nd SCI format, SCI format 2-A or SCI format 2-B. For more detailed information, refer to the second method.

In case where the corresponding value of the MCS field indicates that the 2nd SCI is not transmitted along with data in the PSSCH region, the UE requesting and providing the inter-UE coordination information includes the inter-UE coordination information request or the inter-UE coordination information field in a new 2nd SCI format and transmits the new 2nd SCI format. The UE receiving the new 2nd SCI format may identify the inter-UE coordination information request or inter-UE coordination information according to the new 2nd SCI format. For more detailed information, refer to the second method.

<2-8 Embodiment>

A 2-8 embodiment proposes a method for a UE to indicate a case where a positioning reference signal (PRS) is transmitted in the PSSCH region and a case where the PRS is not transmitted in the PSSCH region. In order to support positioning in the sidelink, transmission of PRS may be considered in a specific time-frequency domain where PSSCH is transmitted. For example, a specific symbol in the PSSCH region may be defined as a symbol through which PRS is transmitted. In this way, in case where the transmission of PRS in the PSSCH region is newly considered, for co-existence between a UE that supports PRS transmission and reception and an existing UE that does not support PRS transmission and reception, it will be necessary to separately indicate whether the PRS is transmitted in the PSSCH region to the UE receiving such indication. In a first method, whether the PRS is transmitted or not transmitted in the PSSCH region may be indicated using the reserved bit of the 1st SCI transmitted through the PSCCH or using other existing fields included in the 1st SCI. As another method, it may indicate by including the information on whether the PRS is transmitted or not transmitted in the PSSCH region in the 2nd SCI transmitted in the PSSCH region. In the resource pool, there may be a UE that support PRS reception and an existing UE that does not support PRS reception. The existing UE may receive an indication that the PRS is not transmitted in the PSSCH region through 1st SCI or 2nd SCI, and may receive the PSSCH. On the other hand, in case where the PRS transmission is needed, the UE capable of receiving the PRS may receive an indication that the PRS is transmitted in the PSSCH region through the 1st SCI or 2nd SCI, and may receive the PSSCH and PRS. However, in case where the UE is capable of receiving the PRS but does not need to transmit the PRS, the corresponding UE may receive an indication that the PRS is not transmitted in the PSSCH region through the 1st SCI or 2nd SCI and may receive the PSSCH.

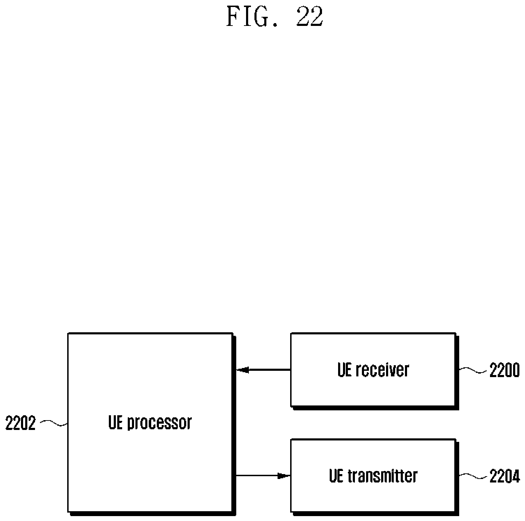

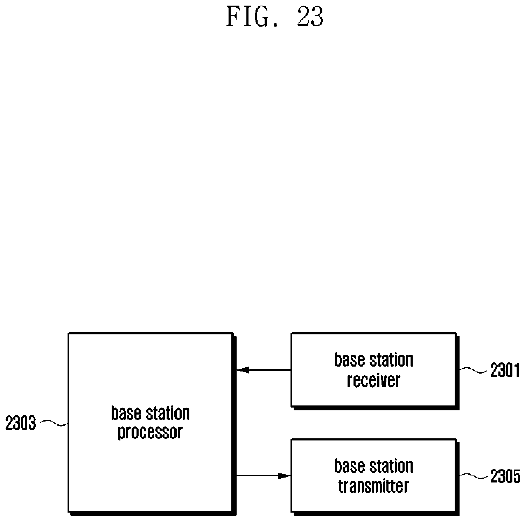

In order to perform the above embodiments of the disclosure, a transmitter, receiver, and processor of a UE and base station are illustrated in FIGS. 22 and 23, respectively. In the above embodiments, a method for the UE to transmit control information through the 2nd SCI in the side link is illustrated, and to perform this, the receiver, processor, and transmitter of the base station and UE must operate according to the embodiment of the disclosure, respectively.

Particularly, FIG. 22 is a block diagram illustrating an internal structure of a UE according to an embodiment of the disclosure. As illustrated in FIG. 9, the UE of the disclosure may include a UE receiver 2200, a UE transmitter 2204, and a UE processor 2202. The UE receiver 2200 and the UE transmitter 2204 may be collectively referred to as a transceiver in the embodiment of the disclosure. The transceiver may transmit/receive a signal to/from the base station. The signal may include control information and data. To this end, the transceiver may include an RF transmitter for up-converting and amplifying a frequency of a transmitted signal, an RF receiver for low-noise amplifying a received signal and down-converting a frequency, and the like. In addition, the transceiver may receive a signal through a wireless channel and output the signal to the UE processor 2202, and transmit the signal output from the UE processor 2202 through the wireless channel. The UE processor 2202 may control a series of processes so that the UE may operate according to the above-described embodiment of the disclosure.

FIG. 23 is a block diagram illustrating an internal structure of a base station according to an embodiment of the disclosure. As illustrated in FIG. 23, the base station of the disclosure may include a base station receiver 2301, a base station transmitter 2305, and a base station processor 2303. The base station receiver 2301 and the base station transmitter 2305 may be collectively referred to as a transceiver in the embodiment of the disclosure. The transceiver may transmit/receive a signal to/from the UE. The signal may include control information and data. To this end, the transceiver may include an RF transmitter for up-converting and amplifying a frequency of a transmitted signal, an RF receiver for low-noise amplifying a received signal and down-converting a frequency, and the like. In addition, the transceiver may receive a signal through a wireless channel and output the signal to the base station processor 2303, and transmit the signal output from the base station processor 2303 through the wireless channel. The base station processor 2303 may control a series of processes so that the base station may operate according to the above-described embodiment of the disclosure.

Meanwhile, the embodiments of the disclosure disclosed in the present specification and the drawings have been provided only as specific examples in order to easily describe the technical contents of the disclosure and assist in understanding the disclosure and do not limit the scope of the disclosure. That is, it is obvious to those skilled in the art to which the disclosure pertains that various modifications may be made without departing from the scope of the disclosure. Further, the respective embodiments may be combined and operated as needed. For example, portions of the embodiments of the disclosure may be combined with each other to operate the base station and the terminal.

## Claims

1.  A method of a first terminal of a communication system, comprising:

    identifying whether a 2nd SCI is transmitted along with data in a physical sidelink shared channel (PSSCH) region;
    determining a number of coded modulation symbols for the 2nd SCI based on whether the 2nd SCI is transmitted along with the data;
    mapping the 2nd SCI to the PSSCH region based on the number of coded modulation symbols; and
    transmitting the 2nd SCI mapped to the PSSCH region to a second terminal,
    wherein, in case where the 2nd SCI is not transmitted along with the data, the number of coded modulation symbols for the 2nd SCI is determined such that the 2nd SCI is mapped to all PSSCH frequency resources in a symbol in which the 2nd SCI is transmitted.

**2.** The method of claim 1, wherein in case where the 2nd SCI is not transmitted along with the data, the number of coded modulation symbols for the 2nd SCI is determined based on a parameter defined such that the 2nd SCI is mapped to the all PSSCH frequency resources in a last symbol in which the 2nd SCI is transmitted.

**3.** The method of claim 1, wherein in case where the 2nd SCI is not transmitted along with the data, the number of coded modulation symbols for the 2nd SCI is determined such that the 2nd SCI is mapped from a first PSSCH demodulation reference signal (DMRS) symbol of the PSSCH region to a last symbol of the PSSCH, or such that the 2nd SCI is mapped from the first PSSCH DMRS symbol to a last PSSCH DMRS symbol in the PSSCH region, or such that the 2nd SCI is mapped to all the PSSCH regions.

**4.** The method of claim 1, wherein the 2nd SCI transmitted in the PSSCH region corresponds to an SCI format for requesting inter-UE coordination or providing the inter-UE coordination information.

**5.** The method of claim 1, further comprising transmitting a 1st SCI to the second terminal in the physical sidelink control channel (PSCCH) region,
wherein the 1st SCI includes an information field to indicate whether the 2nd SCI is transmitted along with the data in the PSSCH region.

**6.** A method of a second terminal of a communication system, comprising:

identifying whether a 2nd SCI is transmitted along with data in a physical sidelink shared channel (PSSCH) region; and
receiving the 2nd SCI mapped to the PSSCH region from a first terminal based on a number of coded modulation symbols that is determined depending on whether the 2nd SCI is transmitted along with the data,
wherein, in case where the 2nd SCI is not transmitted along with the data, the number of coded modulation symbols for the 2nd SCI is determined such that the 2nd SCI is mapped to all PSSCH frequency resources in a symbol in which the 2nd SCI is transmitted.

**7.** The method of claim 6, wherein in case where the 2nd SCI is not transmitted along with the data, the number of coded modulation symbols for the 2nd SCI is determined based on a parameter defined such that the 2nd SCI is mapped to the all PSSCH frequency resources in a last symbol in which the 2nd SCI is transmitted.

**8.** The method of claim 6, wherein in case where the 2nd SCI is not transmitted along with the data, the number of coded modulation symbols for the 2nd SCI is determined such that the 2nd SCI is mapped from a first PSSCH demodulation reference signal (DMRS) symbol of the PSSCH region to a last symbol of the PSSCH, or such that the 2nd SCI is mapped from the first PSSCH DMRS symbol to a last PSSCH DMRS symbol in the PSSCH region, or such that the 2nd SCI is mapped to all the PSSCH regions.

**9.** The method of claim 6, wherein the 2nd SCI transmitted in the PSSCH region corresponds to an SCI format for requesting inter-UE coordination or providing the inter-UE coordination information.

**10.** The method of claim 6, further comprising receiving a 1st SCI from the first terminal in the physical sidelink control channel (PSCCH) region,
wherein the 1st SCI includes an information field to indicate whether the 2nd SCI is transmitted along with the data in the PSSCH region.

**11.** A first terminal of a communication system, comprising:

a transceiver; and
a controller constituted to:

identify whether a 2nd SCI is transmitted along with data in a physical sidelink shared channel (PSSCH) region;
determine a number of coded modulation symbols for the 2nd SCI based on whether the 2nd SCI is transmitted along with the data;
map the 2nd SCI to the PSSCH region based on the number of coded modulation symbols; and
transmit the 2nd SCI mapped to the PSSCH region to a second terminal,
wherein, in case where the 2nd SCI is not transmitted along with the data, the number of coded modulation symbols for the 2nd SCI is determined such that the 2nd SCI is mapped to all PSSCH frequency resources in a symbol in which the 2nd SCI is transmitted.

12. The first terminal of claim 11, wherein in case where the 2nd SCI is not transmitted along with the data, the number of coded modulation symbols for the 2nd SCI is determined based on a parameter defined such that the 2nd SCI is mapped to the all PSSCH frequency resources in a last symbol in which the 2nd SCI is transmitted.

13. The first terminal of claim 11, wherein in case where the 2nd SCI is not transmitted along with the data, the number of coded modulation symbols for the 2nd SCI is determined such that the 2nd SCI is mapped from a first PSSCH demodulation reference signal (DMRS) symbol of the PSSCH region to a last symbol of the PSSCH, or such that the 2nd SCI is mapped from the first PSSCH DMRS symbol to a last PSSCH DMRS symbol in the PSSCH region, or such that the 2nd SCI is mapped to all the PSSCH regions.

14. The first terminal of claim 11, wherein the 2nd SCI transmitted in the PSSCH region corresponds to an SCI format for requesting inter-UE coordination or providing the inter-UE coordination information.

15. A second terminal of a communication system, comprising:

a transceiver; and
a controller constituted to identify whether a 2nd SCI is transmitted along with data in a physical sidelink shared channel (PSSCH) region and receive the 2nd SCI mapped to the PSSCH region from a first terminal based on a number of coded modulation symbols that is determined depending on whether the 2nd SCI is transmitted along with the data,
wherein, in case where the 2nd SCI is not transmitted along with the data, the number of coded modulation symbols for the 2nd SCI is determined such that the 2nd SCI is mapped to all PSSCH frequency resources in a symbol in which the 2nd SCI is transmitted.

# FIG. 1

(a) In-coverage scenario

(b) Partial coverage scenario

(c) Out-of-coverage scenario

(d) Inter-cell V2X communication scenario

# FIG. 2

(a) Unicast V2X communication

UE-1
201

UE-2
202

(b) Groupcast V2X communication

Group A

UE-2
212

UE-1
211

UE-3
213

Group B

UE-5
215

UE-4
214

UE-6
216

UE-7
217

# FIG. 3

EndRB-Subchannel

301

303

$t_0^{SL}$ $t_1^{SL}$ $t_2^{SL}$ $t_3^{SL}$ $t_4^{SL}$ $t_5^{SL}$ $t_6^{SL}$ $t_7^{SL}$ $t_8^{SL}$ $t_9^{SL}$ $t_{10}^{SL}$ $t_{11}^{SL}$ $t_{12}^{SL}$ $t_{13}^{SL}$ $t_{14}^{SL}$ $t_{15}^{SL}$ $t_{16}^{SL}$ $t_{17}^{SL}$

Slot

302

Logical mapping

PRB

$t_0^{SL}$ $t_1^{SL}$ $t_2^{SL}$ $t_3^{SL}$ $t_4^{SL}$ $t_5^{SL}$ $t_6^{SL}$ $t_7^{SL}$ $t_8^{SL}$

sizeSubchannel

startRB-Subchannel

# FIG. 4

# FIG. 5

FIG. 6

# FIG. 7

(a)

RX UE (UE-A : Coordinating UE)

701

Coordination
information    Data

TX UE (UE-B)

(b)

UE-A : Coordinating UE

701

Coordination
information

RX UE

703

Data

702

TX UE (UE-B)

# FIG. 8

(a)

801  802

UE-A    UE-B

803

Coordinating information
request with data

(b)

801  802

UE-A    UE-B

804

Coordinating information
request without data

(c)

801  802

UE-A    UE-B

805

Coordinating information
with data

(d)

801  802

UE-A    UE-B

806

Coordinating information
without data

FIG. 9

SL symbol index   0   1   2   3   4   5   6   7   8   9   10   11   12   13

# FIG. 10

FIG. 11

FIG. 12

1202 ~ UE processor

UE receiver ~ 1200

UE transmitter ~ 1204

FIG. 13

# FIG. 14

(a) In-coverage
scenario
(1400)

gNB/eNB/RSU

Downlink (DL)          Downlink (DL)

Uplink (UL)
Sidelink (SL)
Sidelink (SL)
UE-1                    UE-2

(b) Partial coverage
scenario
(1410)

gNB/eNB/RSU

Downlink (DL)

Uplink (UL)

Sidelink (SL)
Sidelink (SL)
UE-1                    UE-2

(c) Out-of-coverage
scenario
(1420)

Sidelink (SL)

Sidelink (SL)
UE-1                    UE-2

(d) Inter-cell V2X
communitation
scenario
(1430)

gNB/eNB/RSU                     gNB/eNB/RSU

Downlink (DL)          Downlink (DL)

Uplink (UL)                     Uplink (UL)

Sidelink (SL)
Sidelink (SL)
UE-1                    UE-2

# FIG. 15

(a) Unicast V2X communication
(1500)

UE-1 ←——— Sidelink (SL) ———→ UE-2

1501 UE-1        UE-2 1502

(b) Groupcast V15X communication
(1510)

Group A

UE-1 1511
1512 UE-15
1513 UE-3

Group B

UE-4 1514
1515 UE-5
1516 UE-6
1517 UE-7

# FIG. 16

# FIG. 17

# FIG. 18

# FIG. 19A

(a-1) ~1920

1906

SL symbol index  0 1 2 3 4 5 6 7 8 9 10 11 12 13

1908 (a-2) ~1930

SL symbol index  0 1 2 3 4 5 6 7 8 9 10 11 12 13

(b-1) ~1940

1907

SL symbol index  0 1 2 3 4 5 6 7 8 9 10 11 12 13

1909 (b-2) ~1950

0 1 2 3 4 5 6 7 8 9 10 11 12 13

1901 ~ AGC symbol

1902 ~ 1st SCI (PSCCH)

1903 ~ PSCCH

1904 ~ 2nd SCI

1905 ~ Symbol(s) not containing PSSCH (e.g., gap symbol, PSFCH, DL/UL)

EP 4 373 189 A1

FIG. 19B

1910

YES ← 2nd SCI is transmitted without data → NO

1911
SCI mapping method 1

1912
SCI mapping method 2

# FIG. 20A

RX UE (UE-A : Coordinating UE)

2001

Coordination information — Data

2002

TX UE (UE-B)

FIG. 20B

RX UE

2003

UE-A : Coordinating UE

2001

Coordination
information

Data

2002

TX UE (UE-B)

# FIG. 21

2110

[a]

2101          2102
UE-A          UE-B
        2103

Coordinating information
request with data

2120

[b]

2101          2102
UE-A          UE-B
        2104

Coordinating information
request without data

2130

[c]

2101          2102
UE-A          UE-B
        2105

Coordinating information
with data

2140

[d]

2101          2102
UE-A          UE-B
        2106

Coordinating information
without data

FIG. 22

```
                          ┌──────────────┐
2202 ~  ┌──────────────┐  │  UE receiver │ ~ 2200
        │              │◄─┴──────────────┘
        │ UE processor │
        │              │  ┌──────────────┐
        └──────────────┘─►│UE transmitter│ ~ 2204
                          └──────────────┘
```

FIG. 23

**INTERNATIONAL SEARCH REPORT**

| International application No. |
| --- |
| **PCT/KR2022/012127** |

| A. | CLASSIFICATION OF SUBJECT MATTER |
| --- | --- |

**H04W 72/04**(2009.01)i; **H04W 72/12**(2009.01)i; **H04W 4/40**(2018.01)i; **H04W 92/18**(2009.01)i; **H04W 72/02**(2009.01)i

According to International Patent Classification (IPC) or to both national classification and IPC

| B. | FIELDS SEARCHED |
| --- | --- |

Minimum documentation searched (classification system followed by classification symbols)

H04W 72/04(2009.01); H04L 1/00(2006.01); H04L 5/00(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 2nd SCI, without data, number of coded modulation symbols, all PSSCH frequency resource, mapping

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| A | WO 2021-040370 A1 (LG ELECTRONICS INC.) 04 March 2021 (2021-03-04)<br>See paragraphs [0151]-[0174]; and figures 12-14. | 1-15 |
| A | WO 2021-066451 A1 (LG ELECTRONICS INC.) 08 April 2021 (2021-04-08)<br>See paragraphs [0138]-[0168]; and figures 11-12. | 1-15 |
| A | FRAUNHOFER HHI et al. Resource Allocation Enhancements for Mode 2. R1-2107023, 3GPP TSG RAN WG1 Meeting #106-e. 06 August 2021.<br>See sections 3-3.3. | 1-15 |
| A | QUALCOMM INCORPORATED. Reliability and Latency Enhancements for Mode 2. R1-2107368, 3GPP TSG RAN WG1 Meeting #106-e. 07 August 2021.<br>See section 3.3. | 1-15 |
| A | HUAWEI et al. Inter-UE coordination in sidelink resource allocation. R1-2106478, 3GPP TSG RAN WG1 Meeting #106-e. 07 August 2021.<br>See sections 3.4-3.4.1.2. | 1-15 |

☐ Further documents are listed in the continuation of Box C.  ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **10 November 2022** | **14 November 2022** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2022/012127**

| Patent document cited in search report | | | Publication date (day/month/year) | Patent family member(s) | | | Publication date (day/month/year) |
|---|---|---|---|---|---|---|---|
| WO | 2021-040370 | A1 | 04 March 2021 | KR | 10-2022-0052318 | A | 27 April 2022 |
| WO | 2021-066451 | A1 | 08 April 2021 | CN | 114503499 | A | 13 May 2022 |
| | | | | EP | 4044469 | A1 | 17 August 2022 |
| | | | | KR | 10-2022-0079911 | A | 14 June 2022 |
| | | | | US | 2022-0232527 | A1 | 21 July 2022 |

Form PCT/ISA/210 (patent family annex) (July 2022)